# EUROPEAN PATENT APPLICATION

(11) **EP 4 597 213 A1**
(43) Date of publication of application: **06.08.2025**
(21) Application number: 23872644.2
(22) Date of filing: 29.09.2023
(51) Int. Cl.: G02F 1/155, G02F 1/15, G02F 1/161

(54) **ELECTROCHROMIC SHEET, LAMINATE, LENS FOR SPECTACLES, AND SPECTACLES**

(30) Priority: 30.09.2022 JP 2022158550; 30.09.2022 JP 2022158551; 30.09.2022 JP 2022158552; 30.09.2022 JP 2022158553; 30.09.2022 JP 2022158554; 30.09.2022 JP 2022158555; 30.09.2022 JP 2022158556
(71) Applicant: Sumitomo Bakelite Co.Ltd., Shinagawa-ku Tokyo 140-0002 (JP)
(72) Inventor: NISHINO, Satoshi, Tokyo 140-0002 (JP)
(74) Representative: Müller-Boré & Partner Patentanwälte PartG mbB
(86) International application number: PCT/JP2023/035803
(87) International publication number: WO 2024/071425

(57) **Abstract**

An electrochromic sheet includes a first substrate, a second substrate, an electrochromic element, and a sealing portion, in which the electrochromic element includes a first transparent electrode, a first auxiliary electrode, a second transparent electrode, a second auxiliary electrode, and an electrochromic layer, the first auxiliary electrode has a first lead-out portion protruding outward of the colored region, the second auxiliary electrode has a second lead-out portion protruding outward of the colored region, in a plan view, the first lead-out portion does not overlap the second transparent electrode and the second lead-out portion does not overlap the first transparent electrode, and in a cross section connecting the first lead-out portion and the colored region, a distance from an edge of the second transparent electrode on a side of the first lead-out portion to the colored region is 0.01 mm or more and 1.0 mm or less.

## Description

### TECHNICAL FIELD

The present invention relates to an electrochromic sheet, a laminate, a lens for spectacles, and spectacles.

Priority is claimed on Japanese Patent Application No. 2022-158550, filed September 30, 2022, Japanese Patent Application No. 2022-158551, filed September 30, 2022, Japanese Patent Application No. 2022-158552, filed September 30, 2022, Japanese Patent Application No. 2022-158553, filed September 30, 2022, Japanese Patent Application No. 2022-158554, filed September 30, 2022, Japanese Patent Application No. 2022-158555, filed September 30, 2022, and Japanese Patent Application No. 2022-158556, filed September 30, 2022, the content of which is incorporated herein by reference.

### BACKGROUND ART

Electrochromism is a phenomenon in which a redox reaction occurs by applying a voltage, and color is reversibly changed. As an element utilizing such a phenomenon, an electrochromic element in which the color is controlled by applying a voltage using a material exhibiting the electrochromism has been known.

The electrochromic element includes, for example, an electrochromic layer which develops color and fades color by the application of a voltage, and transparent electrodes. The transparent electrodes sandwich the electrochromic layers and are electrically connected to the electrochromic layer (for example, see Patent Document 1).

An electrochromic sheet including the electrochromic element is used, for example, as a material for eyewear such as sunglasses.

### Citation List

### Patent Document

Patent Document 1: Japanese Unexamined Patent Application Publication No. 2017-167317

### SUMMARY OF INVENTION

### Technical Problem

The transparent electrode used in the configuration of Patent Document 1 described above is formed of a material having high electrical conductivity and high visible light transmittance. As the material of the transparent electrode, an oxide such as indium tin oxide (ITO) has been known.

On the other hand, the above-described material has a high electrical resistance as compared with a metal material. Therefore, in the electrochromic layer sandwiched between the transparent electrodes made of ITO, a region where a current is easily transmitted and a region where a current is not easily transmitted are generated, and color unevenness is likely to occur as discoloration (color development and decolorization) of the electrochromic layer.

The present invention has been made in view of such circumstances, and an object of the present invention is to provide an electrochromic sheet capable of performing color development and decolorization without delay. Another object of the present invention is to provide a laminate including the electrochromic sheet, a lens for spectacles, and spectacles including the lens for spectacles.

### Solution to Problem

In order to solve the above-described problem, a configuration in which an auxiliary electrode which compensates for conductivity of the transparent electrode is used in combination has been studied. In general, the auxiliary electrode is formed of a metal material having a lower electrical resistance than the material of the transparent electrode. By adopting the configuration using the auxiliary electrode, it is possible to solve the problem of delay in discoloration described above.

On the other hand, the auxiliary electrode formed of the metal material does not have light transmittance in many cases. Therefore, in consideration of aesthetic appearance of the electrochromic sheet, it is desirable that the auxiliary electrode is inconspicuous.

In order to solve the above-described problem, an aspect of the present invention includes the following aspects.
[1] An electrochromic sheet including: a first substrate; a second substrate; an electrochromic element sandwiched between the first substrate and the second substrate; and a sealing portion sandwiched between the first substrate and the second substrate, partitioning a colored region set between the first substrate and the second substrate, in which the electrochromic element includes a first transparent electrode provided on a side of the first substrate, a first auxiliary electrode disposed around the colored region and electrically connected to the first transparent electrode, a second transparent electrode provided on a side of the second substrate, a second auxiliary electrode disposed around the colored region and electrically connected to the second transparent electrode, and an electrochromic layer sandwiched between the first transparent electrode and the second transparent electrode, disposed in the colored region, and developing color by application of a voltage, the first auxiliary electrode has a first lead-out portion protruding outward of the colored region, the second auxiliary electrode has a second lead-out portion protruding outward of the colored region, in a plan view, the first lead-out portion does not overlap the second transparent electrode and the second lead-out portion does not overlap the first transparent electrode, and in a cross section connecting the first lead-out portion and the colored region, a distance from an edge of the second transparent electrode on a side of the first lead-out portion to the colored region is 0.01 mm or more and 1.0 mm or less.
[2] The electrochromic sheet according to [1] or [2], in which, in a cross section connecting the second lead-out portion and the colored region, a distance from an edge of the first transparent electrode on a side of the second lead-out portion to the colored region is 0.01 mm or more and 1.0 mm or less.
[3] The electrochromic sheet according to [1] or [2], in which the electrochromic layer includes a first electrochromic layer laminated on the first transparent electrode, a second electrochromic layer laminated on the second transparent electrode, and an electrolyte layer filling a space between the first electrochromic layer and the second electrochromic layer, the first electrochromic layer contains a material exhibiting coloration by an oxidation reaction, and the second electrochromic layer contains a material exhibiting coloration by a reduction reaction.
[4] A laminate including: the electrochromic sheet according to any one of [1] to [3]; and a lens material having the electrochromic sheet laminated thereon.
[5] A lens for spectacles, including: an electrochromic part obtained by cutting the electrochromic sheet according to any one of [1] to [3] along an outer periphery of the first auxiliary electrode and the second auxiliary electrode; and a lens main body including the electrochromic part laminated thereon, in which the lens main body includes a protruding portion having the same shape in a plan view as the first lead-out portion and the second lead-out portion.
[6] Spectacles including: the lens for spectacles according to [5]; and a frame holding the lens for spectacles, in which the first lead-out portion and the second lead-out portion are electrically connected to the frame.
[7] An electrochromic sheet including: a first substrate; a second substrate; an electrochromic element sandwiched between the first substrate and the second substrate; and a sealing portion sandwiched between the first substrate and the second substrate, partitioning a colored region set between the first substrate and the second substrate, in which the electrochromic element includes a first transparent electrode provided on a side of the first substrate, a first auxiliary electrode disposed around the colored region and electrically connected to the first transparent electrode, a second transparent electrode provided on a side of the second substrate, a second auxiliary electrode disposed around the colored region and electrically connected to the second transparent electrode, and an electrochromic layer sandwiched between the first transparent electrode and the second transparent electrode, disposed in the colored region, and developing color by application of a voltage, the first auxiliary electrode has a strip-shaped first frame body surrounding a part of the electrochromic layer and a first lead-out portion protruding from the first frame body to an outside of the colored region, and a contour line of a connection portion between the first frame body and the first lead-out portion is a curve which is convex on a side of the colored region and has a curvature radius of 40 mm or more.
[8] The electrochromic sheet according to [7], in which a width of the first lead-out portion toward the outside from the first frame body is 10 mm or less.
[9] The electrochromic sheet according to [7] or [8], in which the second auxiliary electrode has a strip-shaped second frame body surrounding a part of the electrochromic layer and a second lead-out portion protruding from the second frame body to an outside of the colored region, and a contour line of a connection portion between the second frame body and the second lead-out portion is a curve which is convex on a side of the colored region and has a curvature radius of 40 mm or more.
[10] The electrochromic sheet according to [9], in which a width of the second lead-out portion toward the outside from the second frame body is 10 mm or less.
[11] The electrochromic sheet according to any one of [7] to [10], in which the electrochromic layer includes a first electrochromic layer laminated on the first transparent electrode, a second electrochromic layer laminated on the second transparent electrode, and an electrolyte layer filling a space between the first electrochromic layer and the second electrochromic layer, the first electrochromic layer contains a material exhibiting coloration by an oxidation reaction, and the second electrochromic layer contains a material exhibiting coloration by a reduction reaction.
[12] A laminate including: the electrochromic sheet according to any one of [7] to [11]; and a lens material having the electrochromic sheet laminated thereon.
[13] A lens for spectacles, including: an electrochromic part obtained by cutting the electrochromic sheet according to any one of [7] to [11] along an outer periphery of the first auxiliary electrode and the second auxiliary electrode; and a lens main body including the electrochromic part laminated thereon, in which the lens main body includes a protruding portion having the same shape in a plan view as the first lead-out portion.
[14] Spectacles including: the lens for spectacles according to [13]; and a frame holding the lens for spectacles, in which the first lead-out portion is electrically connected to the frame.
[15] An electrochromic sheet including: a first substrate; a second substrate; an electrochromic element sandwiched between the first substrate and the second substrate; and a sealing portion sandwiched between the first substrate and the second substrate, partitioning a colored region set between the first substrate and the second substrate, in which the electrochromic element includes a first transparent electrode provided on a side of the first substrate, a first auxiliary electrode disposed around the colored region and electrically connected to the first transparent electrode, a second transparent electrode provided on a side of the second substrate, a second auxiliary electrode disposed around the colored region and electrically connected to the second transparent electrode, and an electrochromic layer sandwiched between the first transparent electrode and the second transparent electrode, disposed in the colored region, and developing color by application of a voltage, the first auxiliary electrode has a strip-shaped first frame body surrounding a part of the electrochromic layer and a first lead-out portion protruding from the first frame body to an outside of the colored region, and the second auxiliary electrode has a strip-shaped second frame body surrounding a part of the electrochromic layer and a second lead-out portion protruding from the second frame body to an outside of the colored region, and in a case where a smallest imaginary rectangle is assumed among rectangles circumscribing the colored region in a plan view, the first lead-out portion is provided on one end side in one side direction of the imaginary rectangle, the second lead-out portion is provided on the other end side in the one side direction, and the first lead-out portion and the second lead-out portion are provided to be separated from each other by 40% or more of a length of the one side in the one side direction.
[16] The electrochromic sheet according to [15], in which the first lead-out portion is provided in a region from one end of the one side to 30% of the length, and the second lead-out portion is provided in a region from the other end of the one side to 30% of the length.
[17] The electrochromic sheet according to [16], in which the first lead-out portion is provided in a region from the one end to 10% of the length, and the second lead-out portion is provided in a region from the other end to 10% of the length.
[18] The electrochromic sheet according to any one of [15] to [17], in which the first lead-out portion and the second lead-out portion are provided in a region from one end to a center of the imaginary rectangle in a direction orthogonal to the one side of the imaginary rectangle.
[19] The electrochromic sheet according to any one of [15] to [18], in which the electrochromic layer includes a first electrochromic layer laminated on the first transparent electrode, a second electrochromic layer laminated on the second transparent electrode, and an electrolyte layer filling a space between the first electrochromic layer and the second electrochromic layer, the first electrochromic layer contains a material exhibiting coloration by an oxidation reaction, and the second electrochromic layer contains a material exhibiting coloration by a reduction reaction.
[20] A laminate including: the electrochromic sheet according to any one of [15] to [19]; and a lens material having the electrochromic sheet laminated thereon.
[21] A lens for spectacles, including: an electrochromic part obtained by cutting the electrochromic sheet according to any one of [15] to [19] along an outer periphery of the first auxiliary electrode and the second auxiliary electrode; and a lens main body including the electrochromic part laminated thereon, in which the lens main body includes a protruding portion having the same shape in a plan view as the first lead-out portion and the second lead-out portion.
[22] Spectacles including: the lens for spectacles according to [21]; and a frame holding the lens for spectacles, in which the first lead-out portion and the second lead-out portion are electrically connected to the frame.
[23] A laminate including: an electrochromic sheet; and a lens material having the electrochromic sheet laminated thereon, in which the electrochromic sheet includes a first substrate, a second substrate, an electrochromic element sandwiched between the first substrate and the second substrate, a sealing portion sandwiched between the first substrate and the second substrate, partitioning a colored region set between the first substrate and the second substrate, and a terminal portion which is electrically connected to the electrochromic element and is provided on a surface of the first substrate or the second substrate, the electrochromic element includes a first transparent electrode provided on a side of the first substrate, a first auxiliary electrode disposed around the colored region and electrically connected to the first transparent electrode, a second transparent electrode provided on a side of the second substrate, a second auxiliary electrode disposed around the colored region and electrically connected to the second transparent electrode, and an electrochromic layer sandwiched between the first transparent electrode and the second transparent electrode, disposed in the colored region, and developing color by application of a voltage, the terminal portion includes a first terminal portion which is electrically connected to the first auxiliary electrode and a second terminal portion which is electrically connected to the second auxiliary electrode, the first terminal portion includes a first conductive portion which penetrates the first substrate or the second substrate and is electrically connected to the first auxiliary electrode, and a first terminal which is provided on a surface of the first substrate or the second substrate and connected to the first conductive portion, and the second terminal portion includes a second conductive portion which penetrates the first substrate or the second substrate and is electrically connected to the second auxiliary electrode, and a second terminal which is provided on a surface of the first substrate or the second substrate and is connected to the second conductive portion.
[24] The laminate according to [23], in which the terminal portion further includes an external connection terminal which is connected to an external device.
[25] The laminate according to [23] or [24], in which the electrochromic layer includes a first electrochromic layer laminated on the first transparent electrode, a second electrochromic layer laminated on the second transparent electrode, and an electrolyte layer filling a space between the first electrochromic layer and the second electrochromic layer, the first electrochromic layer contains a material exhibiting coloration by an oxidation reaction, and the second electrochromic layer contains a material exhibiting coloration by a reduction reaction.
[26] A lens for spectacles, including: an electrochromic part obtained by cutting the electrochromic sheet according to any one of [23] to [25] along an outer periphery of the first auxiliary electrode and the second auxiliary electrode; and a lens main body including the electrochromic part laminated thereon.
[27] Spectacles including: the lens for spectacles according to [26]; and a frame holding the lens for spectacles.
[28] An electrochromic sheet including: a first substrate; a second substrate which is disposed to face the first substrate; an electrochromic element which is provided between the first substrate and the second substrate and forms a colored region where color changes by application of a voltage; an insulating sealing portion which partitions the colored region; a first auxiliary electrode which is electrically connected to the electrochromic element; and a second auxiliary electrode which is electrically connected to the electrochromic element, in which the electrochromic element includes a first transparent electrode which is electrically connected to the first auxiliary electrode, a second transparent electrode which is electrically connected to the second auxiliary electrode, and one or a plurality of electrochromic layers where color changes by at least one of an oxidation reaction or a reduction reaction, the first auxiliary electrode has a first counter electrode portion which has lower electrical resistance than the first transparent electrode and extends along a part of an outer peripheral edge of the colored region, the second auxiliary electrode has a second counter electrode portion which has lower electrical resistance than the second transparent electrode and extends along another part of the outer peripheral edge of the colored region, the second counter electrode portion is on a side opposite to the first counter electrode portion with respect to the colored region and faces the first counter electrode portion, and a width of a portion including at least one end of the first counter electrode portion and the second counter electrode portion is 0.1 mm or more and 1.0 mm or less.
[29] The electrochromic sheet according to [28], in which the plurality of electrolyte layers include a first electrochromic layer electrically connected to the first transparent electrode and a second electrochromic layer electrically connected to the second transparent electrode, the electrochromic element further includes an electrolyte layer filling a space between the first electrochromic layer and the second electrochromic layer, the first electrochromic layer contains a material in which color changes by an oxidation reaction, and the second electrochromic layer contains a material in which color changes by a reduction reaction.
[30] The electrochromic sheet according to [28] or [29], in which the first counter electrode portion has a first extending portion which extends to one side along the outer peripheral edge of the colored region and a second extending portion which extends to the other side along the outer peripheral edge of the colored region, the second counter electrode portion has a third extending portion which extends to one side along the outer peripheral edge of the colored region and a fourth extending portion which extends to the other side along the outer peripheral edge of the colored region, the first extending portion and the third extending portion are disposed to face each other, the one end of the first counter electrode portion is a distal end of the first extending portion, and the one end of the second counter electrode portion is a distal end of the third extending portion.
[31] The electrochromic sheet according to any one of [28] to [30], in which, in a plan view, a distance from the first counter electrode portion and the second counter electrode portion to the outer peripheral edge of the colored region is 0.25 mm or more.
[32] A lens for spectacles, including the electrochromic sheet according to any one of [28] to [31].
[33] Spectacles including the lens for spectacles according to [32].
[34] An electrochromic sheet used for a lens for spectacles, the electrochromic sheet including: a first substrate; a second substrate which is disposed to face the first substrate; an electrochromic element which is provided between the first substrate and the second substrate and forms a colored region where color changes by application of a voltage; an insulating sealing portion which partitions the colored region; a first auxiliary electrode which is electrically connected to the electrochromic element; and a second auxiliary electrode which is electrically connected to the electrochromic element, in which the electrochromic element includes a first transparent electrode which is electrically connected to the first auxiliary electrode, a second transparent electrode which is electrically connected to the second auxiliary electrode, and one or a plurality of electrochromic layers where color changes by at least one of an oxidation reaction or a reduction reaction, the first auxiliary electrode has a first counter electrode portion which has lower electrical resistance than the first transparent electrode and extends along a part of an outer peripheral edge of the colored region, the second auxiliary electrode has a second counter electrode portion which has lower electrical resistance than the second transparent electrode and extends along another part of the outer peripheral edge of the colored region, the second counter electrode portion is on a side opposite to the first counter electrode portion with respect to the colored region and faces the first counter electrode portion, and a width of a sealing region in the sealing portion, which is a region from the outer peripheral edge of the colored region to an outer peripheral edge of the lens for spectacles, is 1 mm or more and 3 mm or less.
[35] The electrochromic sheet according to [34], in which the plurality of electrolyte layers include a first electrochromic layer electrically connected to the first transparent electrode and a second electrochromic layer electrically connected to the second transparent electrode, the electrochromic element further includes an electrolyte layer filling a space between the first electrochromic layer and the second electrochromic layer, the first electrochromic layer contains a material in which color changes by an oxidation reaction, and the second electrochromic layer contains a material in which color changes by a reduction reaction.
[36] The electrochromic sheet according to [34] or [35], in which, in a plan view, a distance from the first counter electrode portion and the second counter electrode portion to the outer peripheral edge of the colored region is 0.25 mm or more, and in a plan view, a distance from the first counter electrode portion and the second counter electrode portion to the outer peripheral edge of the lens for spectacles is 0.25 mm or more.
[37] A lens for spectacles, including the electrochromic sheet according to any one of [34] to [36].
[38] Spectacles including the lens for spectacles according to [37].
[39] An electrochromic sheet including: a first substrate; a second substrate which is disposed to face the first substrate; an electrochromic element which is provided between the first substrate and the second substrate and forms a colored region where color changes by application of a voltage; an insulating sealing portion which partitions the colored region; a first auxiliary electrode which is electrically connected to the electrochromic element; and a second auxiliary electrode which is electrically connected to the electrochromic element, in which the electrochromic element includes a first transparent electrode which is electrically connected to the first auxiliary electrode, a second transparent electrode which is electrically connected to the second auxiliary electrode, and one or a plurality of electrochromic layers where color changes by at least one of an oxidation reaction or a reduction reaction, the first auxiliary electrode has a first counter electrode portion which has lower electrical resistance than the first transparent electrode and extends along a part of an outer peripheral edge of the colored region, the second auxiliary electrode has a second counter electrode portion which has lower electrical resistance than the second transparent electrode and extends along another part of the outer peripheral edge of the colored region, the second counter electrode portion is on a side opposite to the first counter electrode portion with respect to the colored region and faces the first counter electrode portion, the first counter electrode portion has a first extending portion which extends to one side along the outer peripheral edge of the colored region and a second extending portion which extends to the other side along the outer peripheral edge of the colored region, the second counter electrode portion has a third extending portion which extends to one side along the outer peripheral edge of the colored region and a fourth extending portion which extends to the other side along the outer peripheral edge of the colored region, the first extending portion and the third extending portion extend in a direction approaching each other, an interval between distal ends of the extending portions in a plan view is more than 0 mm and 20 mm or less, the second extending portion and the fourth extending portion extend in a direction approaching each other, and an interval between distal ends of the extending portions in a plan view is more than 0 mm and 20 mm or less.
[40] The electrochromic sheet according to [39], in which the plurality of electrolyte layers include a first electrochromic layer electrically connected to the first transparent electrode and a second electrochromic layer electrically connected to the second transparent electrode, the electrochromic element further includes an electrolyte layer filling a space between the first electrochromic layer and the second electrochromic layer, the first electrochromic layer contains a material in which color changes by an oxidation reaction, and the second electrochromic layer contains a material in which color changes by a reduction reaction.
[41] The electrochromic sheet according to [39] or [40], in which, in a plan view, a distance from the first counter electrode portion and the second counter electrode portion to the outer peripheral edge of the colored region is 0.25 mm or more.
[42] A lens for spectacles, including the electrochromic sheet according to any one of [39] to [41].
[43] Spectacles including the lens for spectacles according to [42].

### Advantageous Effects of Invention

According to the present invention, it is possible to provide an electrochromic sheet capable of performing color development and decolorization without delay. In addition, it is possible to provide a laminate including the electrochromic sheet, a lens for spectacles, and spectacles including the lens for spectacles.

### BRIEF DESCRIPTION OF DRAWINGS

[FIG. 1] A perspective view showing sunglasses using an electrochromic material according to the present embodiment.
[FIG. 2] An exploded perspective view of an electrochromic sheet 150.
[FIG. 3] A partial cross-sectional view taken along a line III-III of FIG. 2.
[FIG. 4] A partial cross-sectional view taken along a line IV-IV of FIG. 2.
[FIG. 5] A partially enlarged view of a first auxiliary electrode 33.
[FIG. 6] A partially enlarged view of a second auxiliary electrode 34.
[FIG. 7] An explanatory view representing a manufacturing method of a lens using an EC sheet 150.
[FIG. 8] An explanatory view representing an effect of an auxiliary electrode.
[FIG. 9] An explanatory view representing the effect of the auxiliary electrode.
[FIG. 10] A plan view of the EC sheet 150.
[FIG. 11] An explanatory view representing a manufacturing method of a lens using the EC sheet 150.
[FIG. 12] An explanatory view representing an effect of an auxiliary electrode.
[FIG. 13] An explanatory view representing the effect of the auxiliary electrode.
[FIG. 14] An explanatory view representing the effect of the auxiliary electrode.
[FIG. 15] An exploded perspective view of a laminate 160.
[FIG. 16] A partial cross-sectional view taken along a line III-III of FIG. 15.
[FIG. 17] A partial cross-sectional view taken along a line IV-IV of FIG. 15.
[FIG. 18] A partially enlarged view of a first auxiliary electrode 33.
[FIG. 19] A partially enlarged view of a second auxiliary electrode 34.
[FIG. 20] An explanatory view representing a manufacturing method of a lens using a laminate 160.
[FIG. 21] An explanatory view representing an effect of an auxiliary electrode.
[FIG. 22] An explanatory view representing the effect of the auxiliary electrode.
[FIG. 23] A perspective view showing sunglasses using an electrochromic sheet according to an embodiment.
[FIG. 24] A view for describing a manufacturing method of a lens using the electrochromic sheet according to the embodiment.
[FIG. 25] A plan view showing an electrochromic sheet.
[FIG. 26] A schematic view showing a cross section taken along A-A shown in FIG. 25.
[FIG. 27] A schematic view showing a cross section of the electrochromic element.
[FIG. 28] An exploded perspective view showing the electrochromic sheet.
[FIG. 29] A plan view of a part of the electrochromic sheet.
[FIG. 30] A plan view of a part of the electrochromic sheet.
[FIG. 31] A plan view showing an electrochromic sheet.
[FIG. 32] A schematic view showing a cross section taken along A-A shown in FIG. 31.
[FIG. 33] A schematic view showing a cross section of the electrochromic element.
[FIG. 34] An exploded perspective view showing the electrochromic sheet.
[FIG. 35] A plan view of a part of the electrochromic sheet.
[FIG. 36] A plan view of a part of the electrochromic sheet.
[FIG. 37] A plan view showing an electrochromic sheet.

### DESCRIPTION OF EMBODIMENTS

### (First embodiment)

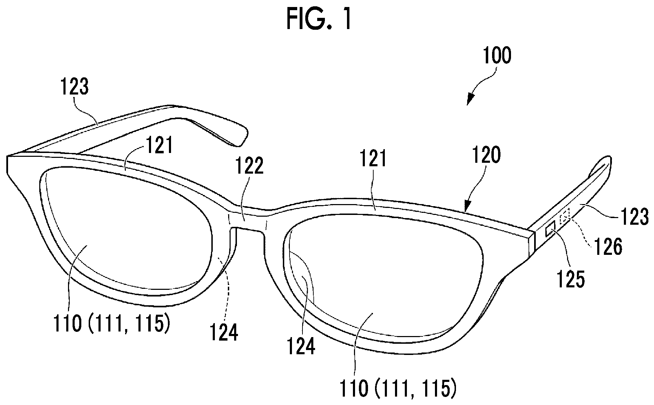

Hereinafter, an electrochromic sheet, a laminate, a lens for spectacles, and spectacles according to the present embodiment will be described with reference to FIGS. 1 to 9. In all the drawings below, dimensions, ratios, and the like of respective components are appropriately different in order to make the drawings easy to see. In addition, in the following description, a term "electrochromic" may be abbreviated as "EC".

### <<Spectacles>>

FIG. 1 is a perspective view showing sunglasses (spectacles) using an electrochromic sheet (EC sheet) according to the present embodiment as a material. The sunglasses are an example of spectacles.

As shown in FIG. 1, sunglasses 100 include a pair of lenses 110 (lenses for spectacles) and a frame 120.

### [Lens]

The lens 110 has visible light transmittance and can reversibly perform color development and decolorization by switching application of a voltage. In the present specification, a term "lens (lens for spectacles)" includes both a lens having a light collecting function and a lens not having a light collecting function.

The lens 110 has an electrochromic part 111 (EC part 111) formed of an EC sheet described later and a lens main body 115 on which the EC part 111 is laminated. In a case where a user wears the sunglasses 100, the lens main body 115 is positioned on the user side, and the EC part 111 is positioned on a surface of the lens main body 115 opposite to the user.

### [Frame]

The frame 120 includes a pair of rim parts 121, a bridge part 122, a pair of temple parts 123, and a pair of nose pad parts 124. The frame 120 is mounted on the head of the user. The frame 120 is configured to dispose the lens 110 in front of the eyes of the user.

The rim part 121 is formed in a closed ring shape. The pair of rim parts 121 correspond to a right eye and a left eye of the user, respectively. The rim part 121 may have an open annular shape. In addition, the frame 120 may have a configuration in which the rim part 121 is not provided.

The bridge part 122 connects the pair of rim parts 121 to each other. The bridge part 122 is located in front of the upper part of the nose of the user, in a case of being mounted on the head of the user.

The pair of temple parts 123 are each connected to a position on a side opposite to a position where the bridge part 122 is connected in the rim part 121. The temple part 123 is hung on the ear of the user, in a case of being mounted on the head of the user.

The temple part 123 includes a switch 125 and a battery 126. The switch 125 is exposed on an outer surface of the temple part 123. The switch 125 is electrically connected to the lens 110 through a wiring line. The switch 125 can switch, for example, application of a positive voltage, application of a negative voltage, and nonapplication of a voltage to the lens 110.

The battery 126 is built in the temple part 123. The battery 126 is electrically connected to the lens 110 through a wiring line.

The nose pad part 124 is formed at a position corresponding to the nose of the user in each rim part 121. The nose pad part 124 comes into contact with the nose of the user. The nose pad part 124 stabilizes a wearing state of the sunglasses 100.

As a constituent material of the frame 120, for example, a metal material, a resin material, or the like can be used. A shape of the frame 120 is not limited to the example shown in the drawing as long as it has a shape which can be mounted on the head of the user.

### <<Electrochromic sheet>>

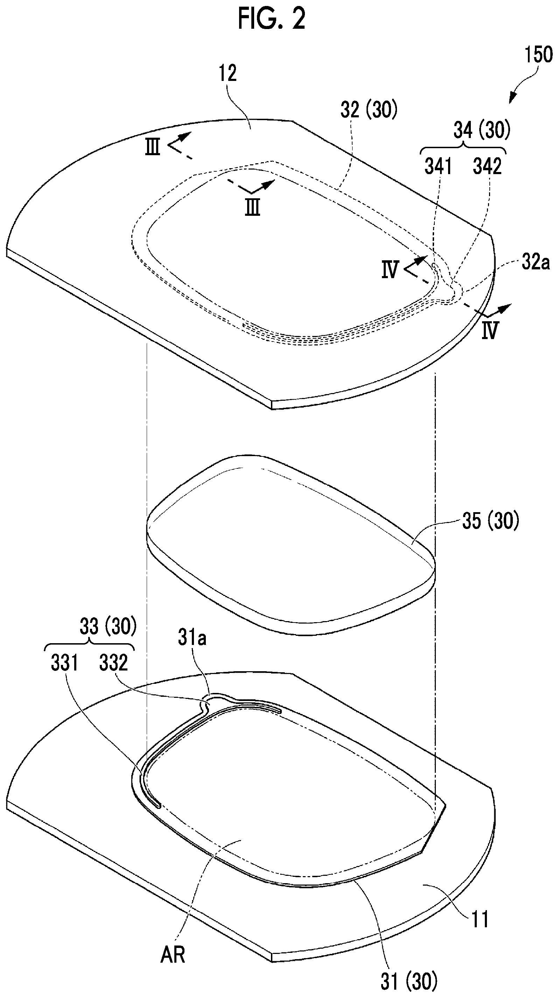

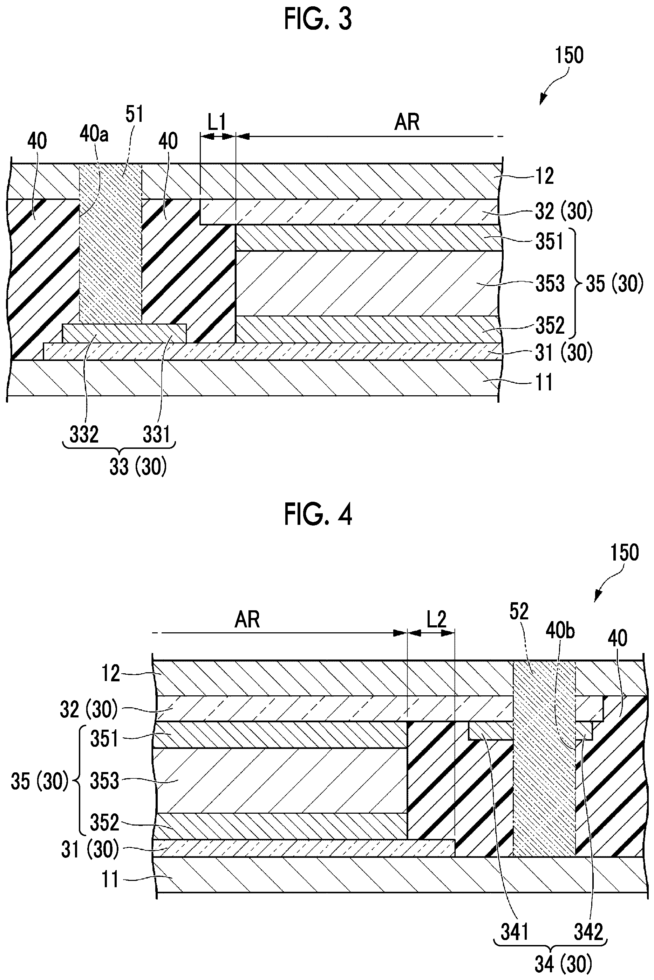

FIG. 2 is an exploded perspective view of an electrochromic sheet 150 (EC sheet 150), FIG. 3 is a partial cross-sectional view taken along a line III-III of FIG. 2, and FIG. 4 is a partial cross-sectional view taken along a line IV-IV of FIG. 2. The EC sheet 150 is used as a material for a lens for spectacles described later.

As shown in FIGS. 2 to 4, the EC sheet 150 has a first substrate 11, a second substrate 12, an electrochromic element 30 (EC element 30), and a sealing portion 40. In FIG. 2, the sealing portion 40 is not shown.

The first substrate 11 and the second substrate 12 sandwich the EC element 30 and the sealing portion 40. In addition, the sealing portion 40 is disposed around the EC element 30 between the first substrate 11 and the second substrate 12, and partitions a space between the first substrate 11 and the second substrate 12. The region partitioned by the sealing portion 40 is a colored region AR in which color changes by application of a voltage.

### [First substrate and second substrate]

The first substrate 11 and the second substrate 12 are outermost layers of the EC sheet 150. The first substrate 11 and the second substrate 12 are disposed to face each other and have a function as a protective layer which protects the EC element 30 and the like.

The first substrate 11 and the second substrate 12 have visible light transmittance. In the present specification, a term "transparent" may be used to refer to having visible light transmittance. In addition, the visible light transmittance may be referred to as "transparency". The first substrate and the second substrate 12 may be colorless or colored as long as they have transparency.

The first substrate 11 and the second substrate 12 contain a thermoplastic resin having transparency as a main material. Examples of such a resin include an acrylic resin, a polystyrene resin, a polyethylene resin, a polypropylene resin, a polyester resin (polyethylene terephthalate (PET), polyethylene naphthalate (PEN), and the like), a polycarbonate resin, a polyamide resin, a cycloolefin resin, a vinyl chloride resin, a polyacetal resin, and triacetyl cellulose (TAC).

As a material of the first substrate 11 and the second substrate 12, one of the above-described resins may be used, or two or more thereof may be used in combination. As the material of the first substrate 11 and the second substrate 12, a polycarbonate resin or a polyamide resin is preferable.

In addition, the material of the first substrate 11 and the second substrate 12 may contain a known filler or additive as long as they have transparency. In addition, the first substrate 11 and the second substrate 12 may be a single layer or a laminate.

A refractive index of the first substrate 11 and the second substrate 12 at a wavelength of 589 nm is preferably 1.3 or more and 1.8 or less, and more preferably 1.4 or more and 1.65 or less. By setting the refractive index of the first substrate 11 and the second substrate 12 to be within the range, the function of the electrochromic element 30 can be enhanced.

An average thickness of the first substrate 11 and the second substrate 12 is, for example, 0.05 mm or more and 10.0 mm or less, preferably 0.3 mm or more and 5.0 mm or less.

### [Electrochromic element]

The EC element 30 undergoes discoloration (color development and decolorization) due to electrochromism generated by the application of a voltage. The EC element 30 includes a first transparent electrode 31, a second transparent electrode 32, a first auxiliary electrode 33, a second auxiliary electrode 34, and an electrochromic layer 35 (EC layer 35).

### (First transparent electrode and second transparent electrode)

The first transparent electrode 31 is provided on the first substrate 11 side of the EC element 30 and is formed on a surface of the first substrate 11 on the second substrate 12 side. In addition, the second transparent electrode 32 is provided on the second substrate 12 side of the EC element 30 and is formed on a surface of the second substrate 12 on the first substrate 11 side.

In FIG. 2, the first transparent electrode 31 has a portion 31a which protrudes similarly to a first lead-out portion 332 at a position overlapping the first lead-out portion 332 described later, but the portion 31a may not be provided. Similarly, the second transparent electrode 32 has a portion 32a which protrudes similarly to a second lead-out portion 342 is provided at a position overlapping the second lead-out portion 342 described later, but the portion 32a may not be provided.

The first transparent electrode 31 and the second transparent electrode 32 have transparency. Examples of a material of the first transparent electrode 31 and the second transparent electrode 32 include oxides such as ITO, F-doped tin oxide (FTO), antimony tin oxide (ATO), indium zinc oxide (IZO), In₂O₃, SnO₂, Sb-containing SnO₂, and Al-containing ZnO; Au, Pt, Ag, Cu, and alloys containing these substances. As the material of the first transparent electrode 31 and the second transparent electrode 32, one of these materials may be used, or two or more thereof may be used in combination.

A thickness of the first transparent electrode 31 and the second transparent electrode 32 is adjusted such that the required transparency is ensured and an electrical resistance value capable of appropriately applying a voltage to the EC layer 35 is obtained. In a case where ITO is used as the material of the first transparent electrode 31 and the second transparent electrode 32, average thicknesses of the first transparent electrode 31 and the second transparent electrode 32 are, for example, each independently 50 nm or more and 200 nm or less, preferably 50 nm or more and 150 nm or less, and more preferably 60 nm or more and 130 nm or less.

### (First auxiliary electrode and second auxiliary electrode)

The first auxiliary electrode 33 is disposed around the colored region AR in a peripheral edge portion of the first transparent electrode 31 and is electrically connected to the first transparent electrode 31. The first auxiliary electrode 33 includes a strip-shaped first frame body 331 and a first lead-out portion 332 which protrudes from the first frame body 331 to the outside of the colored region AR.

The first frame body 331 surrounds a part of the EC layer 35, that is, a part of the colored region AR. The first frame body 331 is curved in a plan view, but the present invention is not limited thereto. The first frame body 331 is provided at a position surrounding a periphery of the lens 110 in a case of being used as the lens 110. A width of the first frame body 331 is, for example, preferably 0.1 mm or more and 1.0 mm or less, and more preferably 0.3 mm or more and 1.0 mm or less.

The first lead-out portion 332 is provided at a position which is biased to one end side of the first frame body 331 from a center of the first frame body 331 in a plan view. The first lead-out portion 332 is provided at a position near the bridge part 122 or the temple part 123 in the frame 120 in a case of being used as the lens 110.

As described later, in a case where the EC sheet 150 is processed into the lens 110, in the sealing portion 40, a through-hole 40a in which the first lead-out portion 332 is exposed is formed at a position which planarly overlaps the first lead-out portion 332, and a first conductive portion 51 is formed in the through-hole 40a. The first lead-out portion 332 is used as a connection portion to the first conductive portion 51. The first conductive portion 51 to be formed is electrically connected to the first lead-out portion 332 (first auxiliary electrode 33).

The second auxiliary electrode 34 is disposed around the colored region AR in a surface of a peripheral edge portion of the second transparent electrode 32 and is electrically connected to the second transparent electrode 32. The second auxiliary electrode 34 includes a strip-shaped second frame body 341 and a second lead-out portion 342 which protrudes from the second frame body 341 to the outside of the colored region AR.

The second frame body 341 surrounds a part of the EC layer 35, that is, a part of the colored region AR. The second frame body 341 is curved in a plan view, but the present invention is not limited thereto. The second frame body 341 is provided at a position surrounding a periphery of the lens 110 in a case of being used as the lens 110. A width of the second frame body 341 is, for example, preferably 0.1 mm or more and 1.0 mm or less, and more preferably 0.3 mm or more and 1.0 mm or less.

The second lead-out portion 342 is provided at a position which is biased to one end side of the second frame body 341 from a center of the second frame body 341 in a plan view. The second lead-out portion 342 is provided at a position near the bridge part 122 or the temple part 123 in the frame 120 in a case of being used as the lens 110.

In the sealing portion 40, a through-hole 40b in which the second lead-out portion 342 is exposed is similarly formed at a position which planarly overlaps the second lead-out portion 342, and a second conductive portion 52 is formed in the through-hole 40b. The second lead-out portion 342 is used as a connection portion to the second conductive portion 52. The second conductive portion 52 to be formed is electrically connected to the second lead-out portion 342 (second auxiliary electrode 34).

The first auxiliary electrode 33 and the second auxiliary electrode 34 do not overlap each other in a plan view, and are positioned on opposite sides of the colored region AR in a plan view. In addition, the first lead-out portion 332 does not overlap the second transparent electrode 32, and the second lead-out portion 342 does not overlap the first transparent electrode 31.

In a case where the smallest rectangle is assumed among rectangles circumscribing the first transparent electrode 31 in a plan view, the first auxiliary electrode 33 of the EC sheet according to the present embodiment is provided in a region on one side of the rectangle in one side direction, and the second auxiliary electrode 34 is provided in a region on one side of the rectangle in the one side direction.

In a side direction orthogonal to the one side direction of the rectangle described above, a length of the first auxiliary electrode 33 (first frame body 331) is 50% or more and 100% or less of a length of the first transparent electrode 31 in the orthogonal direction.

In addition, a length of the second auxiliary electrode 34 (second frame body 341) in the above-described orthogonal direction is 50% or more and 100% or less of a length of the second transparent electrode 32 in the orthogonal direction.

An electrical resistance value of the first auxiliary electrode 33 is lower than an electrical resistance value of the first transparent electrode 31. Similarly, an electrical resistance value of the second auxiliary electrode 34 is lower than an electrical resistance value of the second transparent electrode 32. Examples of a constituent material of the first auxiliary electrode 33 and the second auxiliary electrode 34 include silver, aluminum, copper, chromium, and molybdenum. As the constituent material of the first auxiliary electrode 33 and the second auxiliary electrode 34, a conductive ink can also be used. As the constituent material of the first auxiliary electrode 33 and the second auxiliary electrode 34, one of these materials may be used, or two or more thereof may be used in combination. The first auxiliary electrode 33 and the second auxiliary electrode 34 can be formed, for example, by sputtering, vapor deposition, or the like. The first auxiliary electrode 33 and the second auxiliary electrode 34 can also be formed by printing using a conductive ink.

Average thicknesses of the first auxiliary electrode 33 and the second auxiliary electrode 34 are each independently preferably 1 nm or more and 100 nm or less. The average thicknesses of the first auxiliary electrode 33 and the second auxiliary electrode 34 are more preferably 5 nm or more and 50 nm or less.

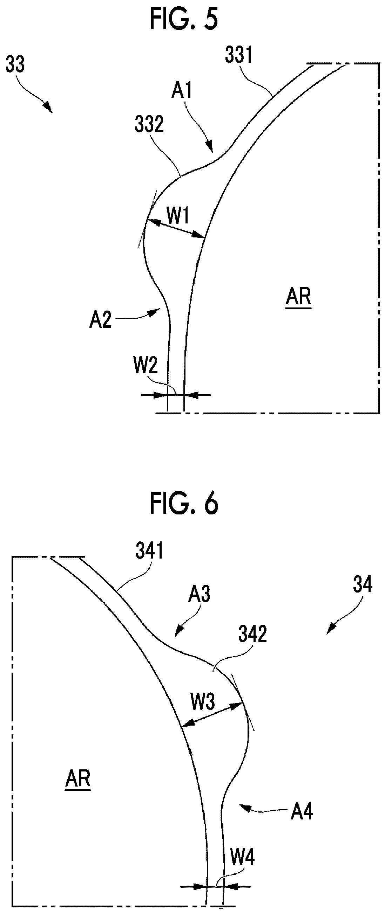

FIG. 5 is a partially enlarged view of the first auxiliary electrode 33. As shown in FIG. 5, in the first auxiliary electrode 33, a contour line of the connection portion (represented by reference numerals A1 and A2 in FIG. 5) between the first frame body 331 and the first lead-out portion 332 is a curve which is convex on the colored region AR side. A curvature radius of the curve is set to 40 mm or more. The curvature radius can be measured and calculated by a known method.

In addition, it is preferable that a width of the first lead-out portion 332 toward the outside from the first frame body 331 is set to 10 mm or less.

The above-described width of the first lead-out portion 332 is a value obtained by measuring a width W1 of the entire first auxiliary electrode 33 at the position where the first lead-out portion 332 is provided and subtracting a width W2 of the first frame body 331 from the obtained width W1 of the first auxiliary electrode 33. In a case where a design value is known, the design value can be used as the width W2 of the first frame body 331. In a case where the width of the first frame body 331 is unknown, widths at a plurality of locations (for example, five locations at equal intervals) is measured at equal intervals, and an arithmetic mean value of the measured values can be set as the width W2 of the first frame body 331.

A width of a portion (distal end portion) including at least a distal end (one end) of the first frame body 331 may be 0.1 mm or more and 1.0 mm or less. In a case where the width of the distal end portion is 0.1 mm or more, the electrical resistance can be reduced. Therefore, the color development and decolorization in the colored region AR can be performed without delay. In a case where the width of the distal end portion is 1.0 mm or less, it is difficult to visually recognize the distal end portion from the outside. Therefore, the first frame body 331 is not noticeable. Accordingly, aesthetic appearance of the sunglasses 100 can be enhanced. The width of the distal end portion may be 0.3 mm or more and 1.0 mm or less.

FIG. 6 is a partially enlarged view of the second auxiliary electrode 34. Similar to the first auxiliary electrode 33, in the second auxiliary electrode 34, a contour line of the connection portion (represented by reference numerals A3 and A4 in FIG. 6) between the second frame body 341 and the second lead-out portion 342 is a curve which is convex on the colored region AR side. It is preferable that a curvature radius of the curve is set to 40 mm or more.

In addition, it is preferable that a width of the second lead-out portion 342 toward the outside from the second frame body 341 is set to 10 mm or less.

In the same manner as in the above-described width W1, the width W2 can be determined as a value obtained by measuring a width W3 of the entire second auxiliary electrode 34 at the position where the second lead-out portion 342 is provided and subtracting a width W4 of the second frame body 341 from the obtained width W3 of the second auxiliary electrode 34.

A width of a portion (distal end portion) including at least a distal end (one end) of the second frame body 341 may be 0.1 mm or more and 1.0 mm or less. In a case where the width of the distal end portion is 0.1 mm or more, the electrical resistance can be reduced. Therefore, the color development and decolorization in the colored region AR can be performed without delay. In a case where the width of the distal end portion is 1.0 mm or less, it is difficult to visually recognize the distal end portion from the outside. Therefore, the second frame body 341 is not noticeable. Accordingly, aesthetic appearance of the sunglasses 100 can be enhanced. The width of the distal end portion may be 0.3 mm or more and 1.0 mm or less.

### (Electrochromic layer)

As shown in FIGS. 2 and 3, the EC layer 35 includes a first electrochromic layer 351 (first EC layer 351) which is laminated on the first transparent electrode 31, a second electrochromic layer 352 (second EC layer 352) which is laminated on the second transparent electrode 32, and an electrolyte layer 353 which fills a space between the first EC layer 351 and the second EC layer 352.

### (First electrochromic layer)

The first EC layer 351 is a layer in which color changes, and contains a material which is colored by an oxidation reaction as a main material. Examples of the material which is colored by an oxidation reaction include known materials which exhibit electrochromism and are used for an EC element, including a polymerized substance of a radically polymerizable compound having a triarylamine structure, a bisacridane compound, triphenylamine, benzidine, a Prussian blue-type complex, nickel oxide, and the like.

Examples of the polymerized substance of the radically polymerizable compound having a triarylamine structure include substances described in Japanese Unexamined Patent Application Publication No. 2016-45464, Japanese Unexamined Patent Application Publication No. 2020-138925, and the like.

As the material which is colored by an oxidation reaction, one of these materials may be used, or two or more thereof may be used in combination.

An average thickness of the first EC layer 351 is preferably 0.1 µm or more and 30 µm or less. The average thickness of the first EC layer 351 is more preferably 0.4 µm or more and 10 µm or less.

### (Second electrochromic layer)

The second EC layer 352 is a layer in which color changes, and contains a material which is colored by a reduction reaction as a main material. Examples of the material which is colored by a reduction reaction include known materials which exhibit electrochromism and are used for an EC element, including inorganic electrochromic compounds such as tungsten oxide, molybdenum oxide, iridium oxide, and titanium oxide, organic electrochromic compounds such as a viologen-based compound and a dipyridine-based compound, and the like.

As the material which is colored by a reduction reaction, one of these materials may be used, or two or more thereof may be used in combination.

A color (color 1) that the first EC layer 351 is colored by an oxidation reaction and a color (color 2) that the second EC layer 352 is colored by a reduction reaction may have the same tone or may have different tones. In a case where the color 1 and the color 2 have the same tone, the maximum color optical density can be increased, and thus the contrast can be improved. In a case where the color 1 and the color 2 have different tones, the color development of the EC element 30 is a color after mixing the color 1 and the color 2.

By coloring both the first EC layer 351 and the second EC layer 352, redox coloring agents of the first EC layer 351 and the second EC layer 352 can be simultaneously developed. Therefore, the color development speed can be improved.

An average thickness of the second EC layer 352 is preferably 0.2 µm or more and 5.0 µm or less. The average thickness of the second EC layer 352 is more preferably 1.0 µm or more and 4.0 µm or less. In a case where the average thickness of the second EC layer 352 is 0.2 µm or more, the color optical density can be increased. In a case where the average thickness of the second EC layer 352 is 5.0 µm or less, the manufacturing cost can be reduced. In a case where the average thickness of the second EC layer 352 is 5.0 µm or less, a decrease in visibility due to coloration is less likely to occur.

### (Electrolyte layer)

The electrolyte layer 353 fills a space between the first EC layer 351 and the second EC layer 352. The electrolyte layer 353 contains an electrolyte having ion conductivity.

Examples of the electrolyte include inorganic ionic salts such as an alkali metal salt and an alkaline earth metal salt; and supporting salts such as a quaternary ammonium salt, acids, and alkalis. Examples of a counterion (anion) of the electrolyte include a halogen, a thiocyanate ion (SCN⁻), a chlorate ion (ClO₃⁻), a perchlorate ion (ClO₄⁻), a tetrafluoroborate ion (BF₄⁻), a hexafluorophosphate ion (PF₆⁻), a trifluoromethanesulfonate ion (CF₃SO₃⁻), a trifluoroacetate ion (CF₃COO⁻), and a bisfluorosulfonium imide (N(SO₂F)₂⁻).

Specific examples of such an electrolyte include LiClO₄, LiBF₄, LiAsF₆, LiPF₆, LiCF₃SO₃, LiCF₃COO, KCl, NaClO₃, NaCl, NaBF₄, NaSCN, KBF₄, Mg(ClO₄)₂, and Mg(BF₄)₂. As the electrolyte, one of these materials may be used, or two or more thereof may be used in combination.

As the material of the electrolyte, an ionic liquid can also be used. Among ionic liquids, an organic ionic liquid has a molecular structure which exhibits a liquid in a wide temperature range including room temperature, and thus is easy to handle.

An average thickness of the electrolyte layer 353 is preferably 20 µm or more and 100 µm or less. The average thickness of the electrolyte layer 353 is more preferably 30 µm or more and 80 µm or less, and still more preferably 30 µm or more and 70 µm or less.

### [Sealing portion]

The sealing portion 40 is disposed between the first substrate 11 and the second substrate 12, and partitions the colored region AR. A material of the sealing portion 40 is not particularly limited as long as it is an insulating material having transparency. Examples of the material of the sealing portion 40 include resin materials such as an acrylic resin and an epoxy resin; and inorganic oxides such as a silicon oxide (SiO₂), a silicon oxynitride (SiON), and an aluminum oxide (Al₂O₃).

An average thickness of the sealing portion 40 is adjusted according to an average thickness of the EC element 30. The average thickness of the sealing portion 40 is preferably 20 µm or more and 100 µm or less, more preferably 30 µm or more and 80 µm or less, and still more preferably 40 µm or more and 60 µm or less.

In the EC sheet 150, in a cross section connecting the first lead-out portion 332 and the colored region AR, a distance (represented by a reference numeral L1 in FIG. 3) from an edge of the second transparent electrode 32 on the first lead-out portion 332 side to the colored region AR is 0.01 mm or more and 1.0 mm or less.

In order to set the distance L1 to be in such a range, in the second transparent electrode 32, processing of retreating the contour in the vicinity of the first lead-out portion 332 to the colored region AR side may be performed. As a result, the risk that the first conductive portion 51 and the second transparent electrode 32 provided in the first lead-out portion 332 are short-circuited is reduced, and the first conductive portion 51 can be brought closer to the colored region AR. Therefore, the first lead-out portion 332 can be made small, and the first auxiliary electrode 33 is less likely to be noticeable.

Similarly, in a cross section connecting the second lead-out portion 342 and the colored region AR, a distance (represented by a reference numeral L2 in FIG. 4) from an edge of the first transparent electrode 31 on the second lead-out portion 342 side to the colored region AR is preferably 0.01 mm or more and 1.0 mm or less. In order to set the distance L2 to be in such a range, in the first transparent electrode 31, processing of retreating the contour in the vicinity of the second lead-out portion 342 to the colored region AR side may be performed. As a result, the risk that the second conductive portion 52 and the first transparent electrode 31 provided in the second lead-out portion 342 are short-circuited is reduced, and the second conductive portion 52 can be brought closer to the colored region AR. Therefore, the second lead-out portion 342 can be made small, and the second auxiliary electrode 34 is less likely to be noticeable.

Here, the "cross section connecting the first lead-out portion 332 and the colored region AR" is a cross section connecting the first lead-out portion 332 and the colored region AR in the shortest manner, and a cross section shown in FIG. 3 corresponds to the cross section.

In addition, the "cross section connecting the second lead-out portion 342 and the colored region AR" is a cross section connecting the second lead-out portion 342 and the colored region AR in the shortest manner, and a cross section shown in FIG. 4 corresponds to the cross section.

### <<Laminate and lens for spectacles>>

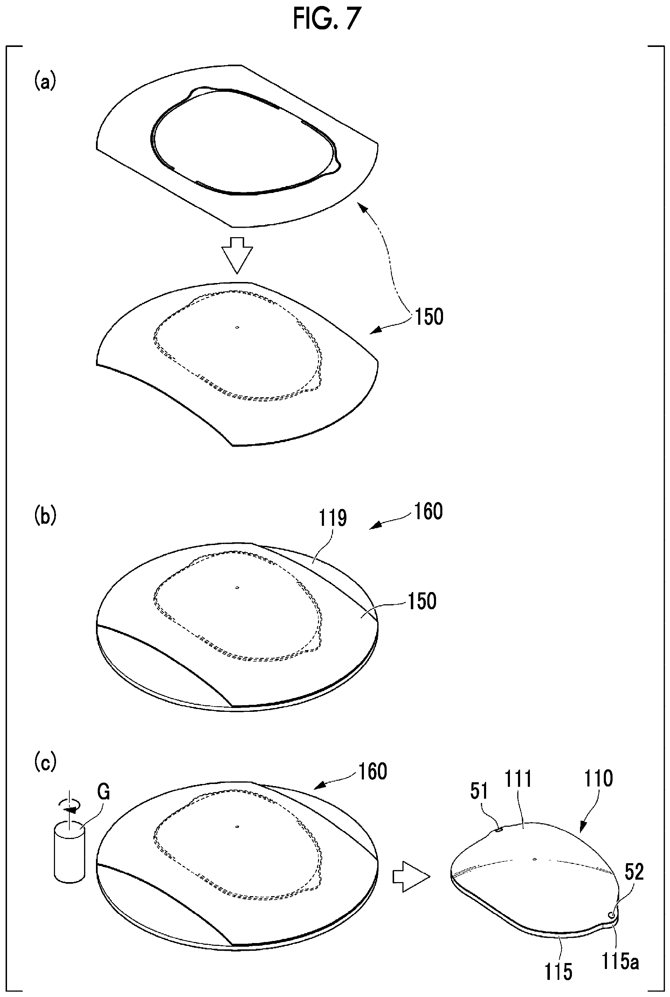

FIG. 7 is an explanatory view representing a manufacturing method of a lens using the EC sheet 150.

First, as shown in FIG. 7(a), the EC sheet 150 is bent under heating and thereby the EC sheet 150 is curved in accordance with a curvature of a target lens. The bending processing is performed by, for example, press molding or vacuum molding.

Next, as shown in FIG. 7(b), the curved EC sheet 150 is insert-molded as an insert product, and a lens material 119 is formed on a concave surface of the EC sheet 150 to obtain a laminate 160. The laminate 160 corresponds to "laminate" according to the present invention. The lens material 119 is processed as described later to be the lens main body 115.

The lens material 119 has visible light transmittance. As a material of the lens material 119, a thermoplastic resin known as a material of an optical member can be used.

In a case where the material of the lens material 119 is the same as or similar to the main material of the substrate (the first substrate 11 or the second substrate 12) in the EC sheet 150 in contact with the lens material 119, the EC sheet 150 and the lens material 119 are easily adhered to each other, which is preferable. In addition, in a case where the material of the substrate and the material of the lens material 119 are the same type or the same, a difference in refractive index between the substrate and the lens material 119 can be reduced, and scattering or reflection of light at an interface between the EC sheet 150 and the lens material 119 can be suppressed. The difference in refractive index between the substrate and the lens material 119 is preferably 0.2 or less, and more preferably 0.1 or less.

A thickness of the lens material 119 is, for example, preferably 1.5 mm or more and 20 mm or less. By setting the thickness of the lens material 119 to be within the above-described range, it is possible to achieve both high strength and reduction in weight of the obtained lens.

Next, the surface of the lens material 119 is polished, and the surfaces of the EC sheet 150 and the lens material 119 are subjected to a hard coating treatment and an antireflection treatment. Thereafter, a through-hole is formed in the sealing portion 40 at a position overlapping the first lead-out portion 332 and the second lead-out portion 342, and a conductive portion is formed in the through-hole.

The conductive portion can be formed of a conductive paste filled inside the through-hole or a conductive tubular member inserted into the through-hole. In addition, a known material can be appropriately applied as long as it is formed in the through-hole and is electrically connected to the first auxiliary electrode 33 (first lead-out portion 332) and the second auxiliary electrode 34 (second lead-out portion 342).

Next, as shown in FIG. 7(c), the laminate 160 is subjected to trimming to have a shape corresponding to the rim part 121 of the sunglasses 100 described above. In this case, the trimming of the periphery of the first lead-out portion 332 and the second lead-out portion 342 is performed using, for example, a rotating cylindrical grinding stone G.

By such processing, the lens 110 which includes the EC part 111 obtained by cutting the EC sheet 150 along the outer periphery of the first auxiliary electrode 33 and the second auxiliary electrode 34 and the lens main body 115 on which the EC part 111 is laminated is obtained (see FIG. 1). The obtained lens 110 corresponds to "lens for spectacles" according to the present invention.

The lens material 119 included in the laminate 160 is processed into the lens main body 115 by trimming along the outer periphery of the first auxiliary electrode 33 and the second auxiliary electrode 34. The lens main body 115 has a protruding portion 115a having the same shape as the first lead-out portion 332 and the second lead-out portion 342 in a plan view.

The obtained lens 110 is combined with the frame 120 shown in FIG. 1. In this case, the first lead-out portion 332 and the second lead-out portion 342 of the EC part 111 are electrically connected to the frame 120 through each provided conductive portion. In the present embodiment, the first lead-out portion 332 and the second lead-out portion 342 are electrically connected to an external terminal (not shown) provided on the temple part 123 or the bridge part 122 of the frame 120, and are connected to the battery 126.

In this manner, the sunglasses 100 are obtained.

With the EC sheet 150 having the above-described configuration, the following effects can be obtained.

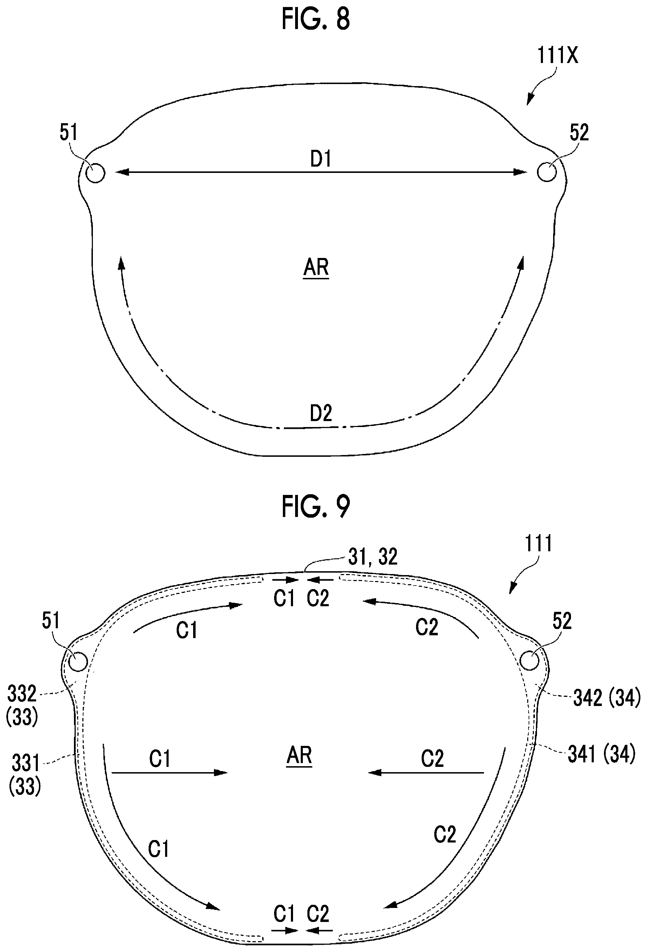

FIGS. 8 and 9 are explanatory diagrams representing effects of the auxiliary electrode (the first auxiliary electrode and the second auxiliary electrode). FIG. 8 is an EC part of a lens for spectacles, manufactured by the above-described method using an EC sheet not having an auxiliary electrode. FIG. 9 shows the EC part (EC part 111) of the lens for spectacles, manufactured by the above-described method using the EC sheet 150.

First, in an EC part 111X shown in FIG. 8, in a case where a battery is connected to the first conductive portion 51 and the second conductive portion 52 electrically connected to the transparent electrode (the first transparent electrode and the second transparent electrode) and a voltage is applied, a current flows directly from the first conductive portion 51 and the second conductive portion 52 to the transparent electrode.

In this case, in a path (represented by a reference numeral D1) which connects the first conductive portion 51 and the second conductive portion 52 at the shortest distance, the path is short and the electrical resistance is small, so that the current flows easily; and in a path (represented by a reference numeral D2) which connects the first conductive portion 51 and the second conductive portion 52 by bypassing, the current flows relatively difficultly as compared with the path D1. As a result, in the colored region AR, in a region far from the first conductive portion 51 and the second conductive portion 52, overlapping the path D2, the delay of discoloration is likely to occur as compared with a region overlapping the path D1.

On the other hand, as in the EC part 111 shown in FIG. 9, in a case where the EC sheet as a material has the auxiliary electrode (the first auxiliary electrode 33 and the second auxiliary electrode 34), the operation is performed as follows.

In the first auxiliary electrode 33, in a case where a voltage is applied to the first lead-out portion 332 through the first conductive portion 51, first, the first lead-out portion 332 is energized toward the first frame body 331, and then, current flows from the first auxiliary electrode 33 to the first transparent electrode 31. Such a current is represented by a reference numeral C1.

Similarly, in the second auxiliary electrode 34, in a case where a voltage is applied from the external power to the second lead-out portion 342 through the second conductive portion 52, first, the second lead-out portion 342 is energized toward the second frame body 341, and then, current flows from the second auxiliary electrode 34 to the second transparent electrode 32. Such a current is represented by a reference numeral C2.

In this case, the first auxiliary electrode 33 covers most of the first transparent electrode 31 on one end side in a short direction, and the second auxiliary electrode 34 covers most of the second transparent electrode 32 on the other end side in a short direction. Therefore, in a case where the voltage is applied, the EC part 111 can synchronize the timing of energization in the entire colored region AR through the auxiliary electrodes, and can suppress the delay of discoloration.

In addition, the first auxiliary electrode 33 and the second auxiliary electrode 34 are provided at the peripheral edge portion of the colored region AR, and are not present at the center of the colored region AR. Therefore, the color development of the colored region AR is not hindered.

Furthermore, in the EC sheet 150, the distance L1 shown in FIG. 3 is set to 0.01 mm or more and 1.0 mm or less. Therefore, the formed first conductive portion 51 is brought closer to the colored region AR, the first lead-out portion 332 is reduced accordingly, and thus the first auxiliary electrode 33 can be made less noticeable.

With the electrochromic sheet having the above-described configuration, since the first auxiliary electrode 33 and the second auxiliary electrode 34 are provided, the color development and the decolorization can be performed without delay. In addition, by devising the peripheral structure of the colored region AR, the auxiliary electrodes are less noticeable, and an EC sheet having excellent designability is obtained.

In addition, with the laminate, the lens for spectacles, and the spectacles having the above-described configurations, since the electrochromic sheet is provided, the color development and the decolorization can be performed without delay.

In the present embodiment, the sunglasses 100 are shown as an example of the spectacles, but the present invention is not limited thereto. An application destination of the lens 110 may be, for example, goggles which protect the eyes from wind and rain, dust, chemicals, and the like.

In addition, in the present embodiment, the EC layer 35 includes the first EC layer 351 and the second EC layer 352, but the present invention is not limited thereto. The EC layer 35 can exhibit the effects of the present invention even in a case of having a configuration in which only one of the first EC layer 351 or the second EC layer 352 is provided.

Although the preferred embodiments of the present invention have been described above with reference to the accompanying drawings, the present invention is not limited to the examples. Various shapes, combinations, and the like of the respective components shown in the above-described examples are merely examples, and various changes can be made based on design, specifications, and the like without departing from the gist of the present invention.

### (Second embodiment)

The transparent electrode used in the configuration of Patent Document 1 described above is formed of a material having high electrical conductivity and high visible light transmittance. As the material of the transparent electrode, an oxide such as indium tin oxide (ITO) has been known.

On the other hand, the above-described material has a high electrical resistance as compared with a metal material. Therefore, in the electrochromic layer sandwiched between the transparent electrodes made of ITO, a region where a current is easily transmitted and a region where a current is not easily transmitted are generated, and color unevenness is likely to occur as discoloration (color development and decolorization) of the electrochromic layer.

The present invention has been made in view of such circumstances, and an object of the present invention is to provide an electrochromic sheet capable of performing color development and decolorization without delay. Another object of the present invention is to provide a laminate including the electrochromic sheet, a lens for spectacles, and spectacles including the lens for spectacles.

In order to solve the above-described problem, a configuration in which an auxiliary electrode which compensates for conductivity of the transparent electrode is used in combination has been studied. In general, the auxiliary electrode is formed of a metal material having a lower electrical resistance than the material of the transparent electrode. By adopting the configuration using the auxiliary electrode, it is possible to solve the problem of delay in discoloration described above.

On the other hand, in a lens for spectacles in which an electrochromic sheet is used as a material, a portion corresponding to an electrode is usually provided to protrude, unlike a normal lens for spectacles. Therefore, in a case of grinding the lens for spectacles, processing of the periphery of the protruding portion where the electrode is provided is complicated, and work efficiency is reduced.

In order to solve the above-described problem, an aspect of the present invention includes the following aspects.

### (Aspect 1)

An electrochromic sheet including: a first substrate; a second substrate; an electrochromic element sandwiched between the first substrate and the second substrate; and a sealing portion sandwiched between the first substrate and the second substrate, partitioning a colored region set between the first substrate and the second substrate, in which the electrochromic element includes a first transparent electrode provided on a side of the first substrate, a first auxiliary electrode disposed around the colored region and electrically connected to the first transparent electrode, a second transparent electrode provided on a side of the second substrate, a second auxiliary electrode disposed around the colored region and electrically connected to the second transparent electrode, and an electrochromic layer sandwiched between the first transparent electrode and the second transparent electrode, disposed in the colored region, and developing color by application of a voltage, the first auxiliary electrode has a strip-shaped first frame body surrounding a part of the electrochromic layer and a first lead-out portion protruding from the first frame body to an outside of the colored region, and a contour line of a connection portion between the first frame body and the first lead-out portion is a curve which is convex on a side of the colored region and has a curvature radius of 40 mm or more.

### (Aspect 2)

The electrochromic sheet according to the aspect 1, in which a width of the first lead-out portion toward the outside from the first frame body is 10 mm or less.

### (Aspect 3)

The electrochromic sheet according to the aspect 1 or 2, in which a contour line of a connection portion between the second frame body and the second lead-out portion is a curve which is convex on a side of the colored region and has a curvature radius of 40 mm or more.

### (Aspect 4)

The electrochromic sheet according to the aspect 3, in which a width of the second lead-out portion toward the outside from the second frame body is 10 mm or less.

### (Aspect 5)

The electrochromic sheet according to the aspect 1, in which the electrochromic layer includes a first electrochromic layer laminated on the first transparent electrode, a second electrochromic layer laminated on the second transparent electrode, and an electrolyte layer filling a space between the first electrochromic layer and the second electrochromic layer, the first electrochromic layer contains a material exhibiting coloration by an oxidation reaction, and the second electrochromic layer contains a material exhibiting coloration by a reduction reaction.

### (Aspect 6)

A laminate including: the electrochromic sheet according to the aspect 1; and a lens material having the electrochromic sheet laminated thereon.

### (Aspect 7)

A lens for spectacles, including: an electrochromic part obtained by cutting the electrochromic sheet according to the aspect 1 along an outer periphery of the first auxiliary electrode and the second auxiliary electrode; and a lens main body including the electrochromic part laminated thereon, in which the lens main body includes a protruding portion having the same shape in a plan view as the first lead-out portion.

### (Aspect 8)

Spectacles including: the lens for spectacles according to the aspect 7; and a frame holding the lens for spectacles, in which the first lead-out portion is electrically connected to the frame.

According to the present invention, it is possible to provide an electrochromic sheet capable of performing color development and decolorization without delay. In addition, it is possible to provide a laminate including the electrochromic sheet, a lens for spectacles, and spectacles including the lens for spectacles.

### <<Laminate and lens for spectacles>>

A manufacturing method of a lens using the EC sheet 150 will be described.

First, as shown in FIG. 7(a), the EC sheet 150 is bent under heating and thereby the EC sheet 150 is curved in accordance with a curvature of a target lens. The bending processing is performed by, for example, press molding or vacuum molding.

Next, as shown in FIG. 7(b), the curved EC sheet 150 is insert-molded as an insert product, and a lens material 119 is formed on a concave surface of the EC sheet 150 to obtain a laminate 160. The laminate 160 corresponds to "laminate" according to the present invention. The lens material 119 is processed as described later to be the lens main body 115.

The lens material 119 has visible light transmittance. As a material of the lens material 119, a thermoplastic resin known as a material of an optical member can be used.

In a case where the material of the lens material 119 is the same as or similar to the main material of the substrate (the first substrate 11 or the second substrate 12) in the EC sheet 150 in contact with the lens material 119, the EC sheet 150 and the lens material 119 are easily adhered to each other, which is preferable. In addition, in a case where the material of the substrate and the material of the lens material 119 are the same type or the same, a difference in refractive index between the substrate and the lens material 119 can be reduced, and scattering or reflection of light at an interface between the EC sheet 150 and the lens material 119 can be suppressed. The difference in refractive index between the substrate and the lens material 119 is preferably 0.2 or less, and more preferably 0.1 or less.

A thickness of the lens material 119 is, for example, preferably 1.5 mm or more and 20 mm or less. By setting the thickness of the lens material 119 to be within the above-described range, it is possible to achieve both high strength and reduction in weight of the obtained lens.

Next, the surface of the lens material 119 is polished, and the surfaces of the EC sheet 150 and the lens material 119 are subjected to a hard coating treatment and an antireflection treatment. Thereafter, a through-hole is formed in the sealing portion 40 at a position overlapping the first lead-out portion 332 and the second lead-out portion 342, and a conductive portion is formed in the through-hole.

The conductive portion can be formed of a conductive paste filled inside the through-hole or a conductive tubular member inserted into the through-hole. In addition, a known material can be appropriately applied as long as it is formed in the through-hole and is electrically connected to the first auxiliary electrode 33 (first lead-out portion 332) and the second auxiliary electrode 34 (second lead-out portion 342).

Next, as shown in FIG. 7(c), the laminate 160 is subjected to trimming to have a shape corresponding to the rim part 121 of the sunglasses 100 described above. In this case, the trimming of the periphery of the first lead-out portion 332 and the second lead-out portion 342 is performed using, for example, a rotating cylindrical grinding stone G. A curvature radius of the smallest grinding stone G used for the trimming is approximately 40 mm.

By such processing, the lens 110 which includes the EC part 111 obtained by cutting the EC sheet 150 along the outer periphery of the first auxiliary electrode 33 and the second auxiliary electrode 34 and the lens main body 115 on which the EC part 111 is laminated is obtained (see FIG. 1). The obtained lens 110 corresponds to "lens for spectacles" according to the present invention.

The lens material 119 included in the laminate 160 is processed into the lens main body 115 by trimming along the outer periphery of the first auxiliary electrode 33 and the second auxiliary electrode 34. The lens main body 115 has a protruding portion 115a having the same shape as the first lead-out portion 332 and the second lead-out portion 342 in a plan view.

The obtained lens 110 is combined with the frame 120 shown in FIG. 1. In this case, the first lead-out portion 332 and the second lead-out portion 342 of the EC part 111 are electrically connected to the frame 120 through each provided conductive portion. In the present embodiment, the first lead-out portion 332 and the second lead-out portion 342 are electrically connected to an external terminal (not shown) provided on the temple part 123 or the bridge part 122 of the frame 120, and are connected to the battery 126.

In this manner, the sunglasses 100 are obtained.

With the EC sheet 150 having the above-described configuration, the following effects can be obtained.

First, in an EC part 111X shown in FIG. 8, in a case where a battery is connected to the first conductive portion 51 and the second conductive portion 52 electrically connected to the transparent electrode (the first transparent electrode and the second transparent electrode) and a voltage is applied, a current flows directly from the first conductive portion 51 and the second conductive portion 52 to the transparent electrode.

In this case, in a path (represented by a reference numeral D1) which connects the first conductive portion 51 and the second conductive portion 52 at the shortest distance, the path is short and the electrical resistance is small, so that the current flows easily; and in a path (represented by a reference numeral D2) which connects the first conductive portion 51 and the second conductive portion 52 by bypassing, the current flows relatively difficultly as compared with the path D1. As a result, in the colored region AR, in a region far from the first conductive portion 51 and the second conductive portion 52, overlapping the path D2, the delay of discoloration is likely to occur as compared with a region overlapping the path D1.

On the other hand, as in the EC part 111 shown in FIG. 9, in a case where the EC sheet as a material has the auxiliary electrode (the first auxiliary electrode 33 and the second auxiliary electrode 34), the operation is performed as follows.

In the first auxiliary electrode 33, in a case where a voltage is applied to the first lead-out portion 332 through the conductive portion 51, first, the first lead-out portion 332 is energized toward the first frame body 331, and then, current flows from the first auxiliary electrode 33 to the first transparent electrode 31. Such a current is represented by a reference numeral C1.

Similarly, in the second auxiliary electrode 34, in a case where a voltage is applied from the external power to the second lead-out portion 342 through the second conductive portion 52, first, the second lead-out portion 342 is energized toward the second frame body 341, and then, current flows from the second auxiliary electrode 34 to the second transparent electrode 32. Such a current is represented by a reference numeral C2.

In this case, the first auxiliary electrode 33 covers most of the first transparent electrode 31 on one end side in a short direction, and the second auxiliary electrode 34 covers most of the second transparent electrode 32 on the other end side in a short direction. Therefore, in a case where the voltage is applied, the EC part 111 can synchronize the timing of energization in the entire colored region AR through the auxiliary electrodes, and can suppress the delay of discoloration.

In addition, the first auxiliary electrode 33 and the second auxiliary electrode 34 are provided at the peripheral edge portion of the colored region AR, and are not present at the center of the colored region AR. Therefore, the color development of the colored region AR is not hindered.

Furthermore, in the EC sheet 150, curvature radii of positions of reference numerals A1 to A4 shown in FIGS. 5 and 6 are set to be 40 mm or more, which is equal to or more than the curvature radius of the grinding stone G used for the trimming. Therefore, the contour of the first auxiliary electrode 33 and the second auxiliary electrode 34 can be traced by the grinding stone G used for the trimming, and processing as designed can be easily performed without the need for cutting with a drill.

With the electrochromic sheet having the above-described configuration, since the first auxiliary electrode 33 and the second auxiliary electrode 34 are provided, the color development and the decolorization can be performed without delay. In addition, by setting the shape of the periphery of the lead-out portions of the first auxiliary electrode 33 and the second auxiliary electrode 34 to the curve having a curvature radius of 40 mm or more, it is easy to process the desired lens shape.

In addition, with the laminate, the lens for spectacles, and the spectacles having the above-described configurations, since the electrochromic sheet is provided, the color development and the decolorization can be performed without delay.

### (Third embodiment)

The transparent electrode used in the configuration of Patent Document 1 described above is formed of a material having high electrical conductivity and high visible light transmittance. As the material of the transparent electrode, an oxide such as indium tin oxide (ITO) has been known.

On the other hand, the above-described material has a high electrical resistance as compared with a metal material. Therefore, in the electrochromic layer sandwiched between the transparent electrodes made of ITO, a region where a current is easily transmitted and a region where a current is not easily transmitted are generated, and color unevenness is likely to occur as discoloration (color development and decolorization) of the electrochromic layer.

The present invention has been made in view of such circumstances, and an object of the present invention is to provide an electrochromic sheet capable of performing color development and decolorization without delay. Another object of the present invention is to provide a laminate including the electrochromic sheet, a lens for spectacles, and spectacles including the lens for spectacles.

In order to solve the above-described problem, a configuration in which an auxiliary electrode which compensates for conductivity of the transparent electrode is used in combination has been studied. In general, the auxiliary electrode is formed of a metal material having a lower electrical resistance than the material of the transparent electrode. By adopting the configuration using the auxiliary electrode, it is possible to solve the problem of delay in discoloration described above.

On the other hand, in studying the auxiliary electrode, it is found that the auxiliary electrode does not exhibit the expected function depending on the shape of the auxiliary electrode to be formed, and color unevenness occurs. As a result of intensive studies based on such findings, the present invention has been completed.

In order to solve the above-described problem, an aspect of the present invention includes the following aspects.

### (Aspect 1)

An electrochromic sheet including: a first substrate; a second substrate; an electrochromic element sandwiched between the first substrate and the second substrate; and a sealing portion sandwiched between the first substrate and the second substrate, partitioning a colored region set between the first substrate and the second substrate, in which the electrochromic element includes a first transparent electrode provided on a side of the first substrate, a first auxiliary electrode disposed around the colored region and electrically connected to the first transparent electrode, a second transparent electrode provided on a side of the second substrate, a second auxiliary electrode disposed around the colored region and electrically connected to the second transparent electrode, and an electrochromic layer sandwiched between the first transparent electrode and the second transparent electrode, disposed in the colored region, and developing color by application of a voltage, the first auxiliary electrode has a strip-shaped first frame body surrounding a part of the electrochromic layer and a first lead-out portion protruding from the first frame body to an outside of the colored region, and the second auxiliary electrode has a strip-shaped second frame body surrounding a part of the electrochromic layer and a second lead-out portion protruding from the second frame body to an outside of the colored region, and in a case where a smallest imaginary rectangle is assumed among rectangles circumscribing the colored region in a plan view, the first lead-out portion is provided on one end side in one side direction of the imaginary rectangle, the second lead-out portion is provided on the other end side in the one side direction, and the first lead-out portion and the second lead-out portion are provided to be separated from each other by 40% or more of a length of the one side in the one side direction.

### (Aspect 2)

The electrochromic sheet according to the aspect 1, in which the first lead-out portion is provided in a region from one end of the one side to 30% of the length, and the second lead-out portion is provided in a region from the other end of the one side to 30% of the length.

### (Aspect 3)

The electrochromic sheet according to the aspect 2, in which the first lead-out portion is provided in a region from the one end to 10% of the length, and the second lead-out portion is provided in a region from the other end to 10% of the length.

### (Aspect 4)

The electrochromic sheet according to the aspect 1, in which the first lead-out portion and the second lead-out portion are provided in a region from one end to a center of the imaginary rectangle in a direction orthogonal to the one side of the imaginary rectangle.

### (Aspect 5)

The electrochromic sheet according to the aspect 1, in which the electrochromic layer includes a first electrochromic layer laminated on the first transparent electrode, a second electrochromic layer laminated on the second transparent electrode, and an electrolyte layer filling a space between the first electrochromic layer and the second electrochromic layer, the first electrochromic layer contains a material exhibiting coloration by an oxidation reaction, and the second electrochromic layer contains a material exhibiting coloration by a reduction reaction.

### (Aspect 6)

A laminate including: the electrochromic sheet according to the aspect 1; and a lens material having the electrochromic sheet laminated thereon.

### (Aspect 7)

A lens for spectacles, including: an electrochromic part obtained by cutting the electrochromic sheet according to the aspect 1 along an outer periphery of the first auxiliary electrode and the second auxiliary electrode; and a lens main body including the electrochromic part laminated thereon, in which the lens main body includes a protruding portion having the same shape in a plan view as the first lead-out portion and the second lead-out portion.

### (Aspect 8)

Spectacles including: the lens for spectacles according to the aspect 7; and a frame holding the lens for spectacles, in which the first lead-out portion and the second lead-out portion are electrically connected to the frame.

According to the present invention, it is possible to provide an electrochromic sheet capable of performing color development and decolorization without delay. In addition, it is possible to provide a laminate including the electrochromic sheet, a lens for spectacles, and spectacles including the lens for spectacles.

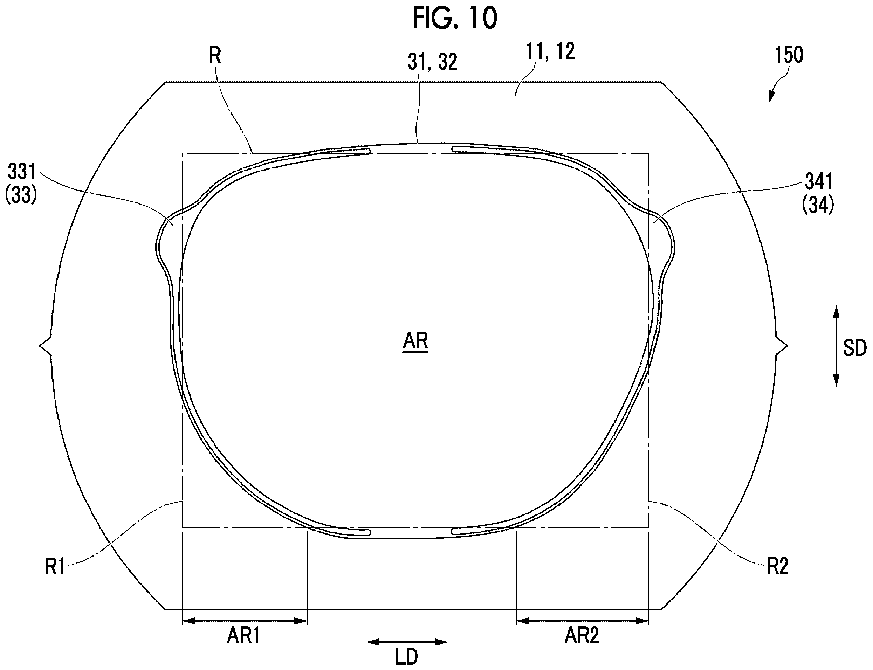

FIG. 10 is a plan view of the EC sheet 150. As shown in FIG. 10, in a case where the smallest rectangle (imaginary rectangle R) is assumed among rectangles circumscribing the colored region AR in a plan view, the first auxiliary electrode 33 is provided on one end side in one side direction of the imaginary rectangle R, and the second auxiliary electrode 34 is provided on one end side in the one side direction. In FIG. 10, the "one side of the imaginary rectangle" corresponds to a long side of the imaginary rectangle R. That is, in FIG. 10, the "one side direction" is a long direction of the imaginary rectangle, and the "direction orthogonal to one side" is a short direction of the imaginary rectangle R.

It is preferable that the first lead-out portion 332 is provided in a region AR1 from one end R1 of the imaginary rectangle R in a long direction LD to 30% of the length of the long side. Similarly, it is preferable that the second lead-out portion 342 is provided in a region AR2 from the other end R2 of the imaginary rectangle R in the long direction to 30% of the length of the long side. That is, in a case where a length of one side of the imaginary rectangle R (here, a length in the long direction) is denoted by L, the first lead-out portion 332 and the second lead-out portion 342 are provided at positions separated by 0.4L or more. The first lead-out portion 332 and the second lead-out portion 342 are preferably provided at positions separated by 0.6L or more, and more preferably provided at positions separated by 0.8L or more.

In addition, it is preferable that the region AR1 is a region from the one end R1 to 10% of the length of the long side, and the region AR2 is a region from the other end R2 to 10% of the length of the long side.

Furthermore, it is preferable that, in a short direction SD of the imaginary rectangle R, the first lead-out portion 332 and the second lead-out portion 342 are provided in a region from one end to the center (50% of the entire short direction) of the short direction SD. It is more preferable that the first lead-out portion 332 and the second lead-out portion 342 are provided in a region of 20% to 50% of the entire short direction from one end of the imaginary rectangle R in the short direction SD.

### (Electrochromic layer)

As shown in FIGS. 2 and 3, the EC layer 35 includes a first electrochromic layer 351 (first EC layer 351) which is laminated on the first transparent electrode 31, a second electrochromic layer 352 (second EC layer 352) which is laminated on the second transparent electrode 32, and an electrolyte layer 353 which fills a space between the first EC layer 351 and the second EC layer 352.

### (First electrochromic layer)

The first EC layer 351 is a layer in which color changes, and contains a material which is colored by an oxidation reaction as a main material. Examples of the material which is colored by an oxidation reaction include known materials which exhibit electrochromism and are used for an EC element, including a polymerized substance of a radically polymerizable compound having a triarylamine structure, a bisacridane compound, triphenylamine, benzidine, a Prussian blue-type complex, nickel oxide, and the like.

Examples of the polymerized substance of the radically polymerizable compound having a triarylamine structure include substances described in Japanese Unexamined Patent Application Publication No. 2016-45464, Japanese Unexamined Patent Application Publication No. 2020-138925, and the like.

As the material which is colored by an oxidation reaction, one of these materials may be used, or two or more thereof may be used in combination.

An average thickness of the first EC layer 351 is preferably 0.1 µm or more and 30 µm or less. The average thickness of the first EC layer 351 is more preferably 0.4 µm or more and 10 µm or less.

### (Second electrochromic layer)

The second EC layer 352 is a layer in which color changes, and contains a material which is colored by a reduction reaction as a main material. Examples of the material which is colored by a reduction reaction include known materials which exhibit electrochromism and are used for an EC element, including inorganic electrochromic compounds such as tungsten oxide, molybdenum oxide, iridium oxide, and titanium oxide, organic electrochromic compounds such as a viologen-based compound and a dipyridine-based compound, and the like.

As the material which is colored by a reduction reaction, one of these materials may be used, or two or more thereof may be used in combination.

A color (color 1) that the first EC layer 351 is colored by an oxidation reaction and a color (color 2) that the second EC layer 352 is colored by a reduction reaction may have the same tone or may have different tones. In a case where the color 1 and the color 2 have the same tone, the maximum color optical density can be increased, and thus the contrast can be improved. In a case where the color 1 and the color 2 have different tones, the color development of the EC element 30 is a color after mixing the color 1 and the color 2.

By coloring both the first EC layer 351 and the second EC layer 352, redox coloring agents of the first EC layer 351 and the second EC layer 352 can be simultaneously developed. Therefore, the color development speed can be improved.

An average thickness of the second EC layer 352 is preferably 0.2 µm or more and 5.0 µm or less. The average thickness of the second EC layer 352 is more preferably 1.0 µm or more and 4.0 µm or less. In a case where the average thickness of the second EC layer 352 is 0.2 µm or more, the color optical density can be increased. In a case where the average thickness of the second EC layer 352 is 5.0 µm or less, the manufacturing cost can be reduced. In a case where the average thickness of the second EC layer 352 is 5.0 µm or less, a decrease in visibility due to coloration is less likely to occur.

### (Electrolyte layer)

The electrolyte layer 353 fills a space between the first EC layer 351 and the second EC layer 352. The electrolyte layer 353 contains an electrolyte having ion conductivity.

Examples of the electrolyte include inorganic ionic salts such as an alkali metal salt and an alkaline earth metal salt; and supporting salts such as a quaternary ammonium salt, acids, and alkalis. Examples of a counterion (anion) of the electrolyte include a halogen, a thiocyanate ion (SCN⁻), a chlorate ion (ClO₃⁻), a perchlorate ion (ClO₄⁻), a tetrafluoroborate ion (BF₄⁻), a hexafluorophosphate ion (PF₆⁻), a trifluoromethanesulfonate ion (CF₃SO₃⁻), a trifluoroacetate ion (CF₃COO⁻), and a bisfluorosulfonium imide (N(SO₂F)₂⁻).

Specific examples of such an electrolyte include LiClO₄, LiBF₄, LiAsF₆, LiPF₆, LiCF₃SO₃, LiCF₃COO, KCl, NaClO₃, NaCl, NaBF₄, NaSCN, KBF₄, Mg(ClO₄)₂, and Mg(BF₄)₂. As the electrolyte, one of these materials may be used, or two or more thereof may be used in combination.

As the material of the electrolyte, an ionic liquid can also be used. Among ionic liquids, an organic ionic liquid has a molecular structure which exhibits a liquid in a wide temperature range including room temperature, and thus is easy to handle.

An average thickness of the electrolyte layer 353 is preferably 20 µm or more and 100 µm or less. The average thickness of the electrolyte layer 353 is more preferably 30 µm or more and 80 µm or less, and still more preferably 30 µm or more and 70 µm or less.

### [Sealing portion]

The sealing portion 40 is disposed between the first substrate 11 and the second substrate 12, and partitions the colored region AR. A material of the sealing portion 40 is not particularly limited as long as it is an insulating material having transparency. Examples of the material of the sealing portion 40 include resin materials such as an acrylic resin and an epoxy resin; and inorganic oxides such as a silicon oxide (SiO₂), a silicon oxynitride (SiON), and an aluminum oxide (Al₂O₃).

An average thickness of the sealing portion 40 is adjusted according to an average thickness of the EC element 30. The average thickness of the sealing portion 40 is preferably 20 µm or more and 100 µm or less, more preferably 30 µm or more and 80 µm or less, and still more preferably 40 µm or more and 60 µm or less.

### <<Laminate and lens for spectacles>>

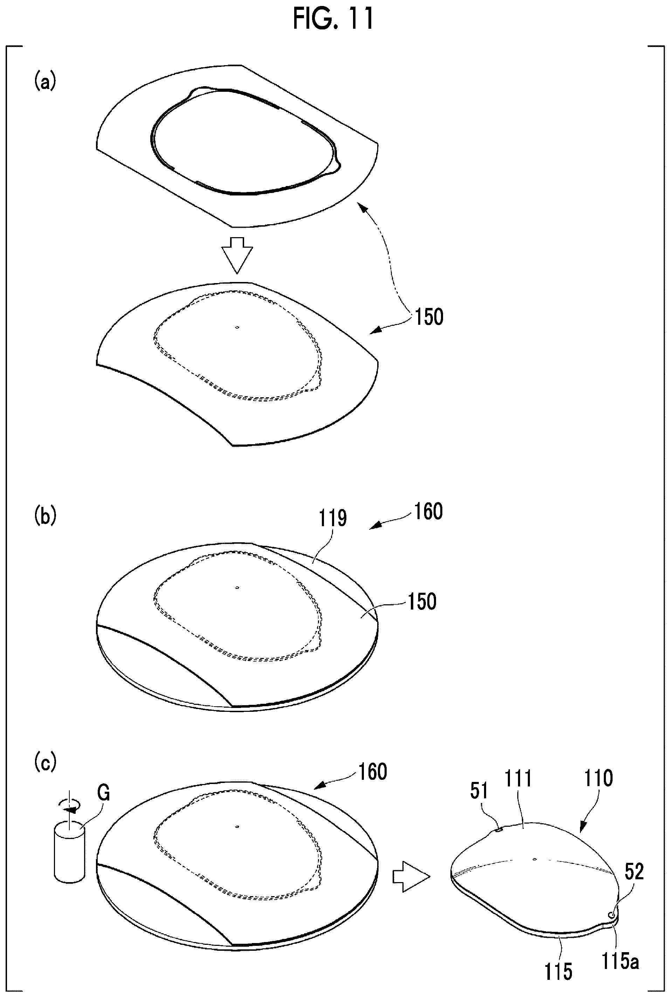

FIG. 11 is an explanatory view representing a manufacturing method of a lens using the EC sheet 150.

First, as shown in FIG. 11(a), the EC sheet 150 is bent under heating and thereby the EC sheet 150 is curved in accordance with a curvature of a target lens. The bending processing is performed by, for example, press molding or vacuum molding.

Next, as shown in FIG. 11(b), the curved EC sheet 150 is insert-molded as an insert product, and a lens material 119 is formed on a concave surface of the EC sheet 150 to obtain a laminate 160. The laminate 160 corresponds to "laminate" according to the present invention. The lens material 119 is processed as described later to be the lens main body 115.

The lens material 119 has visible light transmittance. As a material of the lens material 119, a thermoplastic resin known as a material of an optical member can be used.

In a case where the material of the lens material 119 is the same as or similar to the main material of the substrate (the first substrate 11 or the second substrate 12) in the EC sheet 150 in contact with the lens material 119, the EC sheet 150 and the lens material 119 are easily adhered to each other, which is preferable. In addition, in a case where the material of the substrate and the material of the lens material 119 are the same type or the same, a difference in refractive index between the substrate and the lens material 119 can be reduced, and scattering or reflection of light at an interface between the EC sheet 150 and the lens material 119 can be suppressed. The difference in refractive index between the substrate and the lens material 119 is preferably 0.2 or less, and more preferably 0.1 or less.

A thickness of the lens material 119 is, for example, preferably 1.5 mm or more and 20 mm or less. By setting the thickness of the lens material 119 to be within the above-described range, it is possible to achieve both high strength and reduction in weight of the obtained lens.

Next, the surface of the lens material 119 is polished, and the surfaces of the EC sheet 150 and the lens material 119 are subjected to a hard coating treatment and an antireflection treatment. Thereafter, a through-hole is formed in the sealing portion 40 at a position overlapping the first lead-out portion 332 and the second lead-out portion 342, and a conductive portion is formed in the through-hole.

The conductive portion can be formed of a conductive paste filled inside the through-hole or a conductive tubular member inserted into the through-hole. In addition, a known material can be appropriately applied as long as it is formed in the through-hole and is electrically connected to the first auxiliary electrode 33 (first lead-out portion 332) and the second auxiliary electrode 34 (second lead-out portion 342).

Next, as shown in FIG. 11(c), the laminate 160 is subjected to trimming to have a shape corresponding to the rim part 121 of the sunglasses 100 described above. In this case, the trimming of the periphery of the first lead-out portion 332 and the second lead-out portion 342 is performed using, for example, a rotating cylindrical grinding stone G.

By such processing, the lens 110 which includes the EC part 111 obtained by cutting the EC sheet 150 along the outer periphery of the first auxiliary electrode 33 and the second auxiliary electrode 34 and the lens main body 115 on which the EC part 111 is laminated is obtained (see FIG. 1). The obtained lens 110 corresponds to "lens for spectacles" according to the present invention.

The lens material 119 included in the laminate 160 is processed into the lens main body 115 by trimming along the outer periphery of the first auxiliary electrode 33 and the second auxiliary electrode 34. The lens main body 115 has a protruding portion 115a having the same shape as the first lead-out portion 332 and the second lead-out portion 342 in a plan view.

The obtained lens 110 is combined with the frame 120 shown in FIG. 1. In this case, the first lead-out portion 332 and the second lead-out portion 342 of the EC part 111 are electrically connected to the frame 120 through each provided conductive portion. In the present embodiment, the first lead-out portion 332 and the second lead-out portion 342 are electrically connected to an external terminal (not shown) provided on the temple part 123 or the bridge part 122 of the frame 120, and are connected to the battery 126.

In this manner, the sunglasses 100 are obtained.

With the EC sheet 150 having the above-described configuration, the following effects can be obtained.

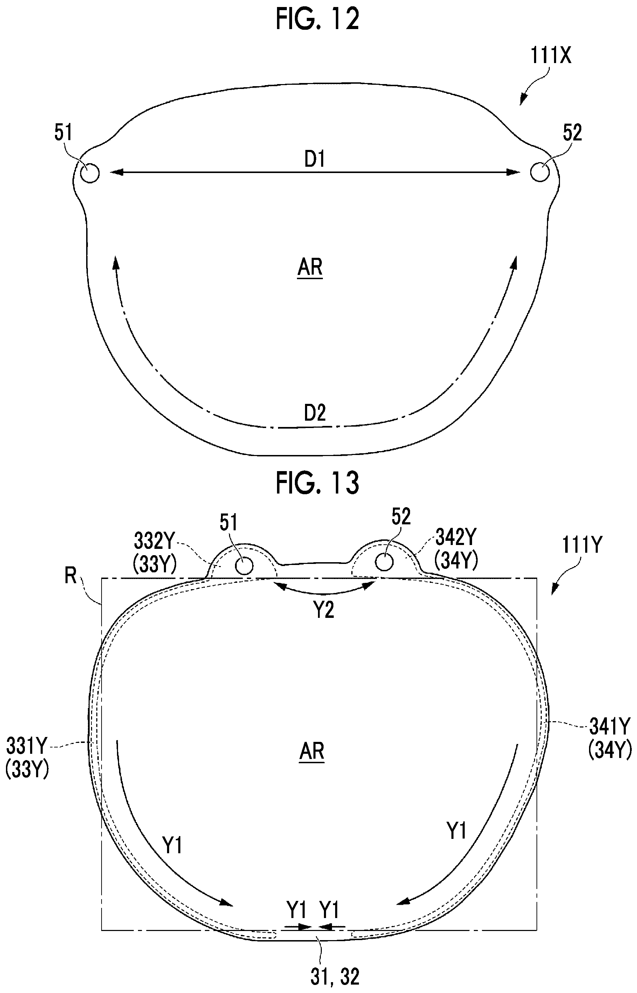

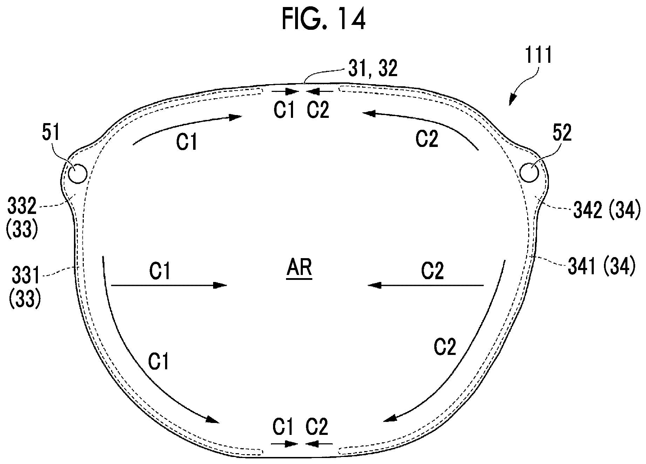

FIGS. 12 to 14 are explanatory diagrams representing effects of the auxiliary electrode (the first auxiliary electrode and the second auxiliary electrode). FIG. 12 is an EC part of a lens for spectacles, manufactured by the above-described method using an EC sheet not having an auxiliary electrode. FIG. 13 is an EC part of a lens for spectacles, manufactured by the above-described method using an EC sheet having auxiliary electrodes in which the lead-out portions are close to each other. FIG. 14 shows the EC part (EC part 111) of the lens for spectacles, manufactured by the above-described method using the EC sheet 150.

First, in an EC part 111X shown in FIG. 12, in a case where a battery is connected to the first conductive portion 51 and the second conductive portion 52 electrically connected to the transparent electrode (the first transparent electrode and the second transparent electrode) and a voltage is applied, a current flows directly from the first conductive portion 51 and the second conductive portion 52 to the transparent electrode.

In this case, in a path (represented by a reference numeral D1) which connects the first conductive portion 51 and the second conductive portion 52 at the shortest distance, the path is short and the electrical resistance is small, so that the current flows easily; and in a path (represented by a reference numeral D2) which connects the first conductive portion 51 and the second conductive portion 52 by bypassing, the current flows relatively difficultly as compared with the path D1. As a result, in the colored region AR, in a region far from the first conductive portion 51 and the second conductive portion 52, overlapping the path D2, the delay of discoloration is likely to occur as compared with a region overlapping the path D1.

In addition, as in an EC part 111Y shown in FIG. 13, in the EC sheet as a material, in a case where the lead-out portions of the auxiliary electrodes are not provided to be separated by 40% or more of the length of the imaginary rectangle R in the long direction and are close to each other, the operation is as follows.

In a case where a battery is connected to the conductive portions 51 and 52 provided in the respective lead-out portions to apply a voltage, in a first auxiliary electrode 33Y, a first frame body 331Y is energized from a first lead-out portion 332Y, and current flows from the first frame body 331Y to a first transparent electrode 31. In addition, in a second auxiliary electrode 34Y, a second frame 341Y is energized from a second lead-out portion 342Y, and current flows from the second frame body 341Y to a second transparent electrode 32. Such a current is represented by a reference numeral Y1.

On the other hand, in the first auxiliary electrode 33Y, the first transparent electrode 31 is energized from the first frame body 331Y in the vicinity of the first lead-out portion 332Y. Similarly, in the second auxiliary electrode 34Y, the second transparent electrode 32 is also energized from the second frame body 341Y in the vicinity of the second lead-out portion 342Y. Such a current is represented by a reference numeral Y2.

In the EC part 111Y, since the lead-out portions are close to each other, the current Y1 is more likely to flow than the current Y2. As a result, in the colored region AR, discoloration due to the current Y1 is predominant, and discoloration due to the current Y2 is likely to be delayed.

On the other hand, as in the EC part 111 shown in FIG. 14, in a case where the EC sheet as a material has the auxiliary electrodes (the first auxiliary electrode 33 and the second auxiliary electrode 34) and the lead-out portions of the auxiliary electrodes are provided to be separated by 40% or more of the length of the long side in the long direction of the imaginary rectangle R, the operation is as follows.

In the first auxiliary electrode 33, in a case where a voltage is applied to the first lead-out portion 332 through the conductive portion 51, first, the first lead-out portion 332 is energized toward the first frame body 331, and then, current flows from the first auxiliary electrode 33 to the first transparent electrode 31. Such a current is represented by a reference numeral C1.

Similarly, in the second auxiliary electrode 34, in a case where a voltage is applied from the external power to the second lead-out portion 342 through the second conductive portion 52, first, the second lead-out portion 342 is energized toward the second frame body 341, and then, current flows from the second auxiliary electrode 34 to the second transparent electrode 32. Such a current is represented by a reference numeral C2.

In the EC part 111, since the lead-out portions are appropriately spaced apart from each other, the current C1 and the current C2 are likely to flow equally. As a result, in the colored region AR, the delay between discoloration due to the current C1 and discoloration due to the current C2 is less likely to occur.

In this case, the first auxiliary electrode 33 covers most of the first transparent electrode 31 on one end side in a short direction, and the second auxiliary electrode 34 covers most of the second transparent electrode 32 on the other end side in a short direction. Therefore, in a case where the voltage is applied, the EC part 111 can synchronize the timing of energization in the entire colored region AR through the auxiliary electrodes, and can suppress the delay of discoloration.

In addition, the first auxiliary electrode 33 and the second auxiliary electrode 34 are provided at the peripheral edge portion of the colored region AR, and are not present at the center of the colored region AR. Therefore, the color development of the colored region AR is not hindered.

With the electrochromic sheet having the above-described configuration, since the first auxiliary electrode 33 and the second auxiliary electrode 34 are provided, the color development and the decolorization can be performed without delay.

In addition, with the laminate, the lens for spectacles, and the spectacles having the above-described configurations, since the electrochromic sheet is provided, the color development and the decolorization can be performed without delay.

### (Fourth embodiment)

The transparent electrode used in the configuration of Patent Document 1 described above is formed of a material having high electrical conductivity and high visible light transmittance. As the material of the transparent electrode, an oxide such as indium tin oxide (ITO) has been known.

On the other hand, the above-described material has a high electrical resistance as compared with a metal material. Therefore, in the electrochromic layer sandwiched between the transparent electrodes made of ITO, a region where a current is easily transmitted and a region where a current is not easily transmitted are generated, and color unevenness is likely to occur as discoloration (color development and decolorization) of the electrochromic layer.

The present invention has been made in view of such circumstances, and an object of the present invention is to provide a laminate including an electrochromic sheet capable of performing color development and decolorization without delay, a lens for spectacles, and spectacles including the lens for spectacles.

In order to solve the above-described problem, an aspect of the present invention includes the following aspects.

### (Aspect 1)

A laminate including: an electrochromic sheet; and a lens material having the electrochromic sheet laminated thereon, in which the electrochromic sheet includes a first substrate, a second substrate, an electrochromic element sandwiched between the first substrate and the second substrate, a sealing portion sandwiched between the first substrate and the second substrate, partitioning a colored region set between the first substrate and the second substrate, and a terminal portion which is electrically connected to the electrochromic element and is provided on a surface of the first substrate or the second substrate, the electrochromic element includes a first transparent electrode provided on a side of the first substrate, a first auxiliary electrode disposed around the colored region and electrically connected to the first transparent electrode, a second transparent electrode provided on a side of the second substrate, a second auxiliary electrode disposed around the colored region and electrically connected to the second transparent electrode, and an electrochromic layer sandwiched between the first transparent electrode and the second transparent electrode, disposed in the colored region, and developing color by application of a voltage, the terminal portion includes a first terminal portion which is electrically connected to the first auxiliary electrode and a second terminal portion which is electrically connected to the second auxiliary electrode, the first terminal portion includes a first conductive portion which penetrates the first substrate or the second substrate and is electrically connected to the first auxiliary electrode, and a first terminal which is provided on a surface of the first substrate or the second substrate and connected to the first conductive portion, and the second terminal portion includes a second conductive portion which penetrates the first substrate or the second substrate and is electrically connected to the second auxiliary electrode, and a second terminal which is provided on a surface of the first substrate or the second substrate and is connected to the second conductive portion.

### (Aspect 2)

The laminate according to the aspect 1, in which the terminal portion further includes an external connection terminal which is connected to an external device.

### (Aspect 3)

The laminate according to the aspect 1 or 2, in which the electrochromic layer includes a first electrochromic layer laminated on the first transparent electrode, a second electrochromic layer laminated on the second transparent electrode, and an electrolyte layer filling a space between the first electrochromic layer and the second electrochromic layer, the first electrochromic layer contains a material exhibiting coloration by an oxidation reaction, and the second electrochromic layer contains a material exhibiting coloration by a reduction reaction.

### (Aspect 4)

A lens for spectacles, including: an electrochromic part obtained by cutting the electrochromic sheet according to the aspect 1 along an outer periphery of the first auxiliary electrode and the second auxiliary electrode; and a lens main body including the electrochromic part laminated thereon.

### (Aspect 5)

Spectacles including: the lens for spectacles according to the aspect 4; and a frame holding the lens for spectacles.

According to the present invention, it is possible to provide a laminate including an electrochromic sheet capable of performing color development and decolorization without delay, a lens for spectacles, and spectacles including the lens for spectacles.

### <<Laminate and electrochromic sheet>>

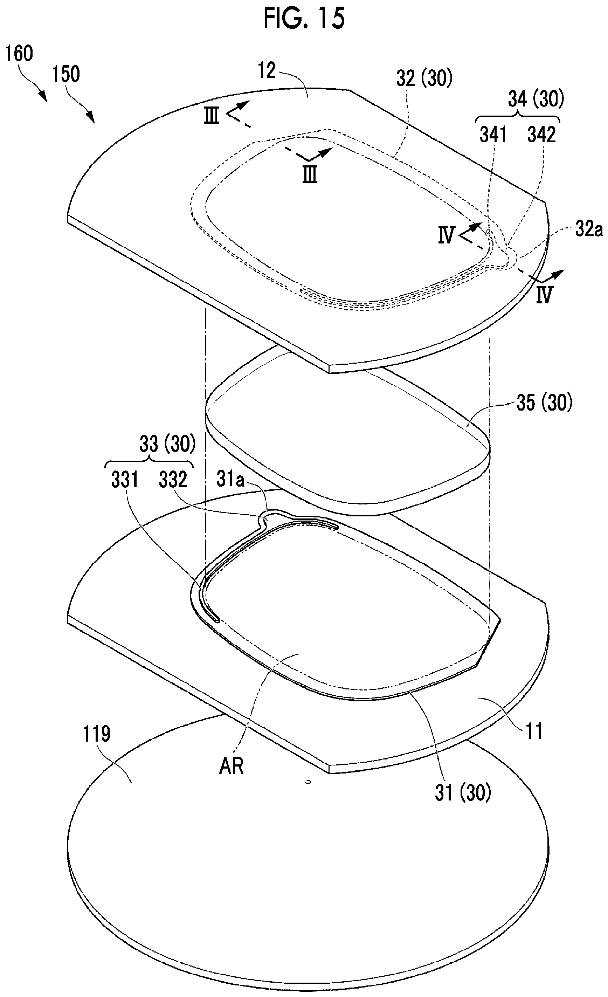

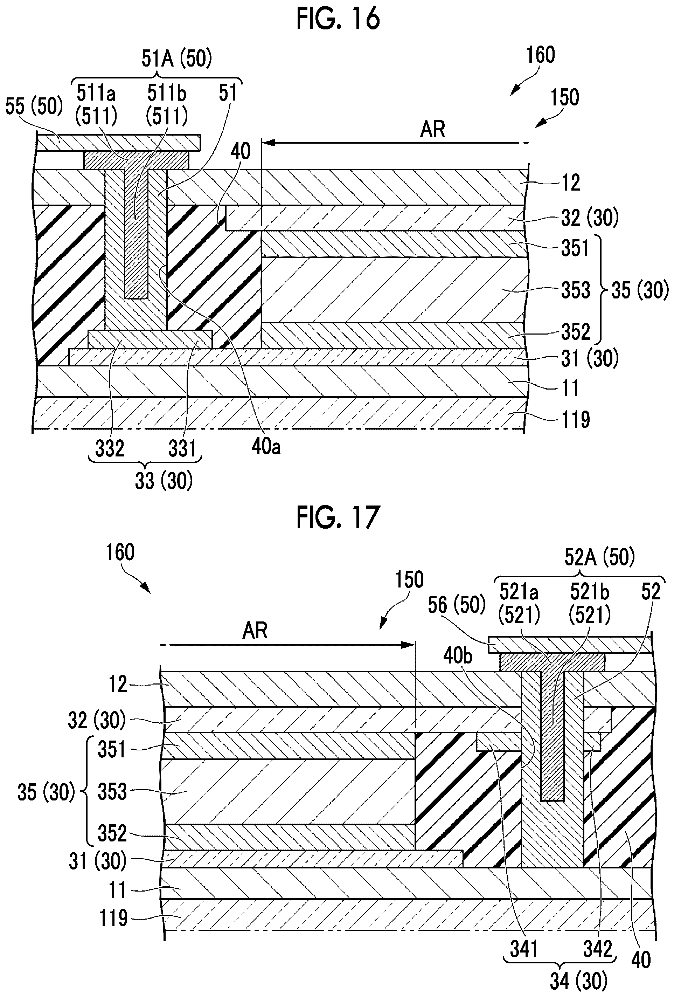

FIG. 15 is an exploded perspective view of the laminate 160, FIG. 16 is a partial cross-sectional view taken along a line III-III of FIG. 15, and FIG. 17 is a partial cross-sectional view taken along a line IV-IV of FIG. 15. The EC sheet 150 is used as a material for a lens for spectacles described later.

As shown in FIGS. 15 to 17, the laminate 160 includes an electrochromic sheet 150 (EC sheet 150) and a lens material 119 on which the EC sheet 150 is laminated.

The EC sheet 150 has a first substrate 11, a second substrate 12, an electrochromic element 30 (EC element 30), a sealing portion 40, and a terminal portion 50. In FIG. 15, the sealing portion 40 and the terminal portion 50 are not shown.

The first substrate 11 and the second substrate 12 sandwich the EC element 30 and the sealing portion 40. In addition, the sealing portion 40 is disposed around the EC element 30 between the first substrate 11 and the second substrate 12, and partitions a space between the first substrate 11 and the second substrate 12. The region partitioned by the sealing portion 40 is a colored region AR in which color changes by application of a voltage.

### [First substrate and second substrate]

The first substrate 11 and the second substrate 12 are outermost layers of the EC sheet 150. The first substrate 11 and the second substrate 12 are disposed to face each other and have a function as a protective layer which protects the EC element 30 and the like.

The first substrate 11 and the second substrate 12 have visible light transmittance. In the present specification, a term "transparent" may be used to refer to having visible light transmittance. In addition, the visible light transmittance may be referred to as "transparency". The first substrate and the second substrate 12 may be colorless or colored as long as they have transparency.

The first substrate 11 and the second substrate 12 contain a thermoplastic resin having transparency as a main material. Examples of such a resin include an acrylic resin, a polystyrene resin, a polyethylene resin, a polypropylene resin, a polyester resin (polyethylene terephthalate (PET), polyethylene naphthalate (PEN), and the like), a polycarbonate resin, a polyamide resin, a cycloolefin resin, a vinyl chloride resin, a polyacetal resin, and triacetyl cellulose (TAC).

As a material of the first substrate 11 and the second substrate 12, one of the above-described resins may be used, or two or more thereof may be used in combination. As the material of the first substrate 11 and the second substrate 12, a polycarbonate resin or a polyamide resin is preferable.

In addition, the material of the first substrate 11 and the second substrate 12 may contain a known filler or additive as long as they have transparency. In addition, the first substrate 11 and the second substrate 12 may be a single layer or a laminate.

A refractive index of the first substrate 11 and the second substrate 12 at a wavelength of 589 nm is preferably 1.3 or more and 1.8 or less, and more preferably 1.4 or more and 1.65 or less. By setting the refractive index of the first substrate 11 and the second substrate 12 to be within the range, the function of the electrochromic element 30 can be enhanced.

An average thickness of the first substrate 11 and the second substrate 12 is, for example, 0.05 mm or more and 10.0 mm or less, preferably 0.3 mm or more and 5.0 mm or less.

### [Electrochromic element]

The EC element 30 undergoes discoloration (color development and decolorization) due to electrochromism generated by the application of a voltage. The EC element 30 includes a first transparent electrode 31, a second transparent electrode 32, a first auxiliary electrode 33, a second auxiliary electrode 34, and an electrochromic layer 35 (EC layer 35).

### (First transparent electrode and second transparent electrode)

The first transparent electrode 31 is provided on the first substrate 11 side of the EC element 30 and is formed on a surface of the first substrate 11 on the second substrate 12 side. In addition, the second transparent electrode 32 is provided on the second substrate 12 side of the EC element 30 and is formed on a surface of the second substrate 12 on the first substrate 11 side.

In FIG. 15, the first transparent electrode 31 has a portion 31a which protrudes similarly to a first lead-out portion 332 at a position overlapping the first lead-out portion 332 described later, but the portion 31a may not be provided. Similarly, the second transparent electrode 32 has a portion 32a which protrudes similarly to a second lead-out portion 342 is provided at a position overlapping the second lead-out portion 342 described later, but the portion 32a may not be provided.

The first transparent electrode 31 and the second transparent electrode 32 have transparency. Examples of a material of the first transparent electrode 31 and the second transparent electrode 32 include oxides such as ITO, F-doped tin oxide (FTO), antimony tin oxide (ATO), indium zinc oxide (IZO), In₂O₃, SnO₂, Sb-containing SnO₂, and Al-containing ZnO; Au, Pt, Ag, Cu, and alloys containing these substances. As the material of the first transparent electrode 31 and the second transparent electrode 32, one of these materials may be used, or two or more thereof may be used in combination.

A thickness of the first transparent electrode 31 and the second transparent electrode 32 is adjusted such that the required transparency is ensured and an electrical resistance value capable of appropriately applying a voltage to the EC layer 35 is obtained. In a case where ITO is used as the material of the first transparent electrode 31 and the second transparent electrode 32, average thicknesses of the first transparent electrode 31 and the second transparent electrode 32 are, for example, each independently 50 nm or more and 200 nm or less, preferably 50 nm or more and 150 nm or less, and more preferably 60 nm or more and 130 nm or less.

### (First auxiliary electrode and second auxiliary electrode)

The first auxiliary electrode 33 is disposed around the colored region AR in a peripheral edge portion of the first transparent electrode 31 and is electrically connected to the first transparent electrode 31. The first auxiliary electrode 33 includes a strip-shaped first frame body 331 and a first lead-out portion 332 which protrudes from the first frame body 331 to the outside of the colored region AR.

The first frame body 331 surrounds a part of the EC layer 35, that is, a part of the colored region AR. The first frame body 331 is curved in a plan view, but the present invention is not limited thereto. The first frame body 331 is provided at a position surrounding a periphery of the lens 110 in a case of being used as the lens 110. A width of the first frame body 331 is, for example, preferably 0.1 mm or more and 1.0 mm or less, and more preferably 0.3 mm or more and 1.0 mm or less.

The first lead-out portion 332 is provided at a position which is biased to one end side of the first frame body 331 from a center of the first frame body 331 in a plan view. The first lead-out portion 332 is provided at a position near the bridge part 122 or the temple part 123 in the frame 120 in a case of being used as the lens 110.

The second auxiliary electrode 34 is disposed around the colored region AR in a surface of a peripheral edge portion of the second transparent electrode 32 and is electrically connected to the second transparent electrode 32. The second auxiliary electrode 34 includes a strip-shaped second frame body 341 and a second lead-out portion 342 which protrudes from the second frame body 341 to the outside of the colored region AR.

The second frame body 341 surrounds a part of the EC layer 35, that is, a part of the colored region AR. The second frame body 341 is curved in a plan view, but the present invention is not limited thereto. The second frame body 341 is provided at a position surrounding a periphery of the lens 110 in a case of being used as the lens 110. A width of the second frame body 341 is, for example, preferably 0.1 mm or more and 1.0 mm or less, and more preferably 0.3 mm or more and 1.0 mm or less.

The second lead-out portion 342 is provided at a position which is biased to one end side of the second frame body 341 from a center of the second frame body 341 in a plan view. The second lead-out portion 342 is provided at a position near the bridge part 122 or the temple part 123 in the frame 120 in a case of being used as the lens 110.

The first auxiliary electrode 33 and the second auxiliary electrode 34 do not overlap each other in a plan view, and are positioned on opposite sides of the colored region AR in a plan view. In addition, the first lead-out portion 332 does not overlap the second transparent electrode 32, and the second lead-out portion 342 does not overlap the first transparent electrode 31.

In a case where the smallest rectangle is assumed among rectangles circumscribing the first transparent electrode 31 in a plan view, the first auxiliary electrode 33 of the EC sheet according to the present embodiment is provided in a region on one side of the rectangle in one side direction, and the second auxiliary electrode 34 is provided in a region on one side of the rectangle in the one side direction.

In a side direction orthogonal to the one side direction of the rectangle described above, a length of the first auxiliary electrode 33 (first frame body 331) is 50% or more and 100% or less of a length of the first transparent electrode 31 in the orthogonal direction.

In addition, a length of the second auxiliary electrode 34 (second frame body 341) in the above-described orthogonal direction is 50% or more and 100% or less of a length of the second transparent electrode 32 in the orthogonal direction.

An electrical resistance value of the first auxiliary electrode 33 is lower than an electrical resistance value of the first transparent electrode 31. Similarly, an electrical resistance value of the second auxiliary electrode 34 is lower than an electrical resistance value of the second transparent electrode 32. Examples of a constituent material of the first auxiliary electrode 33 and the second auxiliary electrode 34 include silver, aluminum, copper, chromium, and molybdenum. As the constituent material of the first auxiliary electrode 33 and the second auxiliary electrode 34, a conductive ink can also be used. As the constituent material of the first auxiliary electrode 33 and the second auxiliary electrode 34, one of these materials may be used, or two or more thereof may be used in combination. The first auxiliary electrode 33 and the second auxiliary electrode 34 can be formed, for example, by sputtering, vapor deposition, or the like. The first auxiliary electrode 33 and the second auxiliary electrode 34 can also be formed by printing using a conductive ink.

Average thicknesses of the first auxiliary electrode 33 and the second auxiliary electrode 34 are each independently preferably 1 nm or more and 100 nm or less. The average thicknesses of the first auxiliary electrode 33 and the second auxiliary electrode 34 are more preferably 5 nm or more and 50 nm or less.

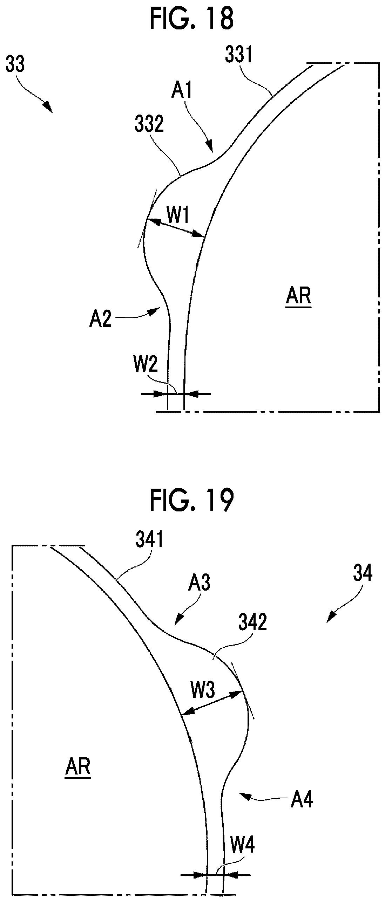

FIG. 18 is a partially enlarged view of the first auxiliary electrode 33. As shown in FIG. 18, in the first auxiliary electrode 33, a contour line of the connection portion (represented by reference numerals A1 and A2 in FIG. 18) between the first frame body 331 and the first lead-out portion 332 is a curve which is convex on the colored region AR side. A curvature radius of the curve is set to 40 mm or more. The curvature radius can be measured and calculated by a known method.

In addition, it is preferable that a width of the first lead-out portion 332 toward the outside from the first frame body 331 is set to 10 mm or less.

The above-described width of the first lead-out portion 332 is a value obtained by measuring a width W1 of the entire first auxiliary electrode 33 at the position where the first lead-out portion 332 is provided and subtracting a width W2 of the first frame body 331 from the obtained width W1 of the first auxiliary electrode 33. In a case where a design value is known, the design value can be used as the width W2 of the first frame body 331. In a case where the width of the first frame body 331 is unknown, widths at a plurality of locations (for example, five locations at equal intervals) is measured at equal intervals, and an arithmetic mean value of the measured values can be set as the width W2 of the first frame body 331.

A width of a portion (distal end portion) including at least a distal end (one end) of the first frame body 331 may be 0.1 mm or more and 1.0 mm or less. In a case where the width of the distal end portion is 0.1 mm or more, the electrical resistance can be reduced. Therefore, the color development and decolorization in the colored region AR can be performed without delay. In a case where the width of the distal end portion is 1.0 mm or less, it is difficult to visually recognize the distal end portion from the outside. Therefore, the first frame body 331 is not noticeable. Accordingly, aesthetic appearance of the sunglasses 100 can be enhanced. The width of the distal end portion may be 0.3 mm or more and 1.0 mm or less.

FIG. 19 is a partially enlarged view of the second auxiliary electrode 34. Similar to the first auxiliary electrode 33, in the second auxiliary electrode 34, a contour line of the connection portion (represented by reference numerals A3 and A4 in FIG. 19) between the second frame body 341 and the second lead-out portion 342 is a curve which is convex on the colored region AR side. It is preferable that a curvature radius of the curve is set to 40 mm or more.

In addition, it is preferable that a width of the second lead-out portion 342 toward the outside from the second frame body 341 is set to 10 mm or less.

In the same manner as in the above-described width W1, the width W2 can be determined as a value obtained by measuring a width W3 of the entire second auxiliary electrode 34 at the position where the second lead-out portion 342 is provided and subtracting a width W4 of the second frame body 341 from the obtained width W3 of the second auxiliary electrode 34.

A width of a portion (distal end portion) including at least a distal end (one end) of the second frame body 341 may be 0.1 mm or more and 1.0 mm or less. In a case where the width of the distal end portion is 0.1 mm or more, the electrical resistance can be reduced. Therefore, the color development and decolorization in the colored region AR can be performed without delay. In a case where the width of the distal end portion is 1.0 mm or less, it is difficult to visually recognize the distal end portion from the outside. Therefore, the second frame body 341 is not noticeable. Accordingly, aesthetic appearance of the sunglasses 100 can be enhanced. The width of the distal end portion may be 0.3 mm or more and 1.0 mm or less.

### (Electrochromic layer)

As shown in FIGS. 15 and 16, the EC layer 35 includes a first electrochromic layer 351 (first EC layer 351) which is laminated on the first transparent electrode 31, a second electrochromic layer 352 (second EC layer 352) which is laminated on the second transparent electrode 32, and an electrolyte layer 353 which fills a space between the first EC layer 351 and the second EC layer 352.

### (First electrochromic layer)

The first EC layer 351 is a layer in which color changes, and contains a material which is colored by an oxidation reaction as a main material. Examples of the material which is colored by an oxidation reaction include known materials which exhibit electrochromism and are used for an EC element, including a polymerized substance of a radically polymerizable compound having a triarylamine structure, a bisacridane compound, triphenylamine, benzidine, a Prussian blue-type complex, nickel oxide, and the like.

Examples of the polymerized substance of the radically polymerizable compound having a triarylamine structure include substances described in Japanese Unexamined Patent Application Publication No. 2016-45464, Japanese Unexamined Patent Application Publication No. 2020-138925, and the like.

As the material which is colored by an oxidation reaction, one of these materials may be used, or two or more thereof may be used in combination.

An average thickness of the first EC layer 351 is preferably 0.1 µm or more and 30 µm or less. The average thickness of the first EC layer 351 is more preferably 0.4 µm or more and 10 µm or less.

### (Second electrochromic layer)

The second EC layer 352 is a layer in which color changes, and contains a material which is colored by a reduction reaction as a main material. Examples of the material which is colored by a reduction reaction include known materials which exhibit electrochromism and are used for an EC element, including inorganic electrochromic compounds such as tungsten oxide, molybdenum oxide, iridium oxide, and titanium oxide, organic electrochromic compounds such as a viologen-based compound and a dipyridine-based compound, and the like.

As the material which is colored by a reduction reaction, one of these materials may be used, or two or more thereof may be used in combination.

A color (color 1) that the first EC layer 351 is colored by an oxidation reaction and a color (color 2) that the second EC layer 352 is colored by a reduction reaction may have the same tone or may have different tones. In a case where the color 1 and the color 2 have the same tone, the maximum color optical density can be increased, and thus the contrast can be improved. In a case where the color 1 and the color 2 have different tones, the color development of the EC element 30 is a color after mixing the color 1 and the color 2.

By coloring both the first EC layer 351 and the second EC layer 352, redox coloring agents of the first EC layer 351 and the second EC layer 352 can be simultaneously developed. Therefore, the color development speed can be improved.

An average thickness of the second EC layer 352 is preferably 0.2 µm or more and 5.0 µm or less. The average thickness of the second EC layer 352 is more preferably 1.0 µm or more and 4.0 µm or less. In a case where the average thickness of the second EC layer 352 is 0.2 µm or more, the color optical density can be increased. In a case where the average thickness of the second EC layer 352 is 5.0 µm or less, the manufacturing cost can be reduced. In a case where the average thickness of the second EC layer 352 is 5.0 µm or less, a decrease in visibility due to coloration is less likely to occur.

### (Electrolyte layer)

The electrolyte layer 353 fills a space between the first EC layer 351 and the second EC layer 352. The electrolyte layer 353 contains an electrolyte having ion conductivity.

Examples of the electrolyte include inorganic ionic salts such as an alkali metal salt and an alkaline earth metal salt; and supporting salts such as a quaternary ammonium salt, acids, and alkalis. Examples of a counterion (anion) of the electrolyte include a halogen, a thiocyanate ion (SCN⁻), a chlorate ion (ClO₃⁻), a perchlorate ion (ClO₄⁻), a tetrafluoroborate ion (BF₄⁻), a hexafluorophosphate ion (PF₆⁻), a trifluoromethanesulfonate ion (CF₃SO₃⁻), a trifluoroacetate ion (CF₃COO⁻), and a bisfluorosulfonium imide (N(SO₂F)₂⁻).

Specific examples of such an electrolyte include LiClO₄, LiBF₄, LiAsF₆, LiPF₆, LiCF₃SO₃, LiCF₃COO, KCl, NaClO₃, NaCl, NaBF₄, NaSCN, KBF₄, Mg(ClO₄)₂, and Mg(BF₄)₂. As the electrolyte, one of these materials may be used, or two or more thereof may be used in combination.

As the material of the electrolyte, an ionic liquid can also be used. Among ionic liquids, an organic ionic liquid has a molecular structure which exhibits a liquid in a wide temperature range including room temperature, and thus is easy to handle.

An average thickness of the electrolyte layer 353 is preferably 20 µm or more and 100 µm or less. The average thickness of the electrolyte layer 353 is more preferably 30 µm or more and 80 µm or less, and still more preferably 30 µm or more and 70 µm or less.

### [Sealing portion]

The sealing portion 40 is disposed between the first substrate 11 and the second substrate 12, and partitions the colored region AR. A material of the sealing portion 40 is not particularly limited as long as it is an insulating material having transparency. Examples of the material of the sealing portion 40 include resin materials such as an acrylic resin and an epoxy resin; and inorganic oxides such as a silicon oxide (SiO₂), a silicon oxynitride (SiON), and an aluminum oxide (Al₂O₃).

An average thickness of the sealing portion 40 is adjusted according to an average thickness of the EC element 30. The average thickness of the sealing portion 40 is preferably 20 µm or more and 100 µm or less, more preferably 30 µm or more and 80 µm or less, and still more preferably 40 µm or more and 60 µm or less.

### [Terminal portion]

The terminal portion 50 is electrically connected to the EC element 30 and is provided on a surface of the second substrate 12. The terminal portion 50 has a first terminal portion 51A connected to the first auxiliary electrode 33 and a second terminal portion 52A connected to the second auxiliary electrode 34.

### (First terminal portion)

The first terminal portion 51A includes a first conductive portion 51 and a first terminal 511.

The first conductive portion 51 penetrates the second substrate 12 and the sealing portion 40, and is electrically connected to the first auxiliary electrode 33. The first conductive portion 51 is formed in a through-hole 40a which penetrates the second substrate 12 and the sealing portion 40 at a position which planarly overlaps the first lead-out portion 332.

The first conductive portion 51 can be formed of a conductive paste filled inside the through-hole 40a or a conductive tubular member inserted into the through-hole 40a. In addition, a known material can be appropriately applied as long as it is formed in the through-hole 40a and is electrically connected to the first auxiliary electrode 33 (first lead-out portion 332).

The first terminal 511 is provided to be exposed on the surface of the second substrate 12, and is a member electrically connected to the first conductive portion 51. The first terminal 511 may be, for example, a plate-like member provided on the surface of the second substrate 12 as long as it is connected to the first conductive portion 51 on the surface of the second substrate 12. Since the first terminal 511 is reliably in conductive connection with the first conductive portion 51 and has excellent durability, it is preferable to have a configuration in which a terminal 511a provided on the surface of the second substrate 12 and a portion 511b partially embedded in the first conductive portion 51 are provided.

The first terminal portion 51A may further include an external connection terminal 55 which is connected to an external device. The external connection terminal 55 is electrically connected to the first terminal 511.

### (Second terminal portion)

The second terminal portion 52A includes a second conductive portion 52 and a second terminal 521.

The second conductive portion 52 penetrates the second substrate 12 and the sealing portion 40, and is electrically connected to the second auxiliary electrode 34. The second conductive portion 52 is formed in a through-hole 40b which penetrates the second substrate 12 and the sealing portion 40 at a position which planarly overlaps the second lead-out portion 342.

FIG. 17 shows that the second conductive portion 52 and the through-hole 40b penetrate the second auxiliary electrode 34 (second lead-out portion 342), but they may not penetrate the second auxiliary electrode 34.

The second conductive portion 52 can have the same configuration as the first conductive portion 51 described above.

The second terminal 521 is provided to be exposed on the surface of the second substrate 12, and is a member electrically connected to the second conductive portion 52. The second terminal 521 has a terminal 521a provided on the surface of the second substrate 12 and a portion 521b partially embedded in the second conductive portion 52. The second terminal 521 can have the same configuration as the first terminal 511 described above.

The second terminal portion 52A may further include an external connection terminal 56 which is connected to an external device. The external connection terminal 56 is electrically connected to the second terminal 521.

In the present embodiment, the terminal portion 50 is provided on the surface of the second substrate 12, but may be provided on the surface of the first substrate 11.

### <<Laminate and lens for spectacles>>

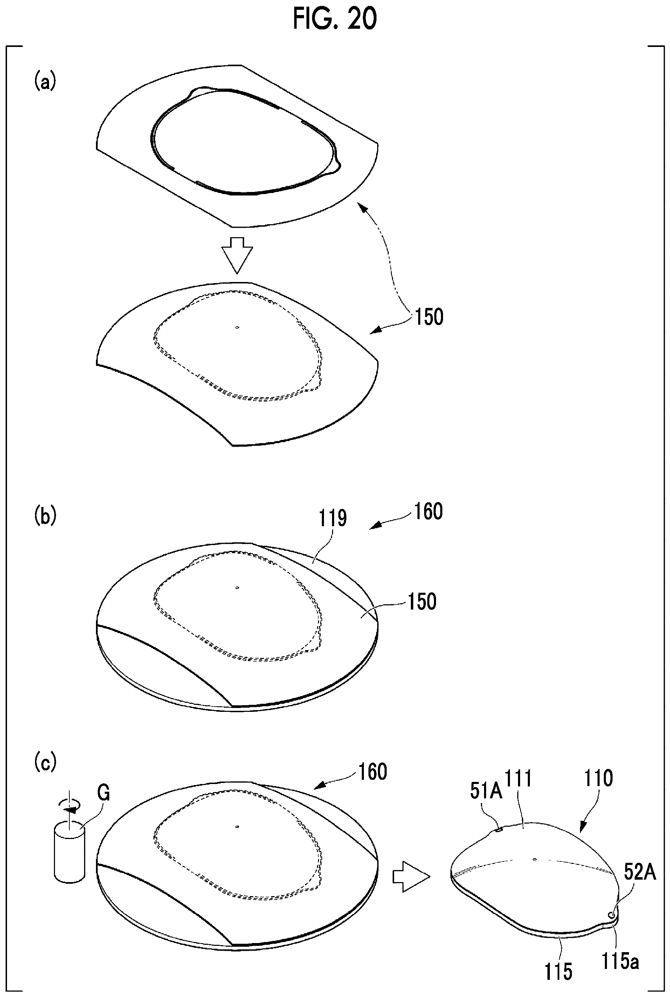

FIG. 20 is an explanatory view representing a manufacturing method of a lens using the EC sheet 150 (laminate 160).

First, as shown in FIG. 20(a), the EC sheet 150 is bent under heating and thereby the EC sheet 150 is curved in accordance with a curvature of a target lens. The bending processing is performed by, for example, press molding or vacuum molding.

Next, as shown in FIG. 20(b), the curved EC sheet 150 is insert-molded as an insert product, and a lens material 119 is formed on a concave surface of the EC sheet 150 to obtain a laminate 160. The lens material 119 is processed as described later to be the lens main body 115.

The lens material 119 has visible light transmittance. As a material of the lens material 119, a thermoplastic resin known as a material of an optical member can be used.

In a case where the material of the lens material 119 is the same as or similar to the main material of the substrate (the first substrate 11 or the second substrate 12) in the EC sheet 150 in contact with the lens material 119, the EC sheet 150 and the lens material 119 are easily adhered to each other, which is preferable. In addition, in a case where the material of the substrate and the material of the lens material 119 are the same type or the same, a difference in refractive index between the substrate and the lens material 119 can be reduced, and scattering or reflection of light at an interface between the EC sheet 150 and the lens material 119 can be suppressed. The difference in refractive index between the substrate and the lens material 119 is preferably 0.2 or less, and more preferably 0.1 or less.

A thickness of the lens material 119 is, for example, preferably 1.5 mm or more and 20 mm or less. By setting the thickness of the lens material 119 to be within the above-described range, it is possible to achieve both high strength and reduction in weight of the obtained lens.

Next, the surface of the lens material 119 is polished, and the surfaces of the EC sheet 150 and the lens material 119 are subjected to a hard coating treatment and an antireflection treatment. Thereafter, through-holes (the through-holes 40a and 40b) are formed in the sealing portion 40 at positions overlapping the first lead-out portion 332 and the second lead-out portion 342, the first terminal portion 51A and the second terminal portion 52A are formed to be electrically connected to the first lead-out portion 332 and the second lead-out portion 342 in the through-holes.

Next, as shown in FIG. 20(c), the laminate 160 is subjected to trimming to have a shape corresponding to the rim part 121 of the sunglasses 100 described above. In this case, the trimming of the periphery of the first lead-out portion 332 and the second lead-out portion 342 is performed using, for example, a rotating cylindrical grinding stone G.

By such processing, the lens 110 which includes the EC part 111 obtained by cutting the EC sheet 150 along the outer periphery of the first auxiliary electrode 33 and the second auxiliary electrode 34 and the lens main body 115 on which the EC part 111 is laminated is obtained (see FIG. 1). The obtained lens 110 corresponds to "lens for spectacles" according to the present invention.

The lens material 119 included in the laminate 160 is processed into the lens main body 115 by trimming along the outer periphery of the first auxiliary electrode 33 and the second auxiliary electrode 34. The lens main body 115 has a protruding portion 115a having the same shape as the first lead-out portion 332 and the second lead-out portion 342 in a plan view.

The obtained lens 110 is combined with the frame 120 shown in FIG. 1. In this case, the first lead-out portion 332 and the second lead-out portion 342 of the EC part 111 are electrically connected to the frame 120 through each provided conductive portion. In the present embodiment, the first lead-out portion 332 and the second lead-out portion 342 are electrically connected to an external terminal (not shown) provided on the temple part 123 or the bridge part 122 of the frame 120 through the first terminal portion 51A and the second terminal portion 52A, and are connected to the battery 126.

In this manner, the sunglasses 100 are obtained.

With the laminate 160 having the above-described configuration, the following effects can be obtained.

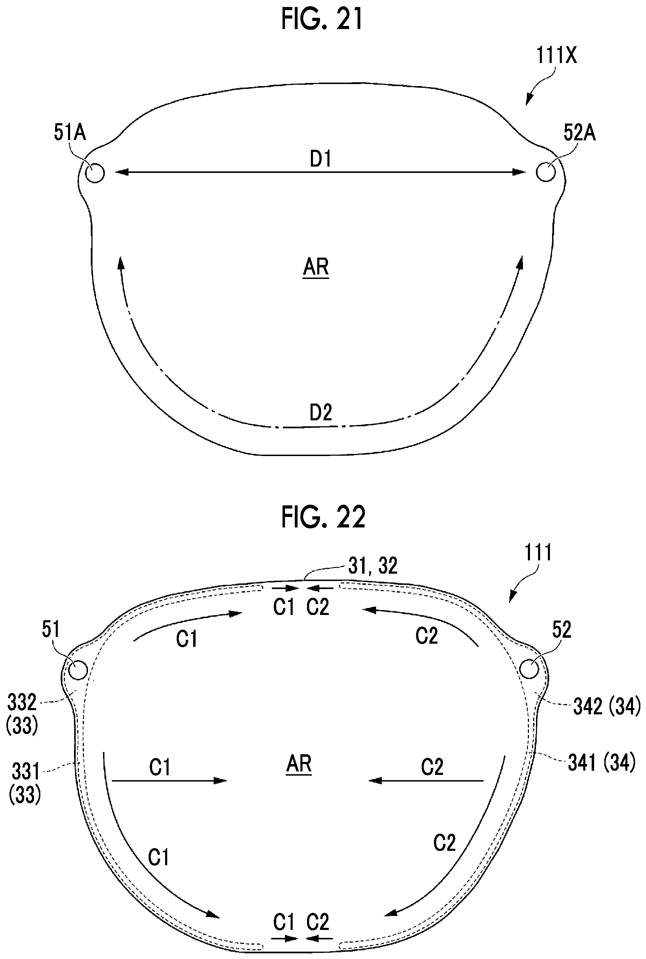

FIGS. 21 and 22 are explanatory diagrams representing effects of the auxiliary electrode (the first auxiliary electrode and the second auxiliary electrode). FIG. 21 is an EC part of a lens for spectacles, manufactured by the above-described method using an EC sheet (laminate) not having an auxiliary electrode. FIG. 22 shows the EC part (EC part 111) of the lens for spectacles, manufactured by the above-described method using the EC sheet 150 (laminate 160).

First, in an EC part 111X shown in FIG. 21, in a case where a battery is connected to the first conductive portion 51 and the second conductive portion 52 electrically connected to the transparent electrode (the first transparent electrode and the second transparent electrode) and a voltage is applied, a current flows directly from the first conductive portion 51 and the second conductive portion 52 to the transparent electrode.

In this case, in a path (represented by a reference numeral D1) which connects the first conductive portion 51 and the second conductive portion 52 at the shortest distance, the path is short and the electrical resistance is small, so that the current flows easily; and in a path (represented by a reference numeral D2) which connects the first conductive portion 51 and the second conductive portion 52 by bypassing, the current flows relatively difficultly as compared with the path D1. As a result, in the colored region AR, in a region far from the first conductive portion 51 and the second conductive portion 52, overlapping the path D2, the delay of discoloration is likely to occur as compared with a region overlapping the path D1.

On the other hand, as in the EC part 111 shown in FIG. 22, in a case where the EC sheet as a material has the auxiliary electrode (the first auxiliary electrode 33 and the second auxiliary electrode 34), the operation is performed as follows.

In the first auxiliary electrode 33, in a case where a voltage is applied to the first lead-out portion 332 through the first conductive portion 51, first, the first lead-out portion 332 is energized toward the first frame body 331, and then, current flows from the first auxiliary electrode 33 to the first transparent electrode 31. Such a current is represented by a reference numeral C1.

Similarly, in the second auxiliary electrode 34, in a case where a voltage is applied from the external power to the second lead-out portion 342 through the second conductive portion 52, first, the second lead-out portion 342 is energized toward the second frame body 341, and then, current flows from the second auxiliary electrode 34 to the second transparent electrode 32. Such a current is represented by a reference numeral C2.

In this case, the first auxiliary electrode 33 covers most of the first transparent electrode 31 on one end side in a short direction, and the second auxiliary electrode 34 covers most of the second transparent electrode 32 on the other end side in a short direction. Therefore, in a case where the voltage is applied, the EC part 111 can synchronize the timing of energization in the entire colored region AR through the auxiliary electrodes, and can suppress the delay of discoloration.

In addition, the first auxiliary electrode 33 and the second auxiliary electrode 34 are provided at the peripheral edge portion of the colored region AR, and are not present at the center of the colored region AR. Therefore, the color development of the colored region AR is not hindered.

Furthermore, the laminate 160 has the first terminal portion 51A and the second terminal portion 52A and thereby being easily connected to the external device, and it is possible to simplify assembly process.

With the laminate having the above-described configuration, since the first auxiliary electrode 33 and the second auxiliary electrode 34 are provided, the color development and the decolorization can be performed without delay. In addition, since the terminal portions connected to the first auxiliary electrode 33 and the second auxiliary electrode 34 are provided, the assembly process can be simplified.

In addition, with the lens for spectacles and the spectacles having the above-described configurations, since the laminate 160 is provided, the color development and the decolorization can be performed without delay.

In the present embodiment, the sunglasses 100 are shown as an example of the spectacles, but the present invention is not limited thereto. An application destination of the lens 110 may be, for example, goggles which protect the eyes from wind and rain, dust, chemicals, and the like.

In addition, in the present embodiment, the EC layer 35 includes the first EC layer 351 and the second EC layer 352, but the present invention is not limited thereto. The EC layer 35 can exhibit the effects of the present invention even in a case of having a configuration in which only one of the first EC layer 351 or the second EC layer 352 is provided.

Although the preferred embodiments of the present invention have been described above with reference to the accompanying drawings, the present invention is not limited to the examples. Various shapes, combinations, and the like of the respective components shown in the above-described examples are merely examples, and various changes can be made based on design, specifications, and the like without departing from the gist of the present invention.

### (Fifth embodiment)

The auxiliary electrode is necessary for the electrochromic element to perform color development and decolorization without delay. However, since the auxiliary electrode is opaque, it may be noticeable, and aesthetic appearance may be impaired.

An object of one aspect of the present invention is to provide an electrochromic sheet in which color development and decolorization can be performed without delay and an auxiliary electrode is not noticeable, a lens for spectacles, and spectacles.

### (Aspect 1)

An electrochromic sheet including: a first substrate; a second substrate which is disposed to face the first substrate; an electrochromic element which is provided between the first substrate and the second substrate and forms a colored region where color changes by application of a voltage; an insulating sealing portion which partitions the colored region; a first auxiliary electrode which is electrically connected to the electrochromic element; and a second auxiliary electrode which is electrically connected to the electrochromic element, in which the electrochromic element includes a first transparent electrode which is electrically connected to the first auxiliary electrode, a second transparent electrode which is electrically connected to the second auxiliary electrode, and one or a plurality of electrochromic layers where color changes by at least one of an oxidation reaction or a reduction reaction, the first auxiliary electrode has a first counter electrode portion which has lower electrical resistance than the first transparent electrode and extends along a part of an outer peripheral edge of the colored region, the second auxiliary electrode has a second counter electrode portion which has lower electrical resistance than the second transparent electrode and extends along another part of the outer peripheral edge of the colored region, the second counter electrode portion is on a side opposite to the first counter electrode portion with respect to the colored region and faces the first counter electrode portion, and a width of a portion including at least one end of the first counter electrode portion and the second counter electrode portion is 0.1 mm or more and 1.0 mm or less.

### (Aspect 2)

The electrochromic sheet according to the aspect 1, in which the plurality of electrolyte layers include a first electrochromic layer electrically connected to the first transparent electrode and a second electrochromic layer electrically connected to the second transparent electrode, the electrochromic element further includes an electrolyte layer filling a space between the first electrochromic layer and the second electrochromic layer, the first electrochromic layer contains a material in which color changes by an oxidation reaction, and the second electrochromic layer contains a material in which color changes by a reduction reaction.

### (Aspect 3)

The electrochromic sheet according to the aspect 1, in which the first counter electrode portion has a first extending portion which extends to one side along the outer peripheral edge of the colored region and a second extending portion which extends to the other side along the outer peripheral edge of the colored region, the second counter electrode portion has a third extending portion which extends to one side along the outer peripheral edge of the colored region and a fourth extending portion which extends to the other side along the outer peripheral edge of the colored region, the first extending portion and the third extending portion are disposed to face each other, the one end of the first counter electrode portion is a distal end of the first extending portion, and the one end of the second counter electrode portion is a distal end of the third extending portion.

### (Aspect 4)

The electrochromic sheet according to the aspect 1, in which, in a plan view, a distance from the first counter electrode portion and the second counter electrode portion to the outer peripheral edge of the colored region is 0.25 mm or more.

### (Aspect 5)

A lens for spectacles, including the electrochromic sheet according to any one of the aspects 1 to 4.

### (Aspect 6)

Spectacles including the lens for spectacles according to the aspect 5.

According to one aspect of the present invention, it is possible to provide an electrochromic sheet in which color development and decolorization can be performed without delay and an auxiliary electrode is not noticeable, a lens for spectacles, and spectacles.

Hereinafter, the electrochromic sheet, the lens for spectacles, and the spectacles according to the embodiments will be described in detail.

### <Sunglasses>

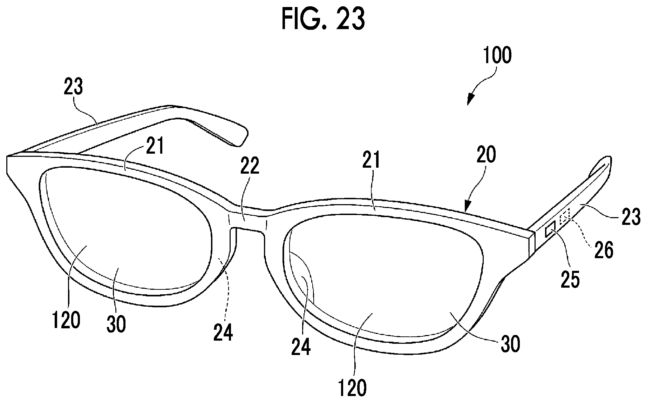

FIG. 23 is a perspective view showing sunglasses using an electrochromic sheet according to the embodiment. In a case where the sunglasses are mounted on the head of the user, the outer surface of the lens is a front surface. A surface opposite to the front surface of the lens is a back surface. The sunglasses are an example of spectacles.

As shown in FIG. 23, the sunglasses 100 include a frame 20 and a pair of lenses 30 (lenses for spectacles). In the present specification, the term "lens (lens for spectacles)" includes both a lens having a light collecting function and a lens not having a light collecting function. The lens 30 is also referred to as a light transmission body.

The frame 20 includes a pair of rim parts 21, a bridge part 22, a pair of temple parts 23, and a pair of nose pad parts 24. The frame 20 is mounted on the head of the user. The frame 20 is configured to dispose the lens 30 in front of the eyes of the user.

The rim part 21 is formed in a ring shape. The pair of rim parts 21 correspond to a right eye and a left eye of the user, respectively.

The bridge part 22 connects the pair of rim parts 21 to each other. The bridge part 22 is located in front of the upper part of the nose of the user, in a case of being mounted on the head of the user.

The temple part 23 is connected to a position on a side opposite to a position where the bridge part 22 is connected in the rim part 21. The temple part 23 is hung on the ear of the user, in a case of being mounted on the head of the user.

The temple part 23 includes a switch 25 and a battery 26. The switch 25 is exposed on an outer surface of the temple part 23. The switch 25 is electrically connected to a connection terminal provided in the lens 30 through a wiring line. The switch 25 can switch, for example, application of a positive voltage, application of a negative voltage, and non-application of a voltage to the electrochromic element 60. The battery 26 is built in the temple part 23. The battery 26 is electrically connected to a connection terminal provided in the lens 30 through a wiring line.

The nose pad part 24 is formed at a position corresponding to the nose of the user in each rim part 21. The nose pad part 24 comes into contact with the nose of the user. The nose pad part 24 stabilizes a wearing state of the sunglasses 100.

As a constituent material of the frame 20, for example, a metal material, a resin material, or the like can be used. A shape of the frame 20 is not limited to the example shown in the drawing as long as it has a shape which can be mounted on the head of the user.

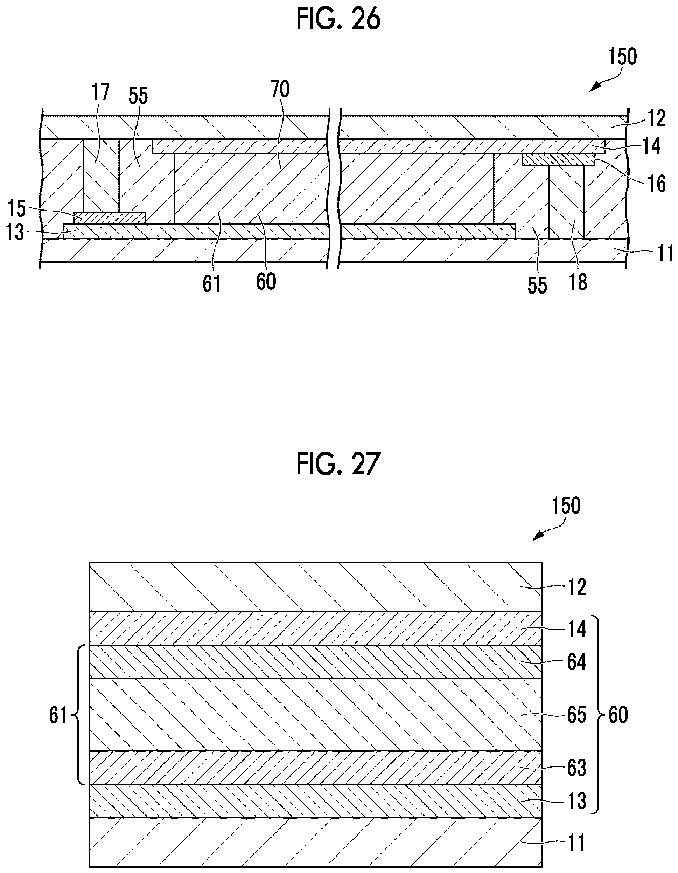

The lenses 30 (lenses for spectacles) are mounted on the respective rim parts 21. The lens 30 has light transmittance. The lens 30 is formed in a plate shape having a curved convex shape protruding outward. The lens 30 is mounted inside the rim part 21. The user can visually recognize external information through the lens 30. The lens 30 can reversibly perform color development and decolorization by switching application of a voltage to the electrochromic element 60 (see FIG. 26).

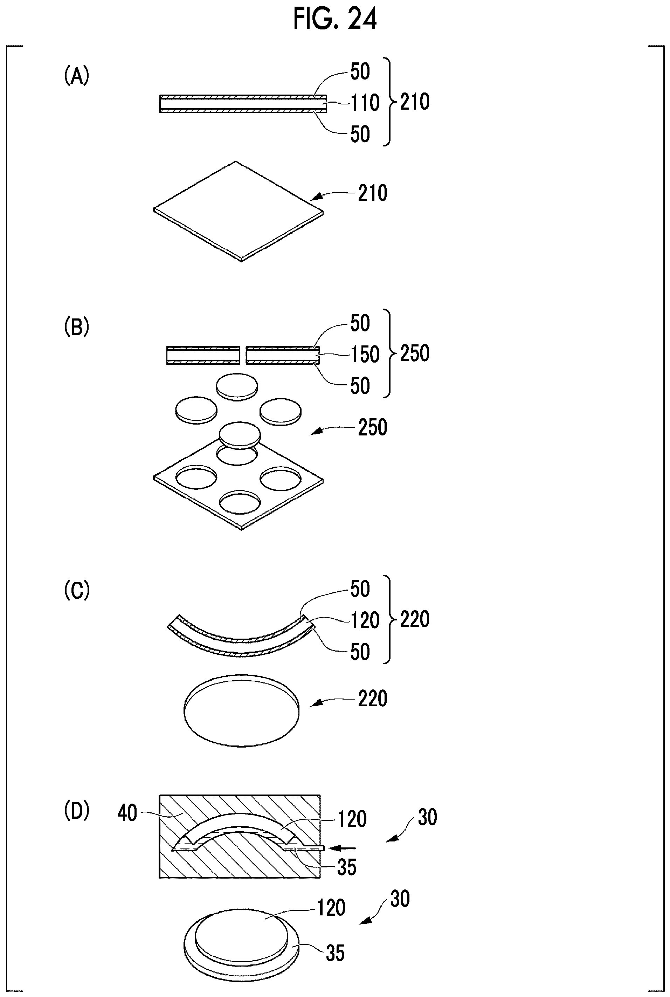

The lens 30 includes a curved sheet 120 and a resin layer 35 (see FIG. 24(D)). The lens 30 includes a pair of connection terminals. The pair of connection terminals are provided at positions corresponding to a connecting portion where the bridge part 22 and the temple part 23 are connected to the rim part 21.

The resin layer 35 has light transmittance. The resin layer 35 is positioned on a back side of the lens 30 with respect to the curved sheet 120. The resin layer 35 may have a light collecting function. The resin layer 35 having a light collecting function applies a light collecting function to the lens 30.

Examples of a constituent material of the resin layer 35 include curable resins such as a thermoplastic resin, a thermosetting resin, and a photocurable resin. As the constituent material of the resin layer 35, one of these resins may be used, or two or more thereof may be used in combination.

In a case where the resin material constituting the resin layer 35 is the same as or similar to a surface material of the curved sheet 120 (for example, a material of the first substrate 11), adhesiveness between the resin layer 35 and the curved sheet 120 can be enhanced.

In a case where the material of the resin layer 35 and the surface material of the curved sheet 120 are the same type or the same, a difference in refractive index between the resin layer 35 and the curved sheet 120 can be set to be low. Therefore, a light transmittance of the lens 30 can be increased. The difference in refractive index between the resin layer 35 and the curved sheet 120 is preferably 0.2 or less, and more preferably 0.1 or less.

A thickness of the resin layer 35 is, for example, preferably 1.5 mm or more and 20 mm or less. By setting the thickness of the resin layer 35 to be within the above-described range, it is possible to achieve both high strength and reduction in weight of the lens 30.

The curved sheet 120 is an electrochromic sheet 150 having a curved shape. The curved sheet 120 is bonded to an outer surface (curved convex surface) of the resin layer 35. The curved sheet 120 has a curved shape along the outer surface (curved convex surface) of the resin layer 35.

Since the sunglasses 100 include the curved sheet 120, the color development and decolorization at any timing can be reversibly performed by switching the application of a voltage to the electrochromic element 60 (see FIG. 26).

The sunglasses 100 include the frame 20, but a shape of the frame is not particularly limited. For example, a frame without the rim part may be used. The spectacles may have a configuration in which there is no frame, from the viewpoint of fashionability, light weight, and the like.

In the present embodiment, the lens 30 is applied to the sunglasses 100, but the application destination of the lens is not limited thereto. The application destination of the lens may be, for example, goggles.

### <Manufacturing method of lens>

FIGS. 24(A) to 24(D) are views for describing a manufacturing method of the lens using the electrochromic sheet according to the embodiment.
[1] As shown in FIG. 24(A), an element sealing connection sheet 110 (electrochromic sheet 150) is prepared. The element sealing connection sheet 110 includes the first substrate 11, the second substrate 12, the sealing portion 55, and the electrochromic element 60 (see FIG. 26). By attaching a protective film 50 (or a masking film) to both surfaces of the element sealing connecting sheet 110, a connection sheet laminate 210 is obtained.
[2] As shown in FIG. 24(B), an individual element laminate 250 which is punched out in a circular shape is obtained by punching the connection sheet laminate 210 in a thickness direction.
[3] As shown in FIG. 24(C), the individual element laminate 250 is bent under heating and thereby the individual element laminate 250 becoms an individual element laminate 220 having a curved shape. The element laminate 220 includes the curved sheet 120 (electrochromic sheet 150) and the protective film 50 attached to both surfaces thereof.
[4] The protective film 50 is peeled off from the curved sheet 120. As shown in FIG. 24(D), the resin layer 35 (molding layer) is formed on the curved recess surface of the curved sheet 120 by an insert injection molding method or the like using a mold 40. In this manner, the lens 30 (lens for spectacles) including the curved sheet 120 and the resin layer 35 is obtained. The lens 30 has a shape corresponding to the rim part 21 by trimming, cutting, or the like (refer to FIG. 23). The lens 30 is mounted on the rim part 21.

### <Electrochromic sheet>

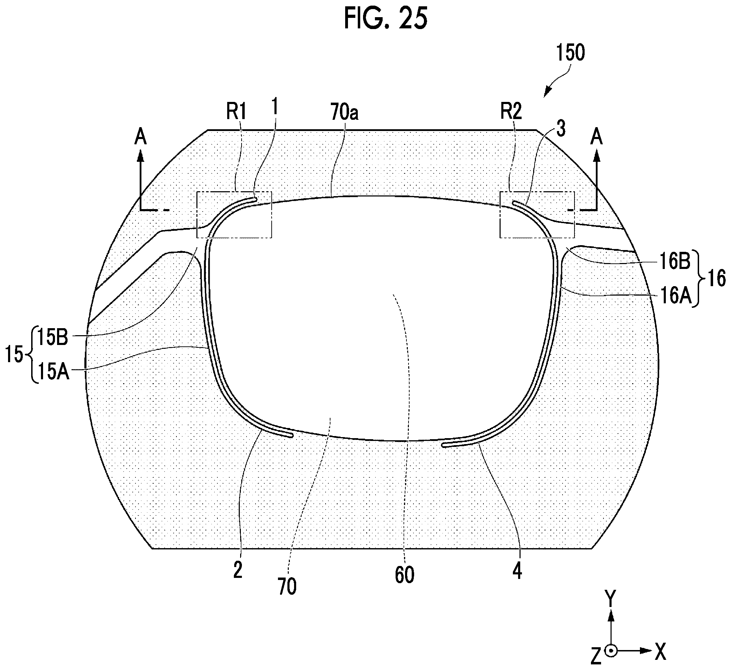

FIG. 25 is a plan view representing the electrochromic sheet 150. FIG. 26 is a schematic view showing a cross section taken along A-A shown in FIG. 25. FIG. 27 is a schematic view showing a cross section of the electrochromic element 60.

As shown in FIG. 26, the electrochromic sheet 150 includes a first substrate 11, a second substrate 12, a sealing portion 55, an electrochromic element 60, a first conductive portion 17, a second conductive portion 18, a first auxiliary electrode 15, and a second auxiliary electrode 16.

The first substrate 11 and the second substrate 12 are outermost layers of the electrochromic sheet 150. The second substrate 12 is disposed to face the first substrate 11. The first substrate 11 and the second substrate 12 have a function as a protective layer which protects the electrochromic element 60 and the like. The first substrate 11 and the second substrate 12 have transparency. The first substrate 11 and the second substrate 12 contain, for example, a transparent resin (base resin) having thermoplasticity as a main material.

Examples of the transparent resin constituting the first substrate 11 and the second substrate 12 include an acrylic resin, a polystyrene resin, a polyethylene resin, a polypropylene resin, a polyester resin (polyethylene terephthalate (PET), polyethylene naphthalate (PEN), and the like), a polycarbonate resin, a polyamide resin, a cycloolefin resin, a vinyl chloride resin, a polyacetal resin, and triacetyl cellulose (TAC). As the transparent resin, one of these resins may be used, or two or more thereof may be used in combination. As the transparent resin, a polycarbonate resin or a polyamide resin is preferable.

Since the polycarbonate resin has high transparency (light transmittance), mechanical strength (rigidity and the like), and heat resistance, transparency, impact resistance, and heat resistance of the first substrate 11 and the second substrate 12 can be improved. As the polycarbonate resin, an aromatic polycarbonate resin is preferable. The aromatic polycarbonate resin has an aromatic ring in the main chain thereof. By using the aromatic polycarbonate resin, the first substrate 11 and the second substrate 12 having excellent strength can be obtained.

The aromatic polycarbonate resin is synthesized, for example, by an interfacial polycondensation reaction of bisphenol and phosgene, an ester exchange reaction of bisphenol and diphenyl carbonate, or the like. Examples of the bisphenol include bisphenol (modified bisphenol) which is a source of a repeating unit of polycarbonate represented by Formula (1A), and bisphenol A. 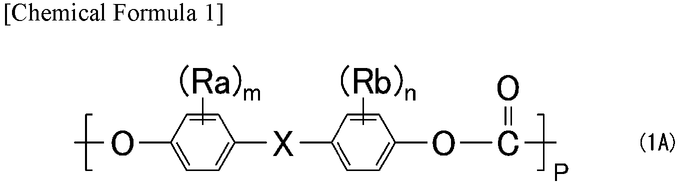 (in Formula (1A), X is an alkyl group having 1 to 18 carbon atoms, an aromatic group, or a cyclic aliphatic group, Ra and Rb are each independently an alkyl group having 1 to 12 carbon atoms, m and n are each an integer of 0 to 4, and p is the number of repeating units)

Examples of the bisphenol which is the source of the repeating unit of polycarbonate represented by Formula (1A) include 4,4'-(pentane-2,2-diyl)diphenol, 4,4'-(pentane-3,3-diyl)diphenol, 4,4'-(butane-2,2-diyl)diphenol, 1,1'-(cyclohexanediyl)diphenol, 2-cyclohexyl-1,4-bis(4-hydroxyphenyl)benzene, 2,3-biscyclohexyl-1,4-bis(4-hydroxyphenyl)benzene, 1,1'-bis(4-hydroxy-3-methylphenyl)cyclohexane, and 2,2'-bis(4-hydroxy-3-methylphenyl)propane. As the bisphenol, one of these compounds may be used, or two or more thereof may be used in combination.

It is preferable that the polycarbonate resin has, as a main component, a bisphenol-type polycarbonate resin having a skeleton derived from bisphenol. By using the bisphenol-type polycarbonate resin, the first substrate 11 and the second substrate 12 exhibit excellent strength.

The first substrate 11 and the second substrate 12 may be colorless or colored. Colors of the first substrate 11 and the second substrate 12 are not particularly limited, and may be red, blue, yellow, or the like.

The colors of the first substrate 11 and the second substrate 12 can be selected by containing a dye or a pigment in the first substrate 11 and the second substrate 12. Examples of the dye include an acidic dye, a direct dye, a reactive dye, and a basic dye. As the dye, one of these dyes may be used, or two or more may be used in combination.

The first substrate 11 and the second substrate 12 may contain additives such as an antioxidant, a filler, a plasticizer, a light stabilizer, an ultraviolet absorber, a heat ray absorber, and a flame retardant, as necessary. The first substrate 11 and the second substrate 12 may be stretched or may not be stretched.

A refractive index of the first substrate 11 and the second substrate 12 at a wavelength of 589 nm is preferably 1.3 or more and 1.8 or less, and more preferably 1.4 or more and 1.65 or less. By setting the refractive index of the first substrate 11 and the second substrate 12 to be within the range, the function of the electrochromic element 60 can be enhanced.

An average thickness of the first substrate 11 and the second substrate 12 is, for example, 0.05 mm or more and 10.0 mm or less, preferably 0.3 mm or more and 5.0 mm or less.

The electrochromic element 60 is a light emitting element which can switch between color development (coloring) and decolorization at any timing by switching ON/OFF of the switch 25 (see FIG. 23). The electrochromic element 60 (specifically, a main portion 61) forms a colored region 70 partitioned by the sealing portion 55. The electrochromic element 60 is provided between the first substrate 11 and the second substrate 12.

As shown in FIG. 27, the electrochromic element 60 includes a first transparent electrode 13, a first electrochromic layer 63, an electrolyte layer 65, a second electrochromic layer 64, and a second transparent electrode 14.

The first electrochromic layer 63, the electrolyte layer 65, and the second electrochromic layer 64 constitute the main portion 61. The main portion 61 forms the colored region 70. Color of the colored region 70 changes by application of a voltage.

The first transparent electrode 13 is laminated on an inner surface of the first substrate 11. The second transparent electrode 14 is laminated on an inner surface of the second substrate 12.

The first transparent electrode 13 and the second transparent electrode 14 are electrodes which supply electrons or receive electrons in a case where a positive voltage or a negative voltage is applied to the electrochromic element 60, by switching the switch 25 (see FIG. 23).

The first transparent electrode 13 and the second transparent electrode 14 have transparency. A constituent material of the first transparent electrode 13 and the second transparent electrode 14 is a conductive material. Examples of the constituent material of the first transparent electrode 13 and the second transparent electrode 14 include oxides such as indium tin oxide (ITO), F-doped tin oxide (FTO), antimony tin oxide (ATO), indium zinc oxide (IZO), In₂O₃, SnO₂, Sb-containing SnO₂, and Al-containing ZNo. As the constituent material of the first transparent electrode 13 and the second transparent electrode 14, one of these materials may be used, or two or more thereof may be used in combination.

A thickness of the first transparent electrode 13 and the second transparent electrode 14 is determined such that an electrical resistance value required for a redox reaction of the electrochromic layers 63 and 64 can be obtained. In a case where ITO is used as the constituent material of the first transparent electrode 13 and the second transparent electrode 14, average thicknesses of the first transparent electrode 13 and the second transparent electrode 14 are, for example, each independently 50 nm or more and 200 nm or less, preferably 50 nm or more and 150 nm or less, and more preferably 60 nm or more and 130 nm or less.

The first electrochromic layer 63 (electrochromic layer) is a layer in which color changes. The first electrochromic layer 63 contains a material which is colored by an oxidation reaction as a main material. Examples of the material which is colored by an oxidation reaction include a polymerized substance of a radically polymerizable compound having a triarylamine structure, a bisacridane compound, triphenylamine, benzidine, a Prussian blue-type complex, and nickel oxide. As the material which is colored by an oxidation reaction, one of these materials may be used, or two or more thereof may be used in combination.

Examples of the polymerized substance of the radically polymerizable compound having a triarylamine structure include substances described in Japanese Unexamined Patent Application Publication No. 2016-45464, Japanese Unexamined Patent Application Publication No. 2020-138925, and the like.

Examples of the Prussian blue-type complex include Fe(III)₄[Fe(II)(CN)₆]₃.

Among the above, the polymerized substance of the radically polymerizable compound having a triarylamine structure is preferable. By using the polymerized substance, an electrochromic element which can be operated at a constant voltage, has excellent repetitive durability, and has high contrast can be obtained.

The polymerized substance of the radically polymerizable compound having a triarylamine structure may contain other radically polymerizable compounds different from the radically polymerizable compound having a triarylamine structure. The radically polymerizable compound having a triarylamine structure and the other radically polymerizable compounds may be crosslinked.

An average thickness of the first electrochromic layer 63 is preferably 0.1 µm or more and 30 µm or less, and more preferably 0.4 µm or more and 10 µm or less.

The second electrochromic layer 64 (electrochromic layer) is a layer in which color changes. The second electrochromic layer 64 contains a material which is colored by a reduction reaction as a main material. As the material which is colored by a reduction reaction, it is preferable to use a material having the same tone as the first electrochromic layer 63. As a result, the maximum color optical density can be increased, and thus the contrast can be improved. As the material which is colored by a reduction reaction, a material having a different tone from the first electrochromic layer 63 may be used. In this case, color mixing can be performed.

By coloring both of the two electrochromic layers 63 and 64, redox coloring agents of the electrochromic layers 63 and 64 can be simultaneously developed. Therefore, the color development speed can be improved. By coloring both of the electrochromic layers 63 and 64, a driving voltage of the electrochromic element 60 can be suppressed. Therefore, the repetitive durability of the electrochromic element 60 can be improved.

Examples of the material which is colored by a reduction reaction include an inorganic electrochromic compound, an organic electrochromic compound, and a conductive polymer. As the material which is colored by a reduction reaction, one of these materials may be used, or two or more thereof may be used in combination.

Examples of the inorganic electrochromic compound include tungsten oxide, molybdenum oxide, iridium oxide, and titanium oxide. Among the above, tungsten oxide is preferable. Since tungsten oxide has a low reduction potential, decolorization potential thereof is low. Since tungsten oxide is an inorganic material, it has excellent durability.

Examples of the organic electrochromic compound include low-molecular-weight organic electrochromic compounds such as an azobenzene-based compound, an anthraquinone-based compound, a diarylethene-based compound, a dihydropyrene-based compound, a dipyridine-based compound, a styryl-based compound, a stilbene spiropyran-based compound, a spirooxazine-based compound, a spirothiophene-based compound, a thioindigo-based compound, a tetrathiafulvalene-based compound, a terephthalic acid-based compound, a triphenylmethane-based compound, a triphenylamine-based compound, a naphthopyrane-based compound, a viologen-based compound, a pyrazoline-based compound, a phenazine-based compound, a phenylenediamine-based compound, a phenoxazine-based compound, a phenothiazine-based compound, a phthalocyanine-based compound, a fluoran-based compound, a fulgide-based compound, a benzopyrane-based compound, and a metallocene-based compound. Among the above, a viologen-based compound or a dipyridine-based compound is preferable. The viologen-based compound and the dipyridine-based compound have a low decolorization potential and exhibit a favorable color value.

Examples of the viologen-based compound include compounds described in Japanese Patent (Granted) Publication No. 3955641, Japanese Unexamined Patent Application Publication No. 2007-171781, and the like. Examples of the dipyridine-based compound include compounds described in Japanese Unexamined Patent Application Publication No. 2007-171781A, Japanese Unexamined Patent Application Publication No. 2008-116718A, and the like.

Examples of the conductive polymer include polypyrrole, polythiophene, polyaniline, and derivatives thereof.

An average thickness of the second electrochromic layer 64 is preferably 0.2 µm or more and 5.0 µm or less, and more preferably 1.0 µm or more and 4.0 µm or less. In a case where the average thickness of the second electrochromic layer 64 is 0.2 µm or more, the color optical density can be increased. In a case where the average thickness of the second electrochromic layer 64 is 5.0 µm or less, the manufacturing cost can be reduced. In a case where the average thickness of the second electrochromic layer 64 is 5.0 µm or less, a decrease in visibility due to coloration is less likely to occur.

The electrolyte layer 65 fills a space between the first electrochromic layer 63 and the second electrochromic layer 64. The electrolyte layer 65 contains an electrolyte having ion conductivity.

Examples of the electrolyte include inorganic ionic salts such as an alkali metal salt and an alkaline earth metal salt; and supporting salts such as a quaternary ammonium salt, acids, and alkalis. Examples of a counterion (anion) of the electrolyte include a halogen, a thiocyanate ion (SCN⁻), a chlorate ion (ClO₃⁻), a perchlorate ion (ClO₄⁻), a tetrafluoroborate ion (BF₄⁻), a hexafluorophosphate ion (PF₆⁻), a trifluoromethanesulfonate ion (CF₃SO₃⁻), a trifluoroacetate ion (CF₃COO⁻), and a bisfluorosulfonium imide (N(SO₂F)₂⁻).

Specific examples of such an electrolyte include LiClO₄, LiBF₄, LiAsF₆, LiPF₆, LiCF₃SO₃, LiCF₃COO, KCl, NaClO₃, NaCl, NaBF₄, NaSCN, KBF₄, Mg(ClO₄)₂, and Mg(BF₄)₂. As the electrolyte, one of these materials may be used, or two or more thereof may be used in combination.

As the material of the electrolyte, an ionic liquid can also be used. Among ionic liquids, an organic ionic liquid has a molecular structure which exhibits a liquid in a wide temperature range including room temperature, and thus is easy to handle.

Examples of a cationic component of the organic ionic liquid include imidazole derivatives such as N,N-dimethylimidazolium salt, N,N-methylethylimidazolium salt, and N,N-methylpropylimidazolium salt; pyridinium derivatives such as N,N-dimethylpyridinium salt and N,N-methylpropylpyridinium salt; and aliphatic quaternary ammonium compounds such as trimethylpropylammonium salt, trimethylhexylammonium salt, and triethylhexylammonium salt. As the anionic component, a compound containing fluorine is preferably used in consideration of stability in the atmosphere. Examples of the anionic component include BF₄⁻, CF₃SO₃⁻, PF₄⁻, and (CF₃SO₂)₂N⁻.

As a material of the electrolyte, an ionic liquid in which the cationic component and the anionic component are combined is preferable.

The ionic liquid may be directly dissolved in any of a photopolymerizable monomer, an oligomer, or a liquid crystal material. In a case where solubility of the ionic liquid in these materials is low, a solution obtained by dissolving the ionic liquid in a small amount of a solvent in advance can be mixed with any of the photopolymerizable monomer, the oligomer, or the liquid crystal material.

Examples of the solvent include propylene carbonate, acetonitrile, γ-butyrolactone, ethylene carbonate, sulfolane, dioxolane, tetrahydrofuran, 2-methyltetrahydrofuran, dimethyl sulfoxide, 1,2-dimethoxyethane, 1,2-ethoxymethoxyethane, polyethylene glycol, alcohols, and mixed solvents thereof.

The electrolyte may be a low-viscosity liquid. The electrolyte may be in various forms such as a gel-like form, a polymer crosslinked form, and a liquid crystal dispersed form. It is preferable that the electrolyte is in a gel-like form or a solid-like form. As a result, it is possible to improve element intensity of the electrochromic element 60, improve reliability, and the like.

As a method of forming the electrolyte layer 65 in the form of a solid, for example, a method of holding a liquid containing an electrolyte and a solvent in a resin is preferable. In this manner, both the high ion conductivity and the high solid strength of the electrolyte layer 65 can be obtained. As the resin, for example, a photocurable resin is preferable. As a result, the solid electrolyte layer 65 can be obtained at a low temperature and in a short time, as compared with a case where the solid electrolyte layer 65 is obtained by thermal polymerization or solvent vaporization.

An average thickness of the electrolyte layer 65 is preferably 20 µm or more and 100 µm or less, more preferably 30 µm or more and 80 µm or less, and still more preferably 30 µm or more and 70 µm or less.

In addition, an interlayer such as an insulating porous layer and a protective layer may be provided between the respective layers between the first transparent electrode 13 and the second transparent electrode 14.

As shown in FIG. 26, the sealing portion 55 is disposed between the first substrate 11 and the second substrate 12, and partitions the colored region 70. The sealing portion 55 has insulating properties. The sealing portion 55 surrounds the colored region 70 in a plan view.

A constituent material of the sealing portion 55 is not particularly limited as long as it is an insulating material having transparency, and examples thereof include resin materials such as an acrylic resin and an epoxy resin; and inorganic oxides such as a silicon oxide (SiO₂), a silicon oxynitride (SiON), and an aluminum oxide (Al₂O₃).

A thickness of the sealing portion 55 is determined according to the thickness of the electrochromic element 60. The average thickness of the sealing portion 55 is preferably 20 µm or more and 100 µm or less, more preferably 30 µm or more and 80 µm or less, and still more preferably 40 µm or more and 60 µm or less.

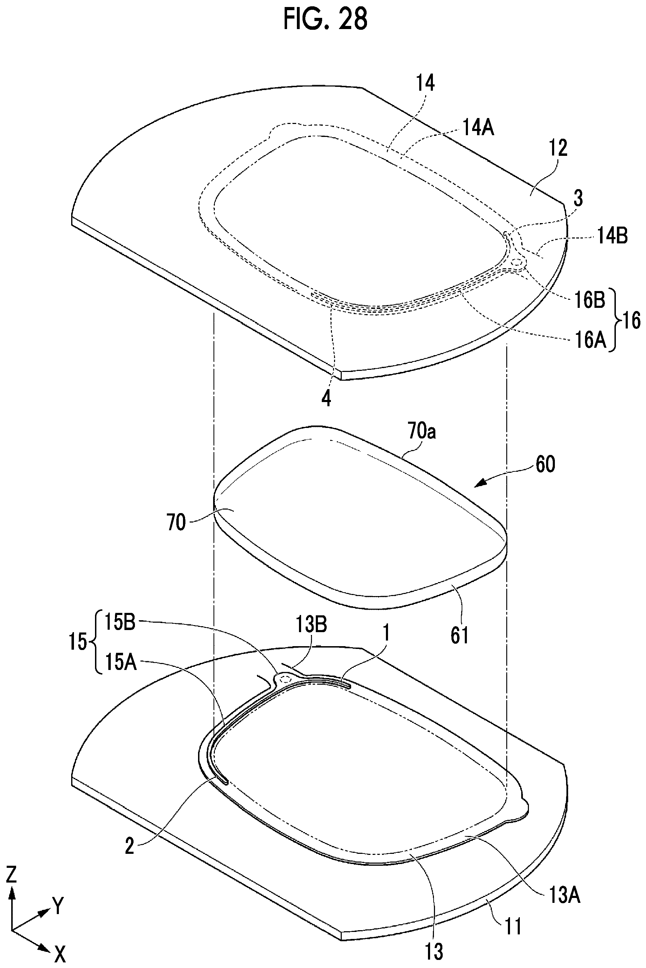

The first conductive portion 17 is formed on the sealing portion 55 from the first substrate 11 side toward the second substrate 12. The first conductive portion 17 is at a position overlapping a first lead-out portion 15B (see FIG. 28) of the first auxiliary electrode 15, and penetrates the sealing portion 55 in the thickness direction. The first conductive portion 17 is electrically connected to the first transparent electrode 13 through the first auxiliary electrode 15. The first conductive portion 17 is electrically connected to the first transparent electrode 13 at one position of the bridge part 22 side or the temple part 23 side, for example.

The second conductive portion 18 is formed on the sealing portion 55 from the second substrate 12 side toward the first substrate 11. The second conductive portion 18 is provided on a side of the colored region 70 opposite to the first conductive portion 17. The second conductive portion 18 is at a position overlapping a second lead-out portion 16B (see FIG. 28) of the second auxiliary electrode 16, and penetrates the sealing portion 55 in the thickness direction. The second conductive portion 18 is electrically connected to the second transparent electrode 14 through the second auxiliary electrode 16. The second conductive portion 18 is electrically connected to the second transparent electrode 14 at one position of the bridge part 22 side or the temple part 23 side, for example.

In this manner, the first conductive portion 17 is electrically connected to the first transparent electrode 13 at one position of the bridge part 22 side or the temple part 23 side. The second conductive portion 18 is electrically connected to the second transparent electrode 14 at one position of the bridge part 22 side or the temple part 23 side. Therefore, a voltage can be applied between the first transparent electrode 13 and the second transparent electrode 14 through the first conductive portion 17 and the second conductive portion 18. The first conductive portion 17 and the second conductive portion 18 function as connection terminals in a case where a voltage is applied between the first transparent electrode 13 and the second transparent electrode 14. In the colored region 70, color development or decolorization is performed by applying the voltage between the first transparent electrode 13 and the second transparent electrode 14.

After the step [3] or after the step [4], a voltage is applied between the first transparent electrode 13 and the second transparent electrode 14 through the first conductive portion 17 and the second conductive portion 18, whereby examination of the electrochromic element 60 can be easily carried out.

Examples of a constituent material of the first conductive portion 17 and the second conductive portion 18 include conductive pastes such as silver pastes. The constituent material of the first conductive portion 17 and the second conductive portion 18 may be a material containing a metal such as gold, copper, and alloys thereof.

Average thicknesses of the first conductive portion 17 and the second conductive portion 18 are each independently preferably 20 µm or more and 100 µm or less, and more preferably 40 µm or more and 80 µm or less.

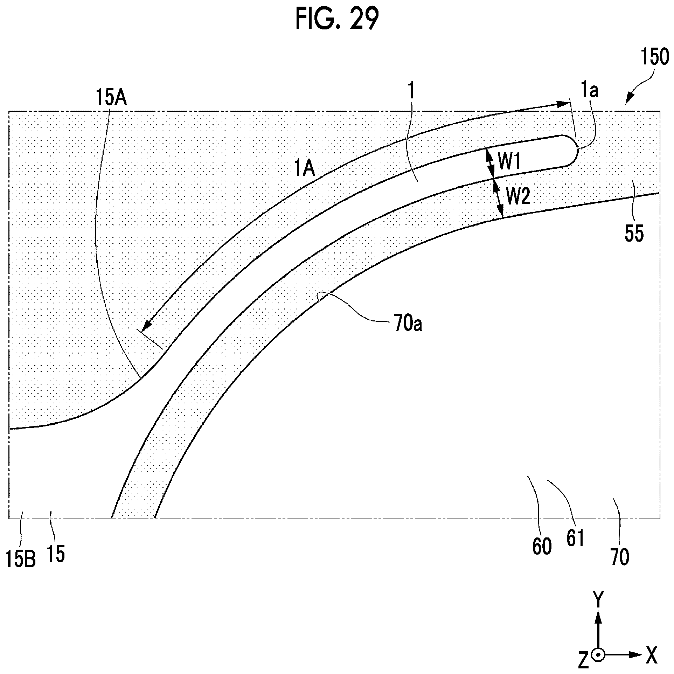

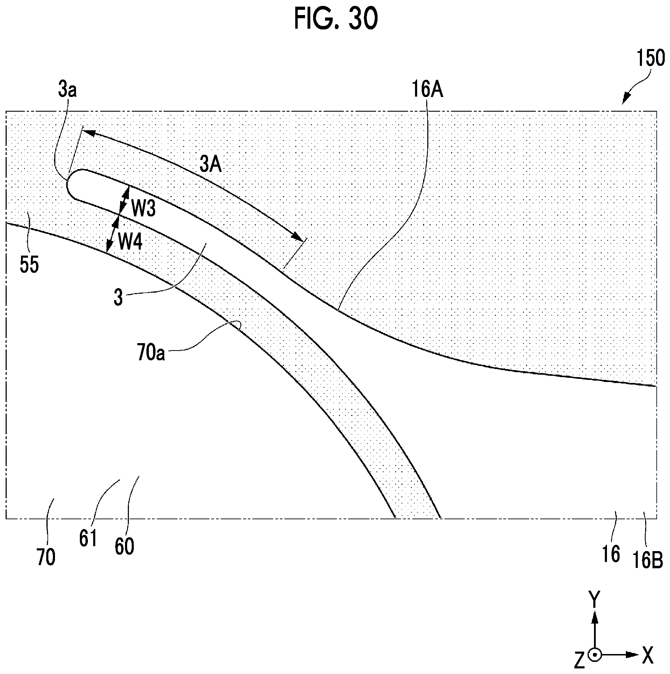

FIG. 28 is an exploded perspective view showing the electrochromic sheet 150. FIG. 29 is a plan view of a part of the electrochromic sheet 150. FIG. 29 is an enlarged view of a region R1 in FIG. 25. FIG. 30 is a plan view of a part of the electrochromic sheet 150. FIG. 30 is an enlarged view of a region R2 in FIG. 25.

In the following description, an XYZ orthogonal coordinate system is adopted. As shown in FIG. 28, the X direction is a direction connecting the first lead-out portion 15B and the second lead-out portion 16B in a plane along the surface of the first substrate 11. The Y direction is orthogonal to the X direction in the plane along the surface of the first substrate 11. The Z direction is orthogonal to both the X direction and the Y direction. The plan view means a view in parallel with the Z direction. One direction of the X direction is referred to as "+X direction". A direction opposite to the +X direction is referred to as "-X direction". One direction of the Y direction is referred to as "+Y direction". A direction opposite to the +Y direction is referred to as "-Y direction".

In FIG. 28, the first transparent electrode 13 and the second transparent electrode 14 are viewed as the shape in the lens 30.

The first transparent electrode 13 includes, for example, a first main body portion 13A and a first protruding portion 13B. The first main body portion 13A has, for example, a shape corresponding to the lens 30 (see FIG. 23) in a plan view. The first main body portion 13A may have, for example, a circular shape or an elliptical shape in a plan view. The first protruding portion 13B protrudes in the -X direction (direction away from the colored region 70) from a portion of the outer peripheral edge of the first main body portion 13A on the -X direction side. The first protruding portion 13B is formed at a position corresponding to a connecting portion (portion where the bridge part 22 or the temple part 23 is connected to the rim part 21).

The second transparent electrode 14 includes, for example, a second main body portion 14A and a second protruding portion 14B. The second main body portion 14A has, for example, a shape corresponding to the lens 30 (see FIG. 23) in a plan view. The second main body portion 14A may have, for example, a circular shape or an elliptical shape in a plan view. The second protruding portion 14B protrudes in the +X direction (direction away from the colored region 70) from a portion of the outer peripheral edge of the second main body portion 14A on the +X direction side. The second protruding portion 14B is formed at a position corresponding to a connecting portion (portion where the bridge part 22 or the temple part 23 is connected to the rim part 21).

The first auxiliary electrode 15 includes a first counter electrode portion 15A and a first lead-out portion 15B. The first counter electrode portion 15A extends along a part of an outer peripheral edge 70a of the colored region 70. Specifically, the first counter electrode portion 15A extends along a portion of the outer peripheral edge 70a of the colored region 70 on the -X direction side. The first counter electrode portion 15A is formed to be separated from the outer peripheral edge 70a of the colored region 70.

The first auxiliary electrode 15 is provided by being laminated on the first transparent electrode 13. The first auxiliary electrode 15 is electrically connected to the first transparent electrode 13. Therefore, the first auxiliary electrode 15 is electrically connected to the electrochromic element 60. The first auxiliary electrode 15 is electrically connected to the first conductive portion 17. The first auxiliary electrode 15 electrically connects the first transparent electrode 13 and the first conductive portion 17 (see FIG. 26).

An electrical resistance value of the first auxiliary electrode 15 is lower than an electrical resistance value of the first transparent electrode 13. That is, the first auxiliary electrode 15 has a lower electrical resistance than the first transparent electrode 13. Therefore, it is possible to impart high electrical conductivity to the laminate of the first transparent electrode 13 and the first auxiliary electrode 15. The laminate of the first transparent electrode 13 and the first auxiliary electrode 15 functions as a wiring line having low electrical resistance, which is electrically connected to the electrochromic element 60 (see FIG. 26).

As shown in FIG. 25, the first counter electrode portion 15A includes a first extending portion 1 and a second extending portion 2.

The first extending portion 1 is a linear portion which extends one side (clockwise direction in FIG. 25) along the outer peripheral edge 70a of the colored region 70 with an intermediate position (position where the first lead-out portion 15B is formed) of the first counter electrode portion 15A in a length direction as a starting point (first base). The first extending portion 1 approaches the second counter electrode portion 16A (specifically, a third extending portion 3) while moving in the +Y direction (upward in FIG. 25). The first extending portion 1 is curved such that an inclination angle (inclination angle with respect to the X direction) is gradually decreased toward the distal end.

A length of the first extending portion 1 can be, for example, 5 mm or more and 20 mm or less. In a case where the length of the first extending portion 1 is in this range, a voltage can be applied to a wide range of the colored region 70 without bias.

As shown in FIG. 29, in a plan view, a width W1 of a portion 1A (distal end portion 1A) including at least a distal end 1a (one end) of the first extending portion 1 is 0.1 mm or more and 1.0 mm or less. Since the width W1 of the distal end portion 1A is 0.1 mm or more, the electrical resistance can be reduced. Therefore, the color development and decolorization in the colored region 70 can be performed without delay. The width W1 of the distal end portion 1A is 1.0 mm or less and thereby being difficult to be visually recognized from the outside. Therefore, the first extending portion 1 is not noticeable. Accordingly, aesthetic appearance of the sunglasses 100 can be enhanced. The width W1 may be 0.3 mm or more and 1.0 mm or less. The width W1 is preferably 0.3 mm or more and 0.7 mm or less.

In the present embodiment, the distal end portion 1A of the first extending portion 1 is a length portion having a certain width (the width W1).

The distal end portion of the first extending portion 1 is not limited to a shape having a constant width, and may have a shape in which the width gradually decreases toward the distal end. In this case, the width of the distal end portion may be an average width in a predetermined length range (for example, a length range of 5 mm from the distal end). The width of the distal end portion may be a width at the distal end.

In a plan view, a distance W2 between the first counter electrode portion 15A (for example, the first extending portion 1 and the second extending portion 2) and the outer peripheral edge 70a of the colored region 70 is preferably 0.25 mm or more. In a case where the distance W2 is 0.25 mm or more, the first counter electrode portion 15A is positioned sufficiently away from the colored region 70. Therefore, the influence from the colored region 70 can be suppressed, and the deterioration of the first counter electrode portion 15A can be suppressed. In a case where the distance W2 is 0.25 mm or more, the influence from the outside on the colored region 70 can be reduced. Therefore, the characteristics of the colored region 70 can be enhanced. The distance W2 is preferably 0.5 mm or more. The distance W2 may be, for example, 2 mm or less.

As shown in FIG. 25, the second extending portion 2 is a linear portion which extends the other side (counterclockwise direction in FIG. 25) along the outer peripheral edge 70a of the colored region 70 with an intermediate position (position where the first lead-out portion 15B is formed) of the first counter electrode portion 15A in a length direction as a starting point (first base). The second extending portion 2 extends in the - Y direction (downward in FIG. 25) while approaching the second counter electrode portion 16A (specifically, a fourth extending portion 4). The second extending portion 2 is curved such that an inclination angle (inclination angle with respect to the X direction) is gradually decreased toward the distal end.

In a plan view, a width of a portion (distal end portion) including at least a distal end (one end) of the second extending portion 2 may be 0.1 mm or more and 1.0 mm or less. In a case where the width of the distal end portion is 0.1 mm or more, the electrical resistance can be reduced. Therefore, the color development and decolorization in the colored region 70 can be performed without delay. In a case where the width of the distal end portion is 1.0 mm or less, it is difficult to visually recognize the distal end portion from the outside. Therefore, the second extending portion 2 is not noticeable. Accordingly, aesthetic appearance of the sunglasses 100 can be enhanced. The width of the distal end portion may be 0.3 mm or more and 1.0 mm or less.

In the present embodiment, a distal end portion of the second extending portion 2 is a length portion having a certain width.

The distal end portion of the second extending portion 2 is not limited to a shape having a constant width, and may have a shape in which the width gradually decreases toward the distal end. In this case, the width of the distal end portion may be an average width in a predetermined length range (for example, a length range of 5 mm from the distal end). The width of the distal end portion may be a width at the distal end.

The second extending portion 2 may be longer than the first extending portion 1, or may have the same length as the first extending portion 1. A dimension of the second extending portion 2 in the Y direction may be larger than a dimension of the first extending portion 1 in the Y direction.

Since the first counter electrode portion 15A includes the first extending portion 1 and the second extending portion 2, a voltage can be applied to a wide range of the colored region 70 without bias. Therefore, it is possible to achieve sufficient color development (coloration) and decolorization in a wide range of the colored region 70.

As shown in FIG. 28, the first lead-out portion 15B protrudes from a part of the outer peripheral edge of the first counter electrode portion 15A in the -X direction (direction away from the colored region 70). The first lead-out portion 15B is formed, for example, at a position overlapping the first protruding portion 13B of the first transparent electrode 13. The first lead-out portion 15B is formed at a position corresponding to a connecting portion (portion where the bridge part 22 or the temple part 23 is connected to the rim part 21).

The second auxiliary electrode 16 includes a second counter electrode portion 16A and a second lead-out portion 16B. The second counter electrode portion 16A extends along another part of the outer peripheral edge 70a of the colored region 70 (part of the outer peripheral edge 70a of the colored region 70, which is different from a part where the first counter electrode portion 15A is formed). Specifically, the second counter electrode portion 16A extends along a portion of the outer peripheral edge 70a of the colored region 70 on the +X direction side. The second counter electrode portion 16A is formed to be separated from the outer peripheral edge 70a of the colored region 70.

The second counter electrode portion 16A is present on a side of the colored region 70 opposite to the first counter electrode portion 15A. The second counter electrode portion 16A is located at a position facing the first counter electrode portion 15A in the X direction.

The second auxiliary electrode 16 is provided by being laminated on the second transparent electrode 14. The second auxiliary electrode 16 is electrically connected to the second transparent electrode 14. Therefore, the second auxiliary electrode 16 is electrically connected to the electrochromic element 60. The second auxiliary electrode 16 is electrically connected to the second conductive portion 18. The second auxiliary electrode 16 electrically connects the second transparent electrode 14 and the second conductive portion 18 (see FIG. 26).

An electrical resistance value of the second auxiliary electrode 16 is lower than an electrical resistance value of the second transparent electrode 14. That is, the second auxiliary electrode 16 has a lower electrical resistance than the second transparent electrode 14. Therefore, it is possible to impart high electrical conductivity to the laminate of the second transparent electrode 14 and the second auxiliary electrode 16. The laminate of the second transparent electrode 14 and the second auxiliary electrode 16 functions as a wiring line having low electrical resistance, which is electrically connected to the electrochromic element 60 (see FIG. 26).

As shown in FIG. 25, the second counter electrode portion 16A includes a third extending portion 3 and a fourth extending portion 4.

The third extending portion 3 is a linear portion which extends one side (counterclockwise direction in FIG. 25) along the outer peripheral edge 70a of the colored region 70 with an intermediate position (position where the second lead-out portion 16B is formed) of the second counter electrode portion 16A in a length direction as a starting point (second base). The third extending portion 3 approaches the first counter electrode portion 15A (specifically, the first extending portion 1) while moving in the +Y direction (upward in FIG. 25). The third extending portion 3 is curved such that an inclination angle (inclination angle with respect to the X direction) is gradually decreased toward the distal end.

A length of the third extending portion 3 can be, for example, 5 mm or more and 20 mm or less. **In** a case where the length of the third extending portion 3 is in this range, a voltage can be applied to a wide range of the colored region 70 without bias.

As shown in FIG. 30, in a plan view, a width W3 of a portion 3A (distal end portion 3A) including at least a distal end 3a (one end) of the third extending portion 3 is 0.1 mm or more and 1.0 mm or less. Since the width W3 of the distal end portion 3A is 0.1 mm or more, the electrical resistance can be reduced. Therefore, the color development and decolorization in the colored region 70 can be performed without delay. The width W3 of the distal end portion 3A is 1.0 mm or less and thereby being difficult to be visually recognized from the outside. Therefore, the third extending portion 3 is not noticeable. Accordingly, aesthetic appearance of the sunglasses 100 can be enhanced. The width W3 may be 0.3 mm or more and 1.0 mm or less. The width W3 is preferably 0.3 mm or more and 0.7 mm or less.

In the present embodiment, the distal end portion 3A of the third extending portion 3 is a length portion having a certain width (the width W3).

The distal end portion of the third extending portion 3 is not limited to a shape having a constant width, and may have a shape in which the width gradually decreases toward the distal end. In this case, the width of the distal end portion may be an average width in a predetermined length range (for example, a length range of 5 mm from the distal end). The width of the distal end portion may be a width at the distal end.

In a plan view, a distance W4 between the second counter electrode portion 16A (for example, the third extending portion 3 and the fourth extending portion 4) and the outer peripheral edge 70a of the colored region 70 is preferably 0.25 mm or more. In a case where the distance W4 is 0.25 mm or more, the second counter electrode portion 16A is positioned sufficiently away from the colored region 70. Therefore, the influence from the colored region 70 can be suppressed, and the deterioration of the second counter electrode portion 16A can be suppressed. In a case where the distance W4 is 0.25 mm or more, the influence from the outside on the colored region 70 can be reduced. Therefore, the characteristics of the colored region 70 can be enhanced. The distance W4 is preferably 0.5 mm or more. The distance W4 may be, for example, 2 mm or less.

As shown in FIG. 25, the fourth extending portion 4 is a linear portion which extends the other side (clockwise direction in FIG. 25) along the outer peripheral edge 70a of the colored region 70 with an intermediate position (position where the second lead-out portion 16B is formed) of the second counter electrode portion 16A in a length direction as a starting point (second base). The fourth extending portion 4 extends in the -Y direction (downward in FIG. 25) while approaching the first counter electrode portion 15A (specifically, the second extending portion 2). The fourth extending portion 4 is curved such that an inclination angle (inclination angle with respect to the X direction) is gradually decreased toward the distal end.

**In** a plan view, a width of a portion (distal end portion) including at least a distal end (one end) of the fourth extending portion 4 may be 0.1 mm or more and 1.0 mm or less. **In** a case where the width of the distal end portion is 0.1 mm or more, the electrical resistance can be reduced. Therefore, the color development and decolorization in the colored region 70 can be performed without delay. **In** a case where the width of the distal end portion is 1.0 mm or less, it is difficult to visually recognize the distal end portion from the outside. Therefore, the fourth extending portion 4 is not noticeable. Accordingly, aesthetic appearance of the sunglasses 100 can be enhanced. The width of the distal end portion may be 0.3 mm or more and 1.0 mm or less.

In the present embodiment, a distal end portion of the fourth extending portion 4 is a length portion having a certain width.

The distal end portion of the fourth extending portion 4 is not limited to a shape having a constant width, and may have a shape in which the width gradually decreases toward the distal end. In this case, the width of the distal end portion may be an average width in a predetermined length range (for example, a length range of 5 mm from the distal end). The width of the distal end portion may be a width at the distal end.

The fourth extending portion 4 may be longer than the third extending portion 3, or may have the same length as the third extending portion 3. A dimension of the fourth extending portion 4 in the Y direction may be larger than a dimension of the third extending portion 3 in the Y direction.

Since the second counter electrode portion 16A includes the third extending portion 3 and the fourth extending portion 4, a voltage can be applied to a wide range of the colored region 70 without bias. Therefore, it is possible to achieve sufficient color development (coloration) and decolorization in a wide range of the colored region 70.

The first extending portion 1 and the third extending portion 3 are disposed to face each other in the X direction. The first extending portion 1 and the third extending portion 3 extend in a direction in which they approach each other. The first extending portion 1 and the third extending portion 3 have distal ends facing each other. The second extending portion 2 and the fourth extending portion 4 are disposed to face each other in the X direction. The second extending portion 2 and the fourth extending portion 4 extend in a direction in which they approach each other. The second extending portion 2 and the fourth extending portion 4 have distal ends facing each other.

As shown in FIG. 28, the second lead-out portion 16B protrudes from a part of the outer peripheral edge of the second counter electrode portion 16A in the +X direction (direction away from the colored region 70). The second lead-out portion 16B is formed, for example, at a position overlapping the second protruding portion 14B of the second transparent electrode 14. The second lead-out portion 16B is formed at a position corresponding to a connecting portion (portion where the bridge part 22 or the temple part 23 is connected to the rim part 21).

Examples of a constituent material of the first auxiliary electrode 15 and the second auxiliary electrode 16 include metals such as silver, aluminum, copper, chromium, and molybdenum. As the constituent material of the first auxiliary electrode 15 and the second auxiliary electrode 16, a conductive ink can also be used. As the constituent material of the first auxiliary electrode 15 and the second auxiliary electrode 16, one of these materials may be used, or two or more thereof may be used in combination. The first auxiliary electrode 15 and the second auxiliary electrode 16 can be formed, for example, by sputtering, vapor deposition, or the like. The first auxiliary electrode 15 and the second auxiliary electrode 16 can also be formed by printing using a conductive ink.

An average thickness of the first auxiliary electrode 15 and the second auxiliary electrode 16 is preferably 1 nm or more and 100 nm or less, and more preferably 5 nm or more and 50 nm or less.

The total thickness of the electrochromic sheet 150 is preferably 0.3 mm or more and 10.0 mm or less, and more preferably 0.5 mm or more and 5.0 mm or less. By setting the total thickness of the electrochromic sheet 150 to be within the above-described range, excellent strength can be imparted to the electrochromic sheet 150, and thermoplasticity in a case of molding the electrochromic sheet 150 into the curved sheet 120 can be improved.

In the electrochromic sheet 150 according to the present embodiment, since the width W1 of the distal end portion 1A of the first extending portion 1 of the first counter electrode portion 15A and the width W3 of the distal end portion 3A of the third extending portion 3 of the second counter electrode portion 16A are 0.1 mm or more and 1.0 mm or less, the color development and decolorization in the colored region 70 can be performed without delay, and moreover, the first auxiliary electrode 15 and the second auxiliary electrode 16 are not noticeable. Therefore, it is possible to achieve the electrochromic sheet 150 having favorable electrochromic characteristics and excellent aesthetic appearance.

The electrochromic sheet 150 includes the first electrochromic layer 63 in which color changes by an oxidation reaction, the second electrochromic layer 64 in which color changes by a reduction reaction, and the electrolyte layer 65. Since the electrochromic sheet 150 includes two electrochromic layers, a driving voltage of the electrochromic element 60 can be suppressed. Therefore, the repetitive durability of the electrochromic element 60 can be improved.

In the electrochromic sheet 150, the first counter electrode portion 15A has the first extending portion 1 and the second extending portion 2. The second counter electrode portion 16A has the third extending portion 3 and the fourth extending portion 4. In the electrochromic sheet 150, the widths W1 and W3 of the distal end portions 1A and 3A of the first extending portion 1 and the third extending portion 3 facing each other are in the above-described range (0.1 mm or more and 1.0 mm or less). In the electrochromic sheet 150, the first extending portion 1 and the third extending portion 3 are not noticeable, which is advantageous in terms of designability and the like.

In a case where the distances W2 and W4 between the first counter electrode portion 15A and the second counter electrode portion 16A and the outer peripheral edge 70a of the colored region 70 are 0.25 mm or more, the first counter electrode portion 15A and the second counter electrode portion 16A are positioned sufficiently away from the colored region 70. Therefore, the influence from the colored region 70 can be suppressed, and the deterioration of the first counter electrode portion 15A and the second counter electrode portion 16A can be suppressed.

The lens 30 and the sunglasses 100 have the same effect as the electrochromic sheet 150.

The electrochromic sheet, the lens for spectacles, and the spectacles of the embodiment have been described, but the present invention is not limited thereto.

For example, the electrochromic sheet 150 shown in FIG. 27 includes two electrochromic layers 63 and 64, but the number of electrochromic layers is not limited to two. The number of electrochromic layers may be one or may be plural (any number of 2 or more).

The color of the electrochromic layer may change by at least one of an oxidation reaction or a reduction reaction. For example, the electrochromic layer may use only the change in color due to the oxidation reaction, or may use only the change in color due to the reduction reaction. The electrochromic layer may be configured to change color by both the oxidation reaction and the reduction reaction. The electrochromic sheet may include an electrochromic layer in which color changes by at least one of an oxidation reaction or a reduction reaction.

In the electrochromic sheet 150 shown in FIG. 25, the widths W1 and W3 of the distal end portions 1A and 3A of the first extending portion 1 and the third extending portion 3 are set to 0.1 mm or more and 1.0 mm or less, but the electrochromic sheet according to the embodiment is not limited to this configuration.

In the first counter electrode portion, it is sufficient that at least one of the first extending portion or the second extending portion has a width of the distal end portion in the range (0.1 mm or more and 1.0 mm or less). For example, only the width of the distal end portion of one of the first extending portion and the second extending portion may be within the above-described range, or the widths of the distal end portions of both the first extending portion and the second extending portion may be within the above-described range.

In the second counter electrode portion, it is sufficient that at least one of the third extending portion or the fourth extending portion has a width of the distal end portion in the above-described range (0.1 mm or more and 1.0 mm or less). For example, only the width of the distal end portion of one of the third extending portion and the fourth extending portion may be within the above-described range, or the widths of the distal end portions of both the third extending portion and the fourth extending portion may be within the above-described range.

At least one of the first extending portion 1, the second extending portion 2, the third extending portion 3, or the fourth extending portion 4 may have the distal end portion having a width within the above-described range (0.1 mm or more and 1.0 mm or less). That is, the width of the distal end portion may be within the range for one or a plurality of the first extending portion 1, the second extending portion 2, the third extending portion 3 and the fourth extending portion 4.

Each layer constituting the electrochromic element 60 of the electrochromic sheet 150 shown in FIG. 27 may be replaced with another configuration exhibiting the same function. The electrochromic sheet 150 may further include another layer (interlayer) between the substrates 11 and 12 and the electrochromic element 60.

### (Sixth embodiment)

The auxiliary electrode is required to suppress deterioration due to oxidation or the like. Therefore, an electrochromic sheet may be provided with a structure which protects the auxiliary electrode. However, it is not easy to protect the auxiliary electrode without impairing aesthetic appearance of the electrochromic sheet.

An object of one aspect of the present invention is to provide an electrochromic sheet in which deterioration of an auxiliary electrode can be suppressed without impairing aesthetic appearance, a lens for spectacles, and spectacles.

### (Aspect 1)

An electrochromic sheet used for a lens for spectacles, the electrochromic sheet including: a first substrate; a second substrate which is disposed to face the first substrate; an electrochromic element which is provided between the first substrate and the second substrate and forms a colored region where color changes by application of a voltage; an insulating sealing portion which partitions the colored region; a first auxiliary electrode which is electrically connected to the electrochromic element; and a second auxiliary electrode which is electrically connected to the electrochromic element, in which the electrochromic element includes a first transparent electrode which is electrically connected to the first auxiliary electrode, a second transparent electrode which is electrically connected to the second auxiliary electrode, and one or a plurality of electrochromic layers where color changes by at least one of an oxidation reaction or a reduction reaction, the first auxiliary electrode has a first counter electrode portion which has lower electrical resistance than the first transparent electrode and extends along a part of an outer peripheral edge of the colored region, the second auxiliary electrode has a second counter electrode portion which has lower electrical resistance than the second transparent electrode and extends along another part of the outer peripheral edge of the colored region, the second counter electrode portion is on a side opposite to the first counter electrode portion with respect to the colored region and faces the first counter electrode portion, and a width of a sealing region in the sealing portion, which is a region from the outer peripheral edge of the colored region to an outer peripheral edge of the lens for spectacles, is 1 mm or more and 3 mm or less.

### (Aspect 2)

The electrochromic sheet according to the aspect 1, in which the plurality of electrolyte layers include a first electrochromic layer electrically connected to the first transparent electrode and a second electrochromic layer electrically connected to the second transparent electrode, the electrochromic element further includes an electrolyte layer filling a space between the first electrochromic layer and the second electrochromic layer, the first electrochromic layer contains a material in which color changes by an oxidation reaction, and the second electrochromic layer contains a material in which color changes by a reduction reaction.

### (Aspect 3)

The electrochromic sheet according to the aspect 1, in which, in a plan view, a distance from the first counter electrode portion and the second counter electrode portion to the outer peripheral edge of the colored region is 0.25 mm or more, and in a plan view, a distance from the first counter electrode portion and the second counter electrode portion to the outer peripheral edge of the lens for spectacles is 0.25 mm or more.

### (Aspect 4)

A lens for spectacles, including the electrochromic sheet according to any one of the aspects 1 to 3.

### (Aspect 5)

Spectacles including the lens for spectacles according to the aspect 4.

According to one aspect of the present invention, it is possible to provide an electrochromic sheet in which deterioration of an auxiliary electrode can be suppressed without impairing aesthetic appearance, a lens for spectacles, and spectacles.

### <Electrochromic sheet>

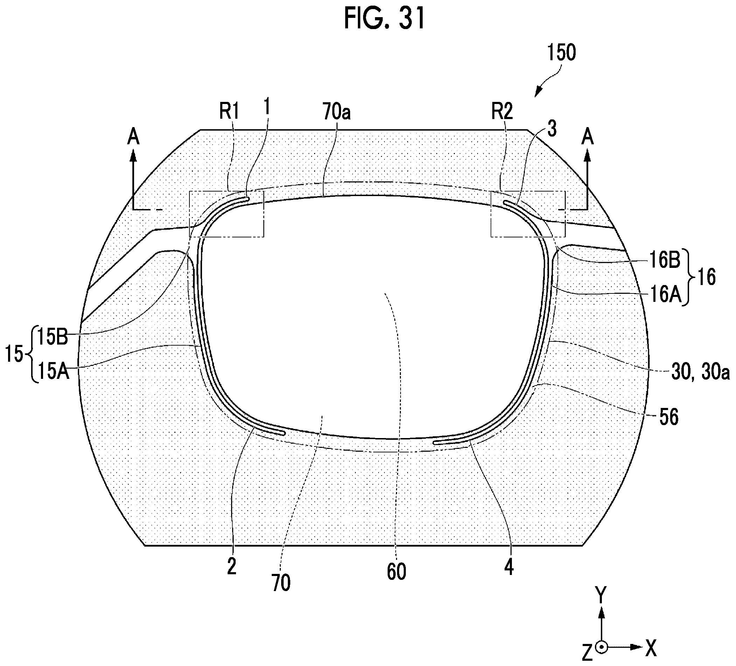

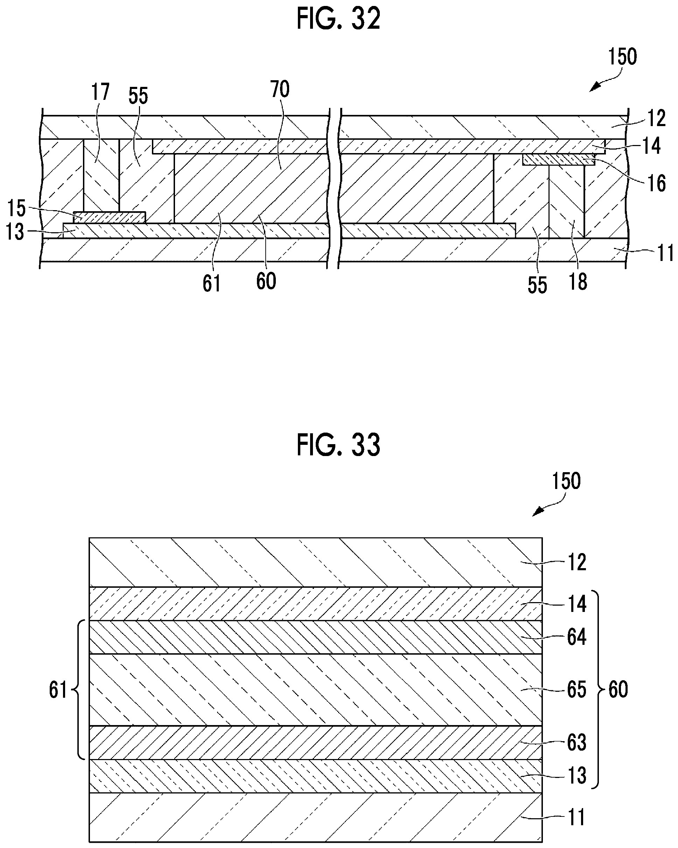

FIG. 31 is a plan view representing the electrochromic sheet 150. FIG. 32 is a schematic view showing a cross section taken along A-A shown in FIG. 31. FIG. 33 is a schematic view showing a cross section of the electrochromic element 60.

As shown in FIG. 32, the electrochromic sheet 150 includes a first substrate 11, a second substrate 12, a sealing portion 55, an electrochromic element 60, a first conductive portion 17, a second conductive portion 18, a first auxiliary electrode 15, and a second auxiliary electrode 16.

The first substrate 11 and the second substrate 12 are outermost layers of the electrochromic sheet 150. The second substrate 12 is disposed to face the first substrate 11. The first substrate 11 and the second substrate 12 have a function as a protective layer which protects the electrochromic element 60 and the like. The first substrate 11 and the second substrate 12 have transparency. The first substrate 11 and the second substrate 12 contain, for example, a transparent resin (base resin) having thermoplasticity as a main material.

Examples of the transparent resin constituting the first substrate 11 and the second substrate 12 include an acrylic resin, a polystyrene resin, a polyethylene resin, a polypropylene resin, a polyester resin (polyethylene terephthalate (PET), polyethylene naphthalate (PEN), and the like), a polycarbonate resin, a polyamide resin, a cycloolefin resin, a vinyl chloride resin, a polyacetal resin, and triacetyl cellulose (TAC). As the transparent resin, one of these resins may be used, or two or more thereof may be used in combination. As the transparent resin, a polycarbonate resin or a polyamide resin is preferable.

Since the polycarbonate resin has high transparency (light transmittance), mechanical strength (rigidity and the like), and heat resistance, transparency, impact resistance, and heat resistance of the first substrate 11 and the second substrate 12 can be improved. As the polycarbonate resin, an aromatic polycarbonate resin is preferable. The aromatic polycarbonate resin has an aromatic ring in the main chain thereof. By using the aromatic polycarbonate resin, the first substrate 11 and the second substrate 12 having excellent strength can be obtained.

The aromatic polycarbonate resin is synthesized, for example, by an interfacial polycondensation reaction of bisphenol and phosgene, an ester exchange reaction of bisphenol and diphenyl carbonate, or the like. Examples of the bisphenol include bisphenol (modified bisphenol) which is a source of a repeating unit of polycarbonate represented by Formula (1A), and bisphenol A. 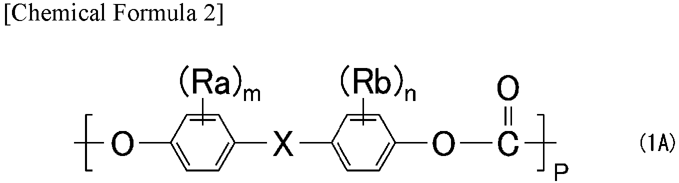 (in Formula (1A), X is an alkyl group having 1 to 18 carbon atoms, an aromatic group, or a cyclic aliphatic group, Ra and Rb are each independently an alkyl group having 1 to 12 carbon atoms, m and n are each an integer of 0 to 4, and p is the number of repeating units)

Examples of the bisphenol which is the source of the repeating unit of polycarbonate represented by Formula (1A) include 4,4'-(pentane-2,2-diyl)diphenol, 4,4'-(pentane-3,3-diyl)diphenol, 4,4'-(butane-2,2-diyl)diphenol, 1,1'-(cyclohexanediyl)diphenol, 2-cyclohexyl-1,4-bis(4-hydroxyphenyl)benzene, 2,3-biscyclohexyl-1,4-bis(4-hydroxyphenyl)benzene, 1,1'-bis(4-hydroxy-3-methylphenyl)cyclohexane, and 2,2'-bis(4-hydroxy-3-methylphenyl)propane. As the bisphenol, one of these compounds may be used, or two or more thereof may be used in combination.

It is preferable that the polycarbonate resin has, as a main component, a bisphenol-type polycarbonate resin having a skeleton derived from bisphenol. By using the bisphenol-type polycarbonate resin, the first substrate 11 and the second substrate 12 exhibit excellent strength.

The first substrate 11 and the second substrate 12 may be colorless or colored. Colors of the first substrate 11 and the second substrate 12 are not particularly limited, and may be red, blue, yellow, or the like.

The colors of the first substrate 11 and the second substrate 12 can be selected by containing a dye or a pigment in the first substrate 11 and the second substrate 12. Examples of the dye include an acidic dye, a direct dye, a reactive dye, and a basic dye. As the dye, one of these dyes may be used, or two or more may be used in combination.

The first substrate 11 and the second substrate 12 may contain additives such as an antioxidant, a filler, a plasticizer, a light stabilizer, an ultraviolet absorber, a heat ray absorber, and a flame retardant, as necessary. The first substrate 11 and the second substrate 12 may be stretched or may not be stretched.

A refractive index of the first substrate 11 and the second substrate 12 at a wavelength of 589 nm is preferably 1.3 or more and 1.8 or less, and more preferably 1.4 or more and 1.65 or less. By setting the refractive index of the first substrate 11 and the second substrate 12 to be within the range, the function of the electrochromic element 60 can be enhanced.

An average thickness of the first substrate 11 and the second substrate 12 is, for example, 0.05 mm or more and 10.0 mm or less, preferably 0.3 mm or more and 5.0 mm or less.

The electrochromic element 60 is a light emitting element which can switch between color development (coloring) and decolorization at any timing by switching ON/OFF of the switch 25 (see FIG. 23). The electrochromic element 60 (specifically, a main portion 61) forms a colored region 70 partitioned by the sealing portion 55. The electrochromic element 60 is provided between the first substrate 11 and the second substrate 12.

As shown in FIG. 33, the electrochromic element 60 includes a first transparent electrode 13, a first electrochromic layer 63, an electrolyte layer 65, a second electrochromic layer 64, and a second transparent electrode 14.

The first electrochromic layer 63, the electrolyte layer 65, and the second electrochromic layer 64 constitute the main portion 61. The main portion 61 forms the colored region 70. Color of the colored region 70 changes by application of a voltage.

The first transparent electrode 13 is laminated on an inner surface of the first substrate 11. The second transparent electrode 14 is laminated on an inner surface of the second substrate 12.

The first transparent electrode 13 and the second transparent electrode 14 are electrodes which supply electrons or receive electrons in a case where a positive voltage or a negative voltage is applied to the electrochromic element 60, by switching the switch 25 (see FIG. 23).

The first transparent electrode 13 and the second transparent electrode 14 have transparency. A constituent material of the first transparent electrode 13 and the second transparent electrode 14 is a conductive material. Examples of the constituent material of the first transparent electrode 13 and the second transparent electrode 14 include oxides such as indium tin oxide (ITO), F-doped tin oxide (FTO), antimony tin oxide (ATO), indium zinc oxide (IZO), In₂O₃, SnO₂, Sb-containing SnO₂, and Al-containing ZNo. As the constituent material of the first transparent electrode 13 and the second transparent electrode 14, one of these materials may be used, or two or more thereof may be used in combination.

A thickness of the first transparent electrode 13 and the second transparent electrode 14 is determined such that an electrical resistance value required for a redox reaction of the electrochromic layers 63 and 64 can be obtained. In a case where ITO is used as the constituent material of the first transparent electrode 13 and the second transparent electrode 14, average thicknesses of the first transparent electrode 13 and the second transparent electrode 14 are, for example, each independently 50 nm or more and 200 nm or less, preferably 50 nm or more and 150 nm or less, and more preferably 60 nm or more and 130 nm or less.

The first electrochromic layer 63 (electrochromic layer) is a layer in which color changes. The first electrochromic layer 63 contains a material which is colored by an oxidation reaction as a main material. Examples of the material which is colored by an oxidation reaction include a polymerized substance of a radically polymerizable compound having a triarylamine structure, a bisacridane compound, triphenylamine, benzidine, a Prussian blue-type complex, and nickel oxide. As the material which is colored by an oxidation reaction, one of these materials may be used, or two or more thereof may be used in combination.

Examples of the polymerized substance of the radically polymerizable compound having a triarylamine structure include substances described in Japanese Unexamined Patent Application Publication No. 2016-45464, Japanese Unexamined Patent Application Publication No. 2020-138925, and the like.

Examples of the Prussian blue-type complex include Fe(III)₄[Fe(II)(CN)₆]₃.

Among the above, the polymerized substance of the radically polymerizable compound having a triarylamine structure is preferable. By using the polymerized substance, an electrochromic element which can be operated at a constant voltage, has excellent repetitive durability, and has high contrast can be obtained.

The polymerized substance of the radically polymerizable compound having a triarylamine structure may contain other radically polymerizable compounds different from the radically polymerizable compound having a triarylamine structure. The radically polymerizable compound having a triarylamine structure and the other radically polymerizable compounds may be crosslinked.

An average thickness of the first electrochromic layer 63 is preferably 0.1 µm or more and 30 µm or less, and more preferably 0.4 µm or more and 10 µm or less.

The second electrochromic layer 64 (electrochromic layer) is a layer in which color changes. The second electrochromic layer 64 contains a material which is colored by a reduction reaction as a main material. As the material which is colored by a reduction reaction, it is preferable to use a material having the same tone as the first electrochromic layer 63. As a result, the maximum color optical density can be increased, and thus the contrast can be improved. As the material which is colored by a reduction reaction, a material having a different tone from the first electrochromic layer 63 may be used. In this case, color mixing can be performed.

By coloring both of the two electrochromic layers 63 and 64, redox coloring agents of the electrochromic layers 63 and 64 can be simultaneously developed. Therefore, the color development speed can be improved. By coloring both of the electrochromic layers 63 and 64, a driving voltage of the electrochromic element 60 can be suppressed. Therefore, the repetitive durability of the electrochromic element 60 can be improved.

Examples of the material which is colored by a reduction reaction include an inorganic electrochromic compound, an organic electrochromic compound, and a conductive polymer. As the material which is colored by a reduction reaction, one of these materials may be used, or two or more thereof may be used in combination.

Examples of the inorganic electrochromic compound include tungsten oxide, molybdenum oxide, iridium oxide, and titanium oxide. Among the above, tungsten oxide is preferable. Since tungsten oxide has a low reduction potential, decolorization potential thereof is low. Since tungsten oxide is an inorganic material, it has excellent durability.

Examples of the organic electrochromic compound include low-molecular-weight organic electrochromic compounds such as an azobenzene-based compound, an anthraquinone-based compound, a diarylethene-based compound, a dihydropyrene-based compound, a dipyridine-based compound, a styryl-based compound, a stilbene spiropyran-based compound, a spirooxazine-based compound, a spirothiophene-based compound, a thioindigo-based compound, a tetrathiafulvalene-based compound, a terephthalic acid-based compound, a triphenylmethane-based compound, a triphenylamine-based compound, a naphthopyrane-based compound, a viologen-based compound, a pyrazoline-based compound, a phenazine-based compound, a phenylenediamine-based compound, a phenoxazine-based compound, a phenothiazine-based compound, a phthalocyanine-based compound, a fluoran-based compound, a fulgide-based compound, a benzopyrane-based compound, and a metallocene-based compound. Among the above, a viologen-based compound or a dipyridine-based compound is preferable. The viologen-based compound and the dipyridine-based compound have a low decolorization potential and exhibit a favorable color value.

Examples of the viologen-based compound include compounds described in Japanese Patent (Granted) Publication No. 3955641, Japanese Unexamined Patent Application Publication No. 2007-171781, and the like. Examples of the dipyridine-based compound include compounds described in Japanese Unexamined Patent Application Publication No. 2007-171781A, Japanese Unexamined Patent Application Publication No. 2008-116718A, and the like.

Examples of the conductive polymer include polypyrrole, polythiophene, polyaniline, and derivatives thereof.

An average thickness of the second electrochromic layer 64 is preferably 0.2 µm or more and 5.0 µm or less, and more preferably 1.0 µm or more and 4.0 µm or less. In a case where the average thickness of the second electrochromic layer 64 is 0.2 µm or more, the color optical density can be increased. In a case where the average thickness of the second electrochromic layer 64 is 5.0 µm or less, the manufacturing cost can be reduced. In a case where the average thickness of the second electrochromic layer 64 is 5.0 µm or less, a decrease in visibility due to coloration is less likely to occur.

The electrolyte layer 65 fills a space between the first electrochromic layer 63 and the second electrochromic layer 64. The electrolyte layer 65 contains an electrolyte having ion conductivity.

Examples of the electrolyte include inorganic ionic salts such as an alkali metal salt and an alkaline earth metal salt; and supporting salts such as a quaternary ammonium salt, acids, and alkalis. Examples of a counterion (anion) of the electrolyte include a halogen, a thiocyanate ion (SCN⁻), a chlorate ion (ClO₃⁻), a perchlorate ion (ClO₄⁻), a tetrafluoroborate ion (BF₄⁻), a hexafluorophosphate ion (PF₆⁻), a trifluoromethanesulfonate ion (CF₃SO₃⁻), a trifluoroacetate ion (CF₃COO⁻), and a bisfluorosulfonium imide (N(SO₂F)₂⁻).

Specific examples of such an electrolyte include LiClO₄, LiBF₄, LiAsF₆, LiPF₆, LiCF₃SO₃, LiCF₃COO, KCl, NaClO₃, NaCl, NaBF₄, NaSCN, KBF₄, Mg(ClO₄)₂, and Mg(BF₄)₂. As the electrolyte, one of these materials may be used, or two or more thereof may be used in combination.

As the material of the electrolyte, an ionic liquid can also be used. Among ionic liquids, an organic ionic liquid has a molecular structure which exhibits a liquid in a wide temperature range including room temperature, and thus is easy to handle.

Examples of a cationic component of the organic ionic liquid include imidazole derivatives such as N,N-dimethylimidazolium salt, N,N-methylethylimidazolium salt, and N,N-methylpropylimidazolium salt; pyridinium derivatives such as N,N-dimethylpyridinium salt and N,N-methylpropylpyridinium salt; and aliphatic quaternary ammonium compounds such as trimethylpropylammonium salt, trimethylhexylammonium salt, and triethylhexylammonium salt. As an anionic component, a compound containing fluorine is preferably used in consideration of stability in the atmosphere. Examples of the anionic component include BF₄⁻, CF₃SO₃⁻, PF₄⁻, and (CF₃SO₂)₂N⁻.

As a material of the electrolyte, an ionic liquid in which the cationic component and the anionic component are combined is preferable.

The ionic liquid may be directly dissolved in any of a photopolymerizable monomer, an oligomer, or a liquid crystal material. In a case where solubility of the ionic liquid in these materials is low, a solution obtained by dissolving the ionic liquid in a small amount of a solvent in advance can be mixed with any of the photopolymerizable monomer, the oligomer, or the liquid crystal material.

Examples of the solvent include propylene carbonate, acetonitrile, γ-butyrolactone, ethylene carbonate, sulfolane, dioxolane, tetrahydrofuran, 2-methyltetrahydrofuran, dimethyl sulfoxide, 1,2-dimethoxyethane, 1,2-ethoxymethoxyethane, polyethylene glycol, alcohols, and mixed solvents thereof.

The electrolyte may be a low-viscosity liquid. The electrolyte may be in various forms such as a gel-like form, a polymer crosslinked form, and a liquid crystal dispersed form. It is preferable that the electrolyte is in a gel-like form or a solid-like form. As a result, it is possible to improve element intensity of the electrochromic element 60, improve reliability, and the like.

As a method of forming the electrolyte layer 65 in the form of a solid, for example, a method of holding a liquid containing an electrolyte and a solvent in a resin is preferable. In this manner, both the high ion conductivity and the high solid strength of the electrolyte layer 65 can be obtained. As the resin, for example, a photocurable resin is preferable. As a result, the solid electrolyte layer 65 can be obtained at a low temperature and in a short time, as compared with a case where the solid electrolyte layer 65 is obtained by thermal polymerization or solvent vaporization.

An average thickness of the electrolyte layer 65 is preferably 20 µm or more and 100 µm or less, more preferably 30 µm or more and 80 µm or less, and still more preferably 30 µm or more and 70 µm or less.

In addition, an interlayer such as an insulating porous layer and a protective layer may be provided between the respective layers between the first transparent electrode 13 and the second transparent electrode 14.

As shown in FIG. 32, the sealing portion 55 is disposed between the first substrate 11 and the second substrate 12, and partitions the colored region 70. The sealing portion 55 has insulating properties. The sealing portion 55 surrounds the colored region 70 in a plan view.

A constituent material of the sealing portion 55 is not particularly limited as long as it is an insulating material having transparency, and examples thereof include resin materials such as an acrylic resin and an epoxy resin; and inorganic oxides such as a silicon oxide (SiO₂), a silicon oxynitride (SiON), and an aluminum oxide (Al₂O₃).

A thickness of the sealing portion 55 is determined according to the thickness of the electrochromic element 60. The average thickness of the sealing portion 55 is preferably 20 µm or more and 100 µm or less, more preferably 30 µm or more and 80 µm or less, and still more preferably 40 µm or more and 60 µm or less.

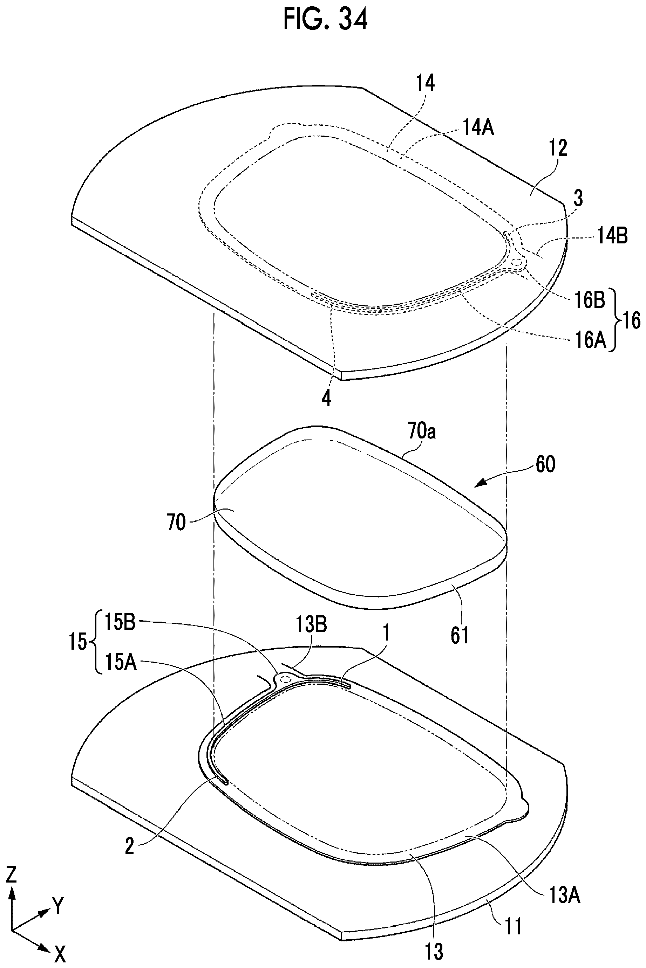

The first conductive portion 17 is formed on the sealing portion 55 from the first substrate 11 side toward the second substrate 12. The first conductive portion 17 is at a position overlapping a first lead-out portion 15B (see FIG. 34) of the first auxiliary electrode 15, and penetrates the sealing portion 55 in the thickness direction. The first conductive portion 17 is electrically connected to the first transparent electrode 13 through the first auxiliary electrode 15. The first conductive portion 17 is electrically connected to the first transparent electrode 13 at one position of the bridge part 22 side or the temple part 23 side, for example.

The second conductive portion 18 is formed on the sealing portion 55 from the second substrate 12 side toward the first substrate 11. The second conductive portion 18 is provided on a side of the colored region 70 opposite to the first conductive portion 17. The second conductive portion 18 is at a position overlapping a second lead-out portion 16B (see FIG. 34) of the second auxiliary electrode 16, and penetrates the sealing portion 55 in the thickness direction. The second conductive portion 18 is electrically connected to the second transparent electrode 14 through the second auxiliary electrode 16. The second conductive portion 18 is electrically connected to the second transparent electrode 14 at one position of the bridge part 22 side or the temple part 23 side, for example.

In this manner, the first conductive portion 17 is electrically connected to the first transparent electrode 13 at one position of the bridge part 22 side or the temple part 23 side. The second conductive portion 18 is electrically connected to the second transparent electrode 14 at one position of the bridge part 22 side or the temple part 23 side. Therefore, a voltage can be applied between the first transparent electrode 13 and the second transparent electrode 14 through the first conductive portion 17 and the second conductive portion 18. The first conductive portion 17 and the second conductive portion 18 function as connection terminals in a case where a voltage is applied between the first transparent electrode 13 and the second transparent electrode 14. In the colored region 70, color development or decolorization is performed by applying the voltage between the first transparent electrode 13 and the second transparent electrode 14.

After the step [3] or after the step [4], a voltage is applied between the first transparent electrode 13 and the second transparent electrode 14 through the first conductive portion 17 and the second conductive portion 18, whereby examination of the electrochromic element 60 can be easily carried out.

Examples of a constituent material of the first conductive portion 17 and the second conductive portion 18 include conductive pastes such as silver pastes. The constituent material of the first conductive portion 17 and the second conductive portion 18 may be a material containing a metal such as gold, copper, and alloys thereof.

Average thicknesses of the first conductive portion 17 and the second conductive portion 18 are each independently preferably 20 µm or more and 100 µm or less, and more preferably 40 µm or more and 80 µm or less.

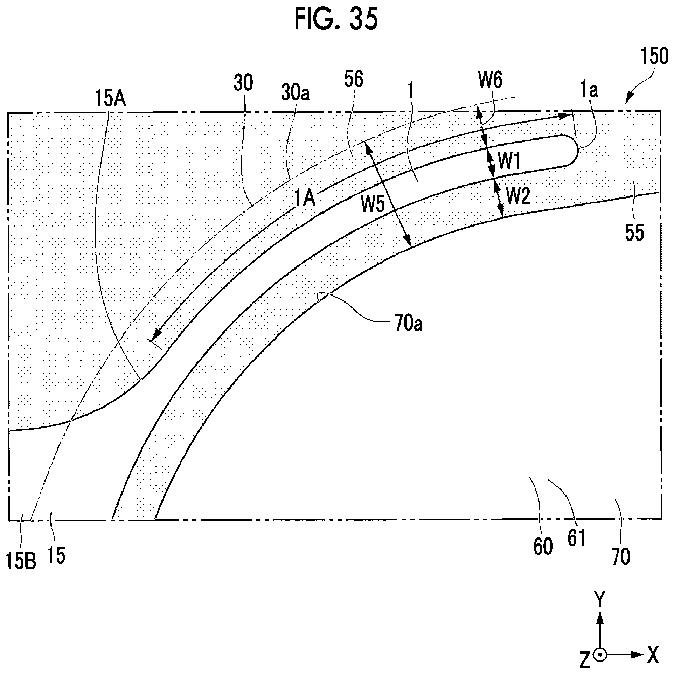

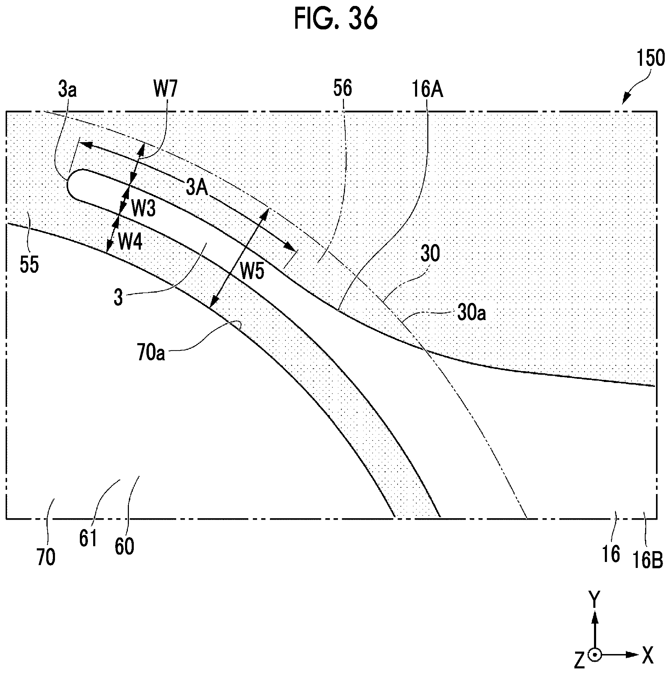

FIG. 34 is an exploded perspective view showing the electrochromic sheet 150. FIG. 35 is a plan view of a part of the electrochromic sheet 150. FIG. 35 is an enlarged view of a region R1 in FIG. 31. FIG. 36 is a plan view of a part of the electrochromic sheet 150. FIG. 36 is an enlarged view of a region R2 in FIG. 31.

In the following description, an XYZ orthogonal coordinate system is adopted. As shown in FIG. 34, the X direction is a direction connecting the first lead-out portion 15B and the second lead-out portion 16B in a plane along the surface of the first substrate 11. The Y direction is orthogonal to the X direction in the plane along the surface of the first substrate 11. The Z direction is orthogonal to both the X direction and the Y direction. The plan view means a view in parallel with the Z direction. One direction of the X direction is referred to as "+X direction". A direction opposite to the +X direction is referred to as "-X direction". One direction of the Y direction is referred to as "+Y direction". A direction opposite to the +Y direction is referred to as "-Y direction".

In FIG. 34, the first transparent electrode 13 and the second transparent electrode 14 are viewed as the shape in the lens 30.

The first transparent electrode 13 includes, for example, a first main body portion 13A and a first protruding portion 13B. The first main body portion 13A has, for example, a shape corresponding to the lens 30 (see FIG. 23) in a plan view. The first main body portion 13A may have, for example, a circular shape or an elliptical shape in a plan view. The first protruding portion 13B protrudes in the -X direction (direction away from the colored region 70) from a portion of the outer peripheral edge of the first main body portion 13A on the -X direction side. The first protruding portion 13B is formed at a position corresponding to a connecting portion (portion where the bridge part 22 or the temple part 23 is connected to the rim part 21).

The second transparent electrode 14 includes, for example, a second main body portion 14A and a second protruding portion 14B. The second main body portion 14A has, for example, a shape corresponding to the lens 30 (see FIG. 23) in a plan view. The second main body portion 14A may have, for example, a circular shape or an elliptical shape in a plan view. The second protruding portion 14B protrudes in the +X direction (direction away from the colored region 70) from a portion of the outer peripheral edge of the second main body portion 14A on the +X direction side. The second protruding portion 14B is formed at a position corresponding to a connecting portion (portion where the bridge part 22 or the temple part 23 is connected to the rim part 21).

The first auxiliary electrode 15 includes a first counter electrode portion 15A and a first lead-out portion 15B. The first counter electrode portion 15A extends along a part of an outer peripheral edge 70a of the colored region 70. Specifically, the first counter electrode portion 15A extends along a portion of the outer peripheral edge 70a of the colored region 70 on the -X direction side. The first counter electrode portion 15A is formed to be separated from the outer peripheral edge 70a of the colored region 70.

The first auxiliary electrode 15 is provided by being laminated on the first transparent electrode 13. The first auxiliary electrode 15 is electrically connected to the first transparent electrode 13. Therefore, the first auxiliary electrode 15 is electrically connected to the electrochromic element 60. The first auxiliary electrode 15 is electrically connected to the first conductive portion 17. The first auxiliary electrode 15 electrically connects the first transparent electrode 13 and the first conductive portion 17 (see FIG. 32).

An electrical resistance value of the first auxiliary electrode 15 is lower than an electrical resistance value of the first transparent electrode 13. That is, the first auxiliary electrode 15 has a lower electrical resistance than the first transparent electrode 13. Therefore, it is possible to impart high electrical conductivity to the laminate of the first transparent electrode 13 and the first auxiliary electrode 15. The laminate of the first transparent electrode 13 and the first auxiliary electrode 15 functions as a wiring line having low electrical resistance, which is electrically connected to the electrochromic element 60 (see FIG. 32).

As shown in FIG. 31, the first counter electrode portion 15A includes a first extending portion 1 and a second extending portion 2.

The first extending portion 1 is a linear portion which extends one side (clockwise direction in FIG. 31) along the outer peripheral edge 70a of the colored region 70 with an intermediate position (position where the first lead-out portion 15B is formed) of the first counter electrode portion 15A in a length direction as a starting point (first base). The first extending portion 1 approaches the second counter electrode portion 16A (specifically, a third extending portion 3) while moving in the +Y direction (upward in FIG. 31). The first extending portion 1 is curved such that an inclination angle (inclination angle with respect to the X direction) is gradually decreased toward the distal end.

A length of the first extending portion 1 can be, for example, 5 mm or more and 20 mm or less. In a case where the length of the first extending portion 1 is in this range, a voltage can be applied to a wide range of the colored region 70 without bias.

As shown in FIG. 35, in a plan view, a width W1 of a portion 1A (distal end portion 1A) including at least a distal end 1a (one end) of the first extending portion 1 may be, for example, 0.1 mm or more and 1.0 mm or less. Since the width W1 of the distal end portion 1A is 0.1 mm or more, the electrical resistance can be reduced. Therefore, the color development and decolorization in the colored region 70 can be performed without delay. The width W1 of the distal end portion 1A is 1.0 mm or less and thereby being difficult to be visually recognized from the outside. Therefore, the first extending portion 1 is not noticeable. Accordingly, aesthetic appearance of the sunglasses 100 can be enhanced. The width W1 may be 0.3 mm or more and 1.0 mm or less. The width W1 is preferably 0.3 mm or more and 0.7 mm or less.

In the present embodiment, the distal end portion 1A of the first extending portion 1 is a length portion having a certain width (the width W1).

The distal end portion of the first extending portion 1 is not limited to a shape having a constant width, and may have a shape in which the width gradually decreases toward the distal end. In this case, the width of the distal end portion may be an average width in a predetermined length range (for example, a length range of 5 mm from the distal end). The width of the distal end portion may be a width at the distal end.

In a plan view, a distance W2 between the first counter electrode portion 15A (for example, the first extending portion 1 and the second extending portion 2) and the outer peripheral edge 70a of the colored region 70 is preferably 0.25 mm or more. In a case where the distance W2 is 0.25 mm or more, the first counter electrode portion 15A is positioned sufficiently away from the colored region 70. Therefore, the influence from the colored region 70 can be suppressed, and the deterioration of the first counter electrode portion 15A can be suppressed. In a case where the distance W2 is 0.25 mm or more, the influence from the outside on the colored region 70 can be reduced. Therefore, the characteristics of the colored region 70 can be enhanced. The distance W2 is preferably 0.5 mm or more. The distance W2 may be, for example, 2 mm or less.

As shown in FIG. 31, the second extending portion 2 is a linear portion which extends the other side (counterclockwise direction in FIG. 31) along the outer peripheral edge 70a of the colored region 70 with an intermediate position (position where the first lead-out portion 15B is formed) of the first counter electrode portion 15A in a length direction as a starting point (first base). The second extending portion 2 extends in the - Y direction (downward in FIG. 31) while approaching the second counter electrode portion 16A (specifically, a fourth extending portion 4). The second extending portion 2 is curved such that an inclination angle (inclination angle with respect to the X direction) is gradually decreased toward the distal end.

In a plan view, a width of a portion (distal end portion) including at least a distal end (one end) of the second extending portion 2 may be, for example, 0.1 mm or more and 1.0 mm or less. In a case where the width of the distal end portion is 0.1 mm or more, the electrical resistance can be reduced. Therefore, the color development and decolorization in the colored region 70 can be performed without delay. In a case where the width of the distal end portion is 1.0 mm or less, it is difficult to visually recognize the distal end portion from the outside. Therefore, the second extending portion 2 is not noticeable. Accordingly, aesthetic appearance of the sunglasses 100 can be enhanced. The width of the distal end portion may be 0.3 mm or more and 1.0 mm or less.

In the present embodiment, a distal end portion of the second extending portion 2 is a length portion having a certain width.

The distal end portion of the second extending portion 2 is not limited to a shape having a constant width, and may have a shape in which the width gradually decreases toward the distal end. In this case, the width of the distal end portion may be an average width in a predetermined length range (for example, a length range of 5 mm from the distal end). The width of the distal end portion may be a width at the distal end.

The second extending portion 2 may be longer than the first extending portion 1, or may have the same length as the first extending portion 1. A dimension of the second extending portion 2 in the Y direction may be larger than a dimension of the first extending portion 1 in the Y direction.

Since the first counter electrode portion 15A includes the first extending portion 1 and the second extending portion 2, a voltage can be applied to a wide range of the colored region 70 without bias. Therefore, it is possible to achieve sufficient color development (coloration) and decolorization in a wide range of the colored region 70.

As shown in FIG. 34, the first lead-out portion 15B protrudes from a part of the outer peripheral edge of the first counter electrode portion 15A in the -X direction (direction away from the colored region 70). The first lead-out portion 15B is formed, for example, at a position overlapping the first protruding portion 13B of the first transparent electrode 13. The first lead-out portion 15B is formed at a position corresponding to a connecting portion (portion where the bridge part 22 or the temple part 23 is connected to the rim part 21).

The second auxiliary electrode 16 includes a second counter electrode portion 16A and a second lead-out portion 16B. The second counter electrode portion 16A extends along another part of the outer peripheral edge 70a of the colored region 70 (part of the outer peripheral edge 70a of the colored region 70, which is different from a part where the first counter electrode portion 15A is formed). Specifically, the second counter electrode portion 16A extends along a portion of the outer peripheral edge 70a of the colored region 70 on the +X direction side. The second counter electrode portion 16A is formed to be separated from the outer peripheral edge 70a of the colored region 70.

The second counter electrode portion 16A is present on a side of the colored region 70 opposite to the first counter electrode portion 15A. The second counter electrode portion 16A is located at a position facing the first counter electrode portion 15A in the X direction.

The second auxiliary electrode 16 is provided by being laminated on the second transparent electrode 14. The second auxiliary electrode 16 is electrically connected to the second transparent electrode 14. Therefore, the second auxiliary electrode 16 is electrically connected to the electrochromic element 60. The second auxiliary electrode 16 is electrically connected to the second conductive portion 18. The second auxiliary electrode 16 electrically connects the second transparent electrode 14 and the second conductive portion 18 (see FIG. 32).

An electrical resistance value of the second auxiliary electrode 16 is lower than an electrical resistance value of the second transparent electrode 14. That is, the second auxiliary electrode 16 has a lower electrical resistance than the second transparent electrode 14. Therefore, it is possible to impart high electrical conductivity to the laminate of the second transparent electrode 14 and the second auxiliary electrode 16. The laminate of the second transparent electrode 14 and the second auxiliary electrode 16 functions as a wiring line having low electrical resistance, which is electrically connected to the electrochromic element 60 (see FIG. 32).

As shown in FIG. 31, the second counter electrode portion 16A includes a third extending portion 3 and a fourth extending portion 4.

The third extending portion 3 is a linear portion which extends one side (counterclockwise direction in FIG. 31) along the outer peripheral edge 70a of the colored region 70 with an intermediate position (position where the second lead-out portion 16B is formed) of the second counter electrode portion 16A in a length direction as a starting point (second base). The third extending portion 3 approaches the first counter electrode portion 15A (specifically, the first extending portion 1) while moving in the +Y direction (upward in FIG. 31). The third extending portion 3 is curved such that an inclination angle (inclination angle with respect to the X direction) is gradually decreased toward the distal end.

A length of the third extending portion 3 can be, for example, 5 mm or more and 20 mm or less. **In** a case where the length of the third extending portion 3 is in this range, a voltage can be applied to a wide range of the colored region 70 without bias.

As shown in FIG. 36, in a plan view, a width W3 of a portion 3A (distal end portion 3A) including at least a distal end 3a (one end) of the third extending portion 3 may be, for example, 0.1 mm or more and 1.0 mm or less. Since the width W3 of the distal end portion 3A is 0.1 mm or more, the electrical resistance can be reduced. Therefore, the color development and decolorization in the colored region 70 can be performed without delay. The width W3 of the distal end portion 3A is 1.0 mm or less and thereby being difficult to be visually recognized from the outside. Therefore, the third extending portion 3 is not noticeable. Accordingly, aesthetic appearance of the sunglasses 100 can be enhanced. The width W3 may be 0.3 mm or more and 1.0 mm or less. The width W3 is preferably 0.3 mm or more and 0.7 mm or less.

In the present embodiment, the distal end portion 3A of the third extending portion 3 is a length portion having a certain width (the width W3).

The distal end portion of the third extending portion 3 is not limited to a shape having a constant width, and may have a shape in which the width gradually decreases toward the distal end. In this case, the width of the distal end portion may be an average width in a predetermined length range (for example, a length range of 5 mm from the distal end). The width of the distal end portion may be a width at the distal end.

In a plan view, a distance W4 between the second counter electrode portion 16A (for example, the third extending portion 3 and the fourth extending portion 4) and the outer peripheral edge 70a of the colored region 70 is preferably 0.25 mm or more. In a case where the distance W4 is 0.25 mm or more, the second counter electrode portion 16A is positioned sufficiently away from the colored region 70. Therefore, the influence from the colored region 70 can be suppressed, and the deterioration of the second counter electrode portion 16A can be suppressed. In a case where the distance W4 is 0.25 mm or more, the influence from the outside on the colored region 70 can be reduced. Therefore, the characteristics of the colored region 70 can be enhanced. The distance W4 is preferably 0.5 mm or more. The distance W4 may be, for example, 2 mm or less.

As shown in FIG. 31, the fourth extending portion 4 is a linear portion which extends the other side (clockwise direction in FIG. 31) along the outer peripheral edge 70a of the colored region 70 with an intermediate position (position where the second lead-out portion 16B is formed) of the second counter electrode portion 16A in a length direction as a starting point (second base). The fourth extending portion 4 extends in the -Y direction (downward in FIG. 31) while approaching the first counter electrode portion 15A (specifically, the second extending portion 2). The fourth extending portion 4 is curved such that an inclination angle (inclination angle with respect to the X direction) is gradually decreased toward the distal end.

In a plan view, a width of a portion (distal end portion) including at least a distal end (one end) of the fourth extending portion 4 may be, for example, 0.1 mm or more and 1.0 mm or less. In a case where the width of the distal end portion is 0.1 mm or more, the electrical resistance can be reduced. Therefore, the color development and decolorization in the colored region 70 can be performed without delay. In a case where the width of the distal end portion is 1.0 mm or less, it is difficult to visually recognize the distal end portion from the outside. Therefore, the fourth extending portion 4 is not noticeable. Accordingly, aesthetic appearance of the sunglasses 100 can be enhanced. The width of the distal end portion may be 0.3 mm or more and 1.0 mm or less.

In the present embodiment, a distal end portion of the fourth extending portion 4 is a length portion having a certain width.

The distal end portion of the fourth extending portion 4 is not limited to a shape having a constant width, and may have a shape in which the width gradually decreases toward the distal end. In this case, the width of the distal end portion may be an average width in a predetermined length range (for example, a length range of 5 mm from the distal end). The width of the distal end portion may be a width at the distal end.

The fourth extending portion 4 may be longer than the third extending portion 3, or may have the same length as the third extending portion 3. A dimension of the fourth extending portion 4 in the Y direction may be larger than a dimension of the third extending portion 3 in the Y direction.

Since the second counter electrode portion 16A includes the third extending portion 3 and the fourth extending portion 4, a voltage can be applied to a wide range of the colored region 70 without bias. Therefore, it is possible to achieve sufficient color development (coloration) and decolorization in a wide range of the colored region 70.

The first extending portion 1 and the third extending portion 3 are disposed to face each other in the X direction. The first extending portion 1 and the third extending portion 3 extend in a direction in which they approach each other. The first extending portion 1 and the third extending portion 3 have distal ends facing each other. The second extending portion 2 and the fourth extending portion 4 are disposed to face each other in the X direction. The second extending portion 2 and the fourth extending portion 4 extend in a direction in which they approach each other. The second extending portion 2 and the fourth extending portion 4 have distal ends facing each other.

As shown in FIG. 34, the second lead-out portion 16B protrudes from a part of the outer peripheral edge of the second counter electrode portion 16A in the +X direction (direction away from the colored region 70). The second lead-out portion 16B is formed, for example, at a position overlapping the second protruding portion 14B of the second transparent electrode 14. The second lead-out portion 16B is formed at a position corresponding to a connecting portion (portion where the bridge part 22 or the temple part 23 is connected to the rim part 21).

Examples of a constituent material of the first auxiliary electrode 15 and the second auxiliary electrode 16 include metals such as silver, aluminum, copper, chromium, and molybdenum. As the constituent material of the first auxiliary electrode 15 and the second auxiliary electrode 16, a conductive ink can also be used. As the constituent material of the first auxiliary electrode 15 and the second auxiliary electrode 16, one of these materials may be used, or two or more thereof may be used in combination. The first auxiliary electrode 15 and the second auxiliary electrode 16 can be formed, for example, by sputtering, vapor deposition, or the like. The first auxiliary electrode 15 and the second auxiliary electrode 16 can also be formed by printing using a conductive ink.

An average thickness of the first auxiliary electrode 15 and the second auxiliary electrode 16 is preferably 1 nm or more and 100 nm or less, and more preferably 5 nm or more and 50 nm or less.

The total thickness of the electrochromic sheet 150 is preferably 0.3 mm or more and 10.0 mm or less, and more preferably 0.5 mm or more and 5.0 mm or less. By setting the total thickness of the electrochromic sheet 150 to be within the above-described range, excellent strength can be imparted to the electrochromic sheet 150, and thermoplasticity in a case of molding the electrochromic sheet 150 into the curved sheet 120 can be improved.

As described above, the electrochromic sheet 150 is laminated with the resin layer 35 (see FIG. 24(D)), and then cut out as the lens 30 corresponding to the rim part 21 (see FIG. 23) by trimming, cutting, or the like. Virtual lines shown in FIGS. 31, 35, and 36 indicate an outer peripheral edge 30a of the lens 30.

As shown in FIGS. 35 and 36, in the sealing portion 55 which partitions the colored region 70, a region from the outer peripheral edge 70a of the colored region 70 to the outer peripheral edge 30a of the lens 30 is referred to as a sealing region 56. The sealing region 56 is an annular region surrounding the colored region 70 (see FIG. 31). The sealing region 56 has a function of protecting the colored region 70. The sealing region 56 also has a function as an adhesive layer which adheres a plurality of layers constituting the electrochromic sheet 150 and maintains a laminated state thereof. The outer peripheral edge 30a is an outer peripheral edge of the sealing region 56.

As shown in FIGS. 35 and 36, a width W5 of the sealing region 56 is 1 mm or more and 3 mm or less. It is desirable that the sealing region 56 is within the range over the entire circumference. The width W5 of the sealing region 56 is preferably 1.5 mm or more and 2.5 mm or less.

Since the sealing region 56 has the width W5 of 1 mm or more, it is possible to restrict infiltration of moisture or the like from the outside, and protect the first counter electrode portion 15A and the second counter electrode portion 16A. That is, the deterioration of the first counter electrode portion 15A and the second counter electrode portion 16A due to oxidation or the like can be suppressed. Since the sealing region 56 has a width W5 of 1 mm or more, it is possible to restrict infiltration of moisture or the like from the outside and protect the colored region 70. Since the sealing region 56 has a width W5 of 1 mm or more, durability of the sealing region 56 in a case where the lens 30 is manufactured by cutting can be increased. Since the sealing region 56 has a width W5 of 1 mm or more, even in a case where the electrochromic sheet 150 is thermally molded to produce the curved sheet, sufficient adhesiveness to other layers can be secured.

Since the sealing region 56 has a width W5 of 3 mm or less, a non-colored region in the lens 30 can be narrowed. Therefore, the electrochromic sheet 150 is suitable from the viewpoint of aesthetic appearance. In the electrochromic sheet 150, the sealing region 56 which is a non-colored region is narrow, so that a degree of freedom in design is high, and it is suitable in terms of designability and the like.

As shown in FIG. 35, in a plan view, a distance W6 between the first counter electrode portion 15A and the outer peripheral edge 30a of the lens 30 is preferably 0.25 mm or more. In a case where the distance W6 is 0.25 mm or more, infiltration of moisture or the like from the outside is restricted, and the deterioration of the first auxiliary electrode 15 due to oxidation or the like can be suppressed. The distance W6 may be, for example, 1 mm or less.

As shown in FIG. 36, in a plan view, a distance W7 between the second counter electrode portion 16A and the outer peripheral edge 30a of the lens 30 is preferably 0.25 mm or more. In a case where the distance W7 is 0.25 mm or more, infiltration of moisture or the like from the outside is restricted, and the deterioration of the second auxiliary electrode 16 due to oxidation or the like can be suppressed. The distance W7 may be, for example, 1 mm or less.

In the electrochromic sheet 150 according to the present embodiment, since the width W5 of the sealing region 56 is 1 mm or more and 3 mm or less, the deterioration of the first auxiliary electrode 15 and the second auxiliary electrode 16 due to oxidation or the like can be suppressed, and moreover, the aesthetic appearance is excellent. Therefore, it is possible to achieve the electrochromic sheet 150 having favorable electrochromic characteristics and excellent aesthetic appearance.

The electrochromic sheet 150 includes the first electrochromic layer 63 in which color changes by an oxidation reaction, the second electrochromic layer 64 in which color changes by a reduction reaction, and the electrolyte layer 65. Since the electrochromic sheet 150 includes two electrochromic layers, a driving voltage of the electrochromic element 60 can be suppressed. Therefore, the repetitive durability of the electrochromic element 60 can be improved.

In a case where the distances W2 and W4 between the first counter electrode portion 15A and the second counter electrode portion 16A and the outer peripheral edge 70a of the colored region 70 are 0.25 mm or more, the first counter electrode portion 15A and the second counter electrode portion 16A are positioned sufficiently away from the colored region 70. Therefore, the influence from the colored region 70 can be suppressed, and the deterioration of the first counter electrode portion 15A and the second counter electrode portion 16A can be suppressed.

In a case where the distances W6 and W7 between the first counter electrode portion 15A and the second counter electrode portion 16A and the outer peripheral edge 30a of the lens 30 are 0.25 mm or more, the infiltration of moisture or the like from the outside can be restricted, and the deterioration of the first auxiliary electrode 15 and the second counter electrode portion 16A can be suppressed.

The lens 30 and the sunglasses 100 have the same effect as the electrochromic sheet 150.

The electrochromic sheet, the lens for spectacles, and the spectacles of the embodiment have been described, but the present invention is not limited thereto.

For example, the electrochromic sheet 150 shown in FIG. 33 includes two electrochromic layers 63 and 64, but the number of electrochromic layers is not limited to two. The number of electrochromic layers may be one or may be plural (any number of 2 or more).

The color of the electrochromic layer may change by at least one of an oxidation reaction or a reduction reaction. For example, the electrochromic layer may use only the change in color due to the oxidation reaction, or may use only the change in color due to the reduction reaction. The electrochromic layer may be configured to change color by both the oxidation reaction and the reduction reaction. The electrochromic sheet may include an electrochromic layer in which color changes by at least one of an oxidation reaction or a reduction reaction.

The width W5 of the sealing region 56 shown in FIGS. 35 and 36 indicates the width of the sealing region 56 in a length range of the first extending portion 1 and the third extending portion 3, but the width W5 of the sealing region 56 may be 1 mm or more and 3 mm or less in a range in which at least the first counter electrode portion 15A and the second counter electrode portion 16A are present.

Each layer constituting the electrochromic element 60 of the electrochromic sheet 150 shown in FIG. 33 may be replaced with another configuration exhibiting the same function. The electrochromic sheet 150 may further include another layer (interlayer) between the substrates 11 and 12 and the electrochromic element 60.

### (Seventh embodiment)

The auxiliary electrode is necessary for the electrochromic element to perform color development and decolorization without delay.

In the electrochromic sheet, there may be a bias (non-uniformity) in color development and decolorization of the electrochromic element.

An object of one aspect of the present invention is to provide an electrochromic sheet in which color development and decolorization can be performed without delay and a bias in color development and decolorization can be suppressed, a lens for spectacles, and spectacles.

### (Aspect 1)

An electrochromic sheet including: a first substrate; a second substrate which is disposed to face the first substrate; an electrochromic element which is provided between the first substrate and the second substrate and forms a colored region where color changes by application of a voltage; an insulating sealing portion which partitions the colored region; a first auxiliary electrode which is electrically connected to the electrochromic element; and a second auxiliary electrode which is electrically connected to the electrochromic element, in which the electrochromic element includes a first transparent electrode which is electrically connected to the first auxiliary electrode, a second transparent electrode which is electrically connected to the second auxiliary electrode, and one or a plurality of electrochromic layers where color changes by at least one of an oxidation reaction or a reduction reaction, the first auxiliary electrode has a first counter electrode portion which has lower electrical resistance than the first transparent electrode and extends along a part of an outer peripheral edge of the colored region, the second auxiliary electrode has a second counter electrode portion which has lower electrical resistance than the second transparent electrode and extends along another part of the outer peripheral edge of the colored region, the second counter electrode portion is on a side opposite to the first counter electrode portion with respect to the colored region and faces the first counter electrode portion, the first counter electrode portion has a first extending portion which extends to one side along the outer peripheral edge of the colored region and a second extending portion which extends to the other side along the outer peripheral edge of the colored region, the second counter electrode portion has a third extending portion which extends to one side along the outer peripheral edge of the colored region and a fourth extending portion which extends to the other side along the outer peripheral edge of the colored region, the first extending portion and the third extending portion extend in a direction approaching each other, an interval between distal ends of the extending portions in a plan view is more than 0 mm and 20 mm or less, the second extending portion and the fourth extending portion extend in a direction approaching each other, and an interval between distal ends of the extending portions in a plan view is more than 0 mm and 20 mm or less.

### (Aspect 2)

The electrochromic sheet according to the aspect 1, in which the plurality of electrolyte layers include a first electrochromic layer electrically connected to the first transparent electrode and a second electrochromic layer electrically connected to the second transparent electrode, the electrochromic element further includes an electrolyte layer filling a space between the first electrochromic layer and the second electrochromic layer, the first electrochromic layer contains a material in which color changes by an oxidation reaction, and the second electrochromic layer contains a material in which color changes by a reduction reaction.

### (Aspect 3)

The electrochromic sheet according to the aspect 1, in which, in a plan view, a distance from the first counter electrode portion and the second counter electrode portion to the outer peripheral edge of the colored region is 0.25 mm or more.

### (Aspect 4)

A lens for spectacles, including the electrochromic sheet according to any one of the aspects 1 to 3.

### (Aspect 5)

Spectacles including the lens for spectacles according to the aspect 4.

According to one aspect of the present invention, it is possible to provide an electrochromic sheet in which color development and decolorization can be performed without delay and a bias in color development and decolorization can be suppressed, a lens for spectacles, and spectacles.

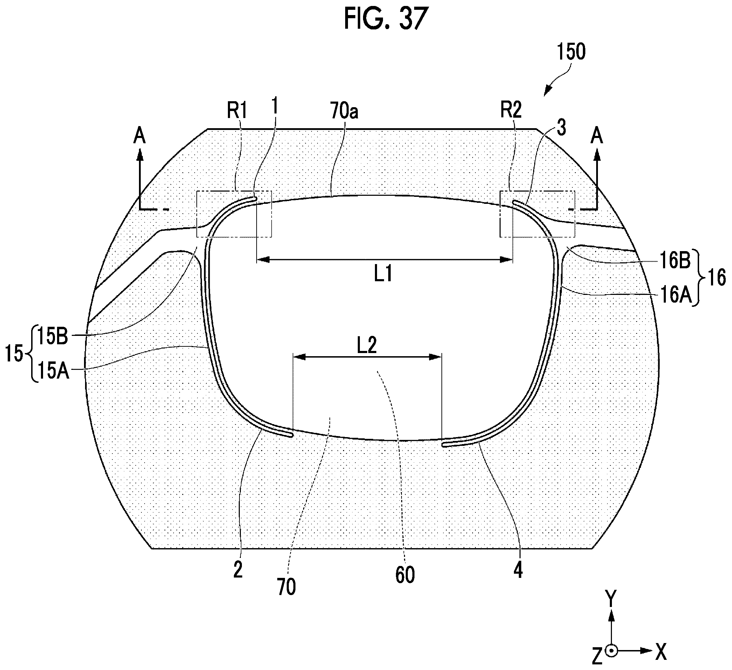

As shown in FIG. 37, the fourth extending portion 4 is a linear portion which extends the other side (clockwise direction in FIG. 37) along the outer peripheral edge 70a of the colored region 70 with an intermediate position (position where the second lead-out portion 16B is formed) of the second counter electrode portion 16A in a length direction as a starting point (second base). The fourth extending portion 4 extends in the -Y direction (downward in FIG. 37) while approaching the first counter electrode portion 15A (specifically, the second extending portion 2). The fourth extending portion 4 is curved such that an inclination angle (inclination angle with respect to the X direction) is gradually decreased toward the distal end.

In a plan view, a width of a portion (distal end portion) including at least a distal end (one end) of the fourth extending portion 4 may be, for example, 0.1 mm or more and 1.0 mm or less. In a case where the width of the distal end portion is 0.1 mm or more, the electrical resistance can be reduced. Therefore, the color development and decolorization in the colored region 70 can be performed without delay. In a case where the width of the distal end portion is 1.0 mm or less, it is difficult to visually recognize the distal end portion from the outside. Therefore, the fourth extending portion 4 is not noticeable. Accordingly, aesthetic appearance of the sunglasses 100 can be enhanced. The width of the distal end portion may be 0.3 mm or more and 1.0 mm or less.

In the present embodiment, a distal end portion of the fourth extending portion 4 is a length portion having a certain width.

The distal end portion of the fourth extending portion 4 is not limited to a shape having a constant width, and may have a shape in which the width gradually decreases toward the distal end. In this case, the width of the distal end portion may be an average width in a predetermined length range (for example, a length range of 5 mm from the distal end). The width of the distal end portion may be a width at the distal end.

The fourth extending portion 4 may be longer than the third extending portion 3, or may have the same length as the third extending portion 3. A dimension of the fourth extending portion 4 in the Y direction may be larger than a dimension of the third extending portion 3 in the Y direction.

Since the second counter electrode portion 16A includes the third extending portion 3 and the fourth extending portion 4, a voltage can be applied to a wide range of the colored region 70 without bias. Therefore, it is possible to achieve sufficient color development (coloration) and decolorization in a wide range of the colored region 70.

The first extending portion 1 and the third extending portion 3 are disposed to face each other in the X direction. The first extending portion 1 and the third extending portion 3 extend in a direction in which they approach each other. The first extending portion 1 and the third extending portion 3 have distal ends facing each other. L1 is an interval between a distal end 1a (see FIG. 35) of the first extending portion 1 and a distal end 3a (see FIG. 36) of the third extending portion 3 in a plan view. That is, the interval L1 is an interval between the distal ends of the first extending portion 1 and the third extending portion 3 in a plan view.

The interval L1 is more than 0 mm and 20 mm or less. Since the interval L1 is more than 0 mm, the first extending portion 1 and the third extending portion 3 are at positions separated from each other. In a case where the auxiliary electrodes are too close to each other, there is a possibility that the current is biased; however, since the first extending portion 1 and the third extending portion 3 are separated from each other, it is possible to suppress the bias (non-uniformity) of the current between the first extending portion 1 and the third extending portion 3. Therefore, it is possible to achieve sufficient color development (coloration) and decolorization in a wide range of the colored region 70.

Since the interval L1 is 20 mm or less, the separated distance between the first extending portion 1 and the third extending portion 3 is appropriate. In a case where the auxiliary electrodes are too far apart from each other, the current is insufficient, and thus the color development and the decolorization are likely to be delayed. The uneven color development and the disappearance and residual of the color are likely to occur. In the electrochromic sheet 150, since the separated distance between the first extending portion 1 and the third extending portion 3 is appropriate, the color development (coloration) and the decolorization in the colored region 70 can be performed without delay.

The interval L1 is preferably 5 mm or more and 20 mm or less. The interval L1 is still more preferably 10 mm or more and 20 mm or less.

The second extending portion 2 and the fourth extending portion 4 are disposed to face each other in the X direction. The second extending portion 2 and the fourth extending portion 4 extend in a direction in which they approach each other. The second extending portion 2 and the fourth extending portion 4 have distal ends facing each other. L2 is an interval between the distal end of the second extending portion 2 and the distal end of the fourth extending portion 4 in a plan view. That is, the interval L2 is an interval between the distal ends of the second extending portion 2 and the fourth extending portion 4 in a plan view.

The interval L2 is more than 0 mm and 20 mm or less. Since the interval L2 is more than 0 mm, the second extending portion 2 and the fourth extending portion 4 are at positions separated from each other. In a case where the auxiliary electrodes are too close to each other, there is a possibility that the current is biased; however, since the second extending portion 2 and the fourth extending portion 4 are separated from each other, it is possible to suppress the bias (non-uniformity) of the current therebetween. Therefore, it is possible to achieve sufficient color development (coloration) and decolorization in a wide range of the colored region 70.

Since the interval L2 is 20 mm or less, the separated distance between the second extending portion 2 and the fourth extending portion 4 is appropriate. In a case where the auxiliary electrodes are too far apart from each other, the current is insufficient, and thus the color development and the decolorization are likely to be delayed; however, since the separated distance between the second extending portion 2 and the fourth extending portion 4 is appropriate, the color development (coloration) and the decolorization in the colored region 70 can be performed without delay.

The interval L2 is preferably 5 mm or more and 20 mm or less. The interval L2 is still more preferably 10 mm or more and 20 mm or less.

A relationship between the interval L1 and the interval L2 is not particularly limited. The interval L2 may be smaller than the interval L1. The interval L2 may be larger than the interval L1. The interval L2 may be the same as the interval L1.

In a case where the second extending portion 2 is longer than the first extending portion 1, the distal end of the second extending portion 2 is positioned away from the first lead-out portion 15B as compared with the distal end of the first extending portion 1. In a case where the fourth extending portion 4 is longer than the third extending portion 3, the distal end of the fourth extending portion 4 is positioned away from the second lead-out portion 16B as compared with the distal end of the third extending portion 3. In this case, the current between the second extending portion 2 and the fourth extending portion 4 is likely to be smaller than the current between the first extending portion 1 and the third extending portion 3; however, in a case where the interval L2 is smaller than the interval L1, a sufficient current can flow between the second extending portion 2 and the fourth extending portion 4. Therefore, the bias of the current between the first counter electrode portion 15A and the second counter electrode portion 16A can be reduced.

### REFERENCE SIGNS LIST

11 First substrate
12 Second substrate
30 Electrochromic element (EC element)
31 First transparent electrode
32 Second transparent electrode
33 First auxiliary electrode
34 Second auxiliary electrode
35 Electrochromic layer (EC layer)
40 Sealing portion
110 Lens
111 Electrochromic part (EC part)
115 Lens main body
119 Lens material
120 Frame
122 Bridge part
123 Temple part
150 Electrochromic sheet (EC sheet)
160 Laminate
331 First frame body
332 First lead-out portion
341 Second frame body
342 Second lead-out portion
351 First electrochromic layer (first EC layer)
352 Second electrochromic layer (second EC layer)
353 Electrolyte layer
AR Colored region

## Claims

1. An electrochromic sheet comprising:
a first substrate;
a second substrate;
an electrochromic element sandwiched between the first substrate and the second substrate; and
a sealing portion sandwiched between the first substrate and the second substrate, partitioning a colored region set between the first substrate and the second substrate,
wherein the electrochromic element includes
a first transparent electrode provided on a side of the first substrate,
a first auxiliary electrode disposed around the colored region and electrically connected to the first transparent electrode,
a second transparent electrode provided on a side of the second substrate,
a second auxiliary electrode disposed around the colored region and electrically connected to the second transparent electrode, and
an electrochromic layer sandwiched between the first transparent electrode and the second transparent electrode, disposed in the colored region, and developing color by application of a voltage,
the first auxiliary electrode has a first lead-out portion protruding outward of the colored region,
the second auxiliary electrode has a second lead-out portion protruding outward of the colored region,
in a plan view, the first lead-out portion does not overlap the second transparent electrode and the second lead-out portion does not overlap the first transparent electrode, and
in a cross section connecting the first lead-out portion and the colored region, a distance from an edge of the second transparent electrode on a side of the first lead-out portion to the colored region is 0.01 mm or more and 1.0 mm or less.

2. The electrochromic sheet according to Claim 1, wherein
in a cross section connecting the second lead-out portion and the colored region, a distance from an edge of the first transparent electrode on a side of the second lead-out portion to the colored region is 0.01 mm or more and 1.0 mm or less.

3. The electrochromic sheet according to Claim 1 or 2, wherein
the electrochromic layer includes
a first electrochromic layer laminated on the first transparent electrode,
a second electrochromic layer laminated on the second transparent electrode, and
an electrolyte layer filling a space between the first electrochromic layer and the second electrochromic layer,
the first electrochromic layer contains a material exhibiting coloration by an oxidation reaction, and
the second electrochromic layer contains a material exhibiting coloration by a reduction reaction.

4. A laminate comprising:
the electrochromic sheet according to Claim 1; and
a lens material having the electrochromic sheet laminated thereon.

5. A lens for spectacles, comprising:
an electrochromic part obtained by cutting the electrochromic sheet according to Claim 1 along an outer periphery of the first auxiliary electrode and the second auxiliary electrode; and
a lens main body including the electrochromic part laminated thereon, wherein
the lens main body includes a protruding portion having the same shape in a plan view as the first lead-out portion and the second lead-out portion.

6. Spectacles comprising:
the lens for spectacles according to Claim 5; and
a frame holding the lens for spectacles, wherein
the first lead-out portion and the second lead-out portion are electrically connected to the frame.
